# EUROPEAN PATENT APPLICATION

(11) **EP 1 612 692 A1**
(43) Date of publication of application: **04.01.2006**
(21) Application number: 04726900.6
(22) Date of filing: 12.04.2004
(51) Int. Cl.: G06F 15/00, H04L 9/32

(54) **PASSWORD CHANGE SYSTEM**

(30) Priority: 10.04.2003 JP 2003106420
(71) Applicant: MATSUSHITA ELECTRIC INDUSTRIAL CO., LTD., Kadoma-shi, Osaka 571-8501 (JP)
(72) Inventor: SATOMURA, Takashi, Hyogo 657-0029 (JP); MITAMURA, Toshiro, Osaka 567-0034 (JP); AIZAWA, Rika, Kyoto 610-0117 (JP); ITAHARA, Misaki, Osaka 581-0871 (JP)
(74) Representative: Crawford, Andrew Birkby
(86) International application number: PCT/JP2004/005205
(87) International publication number: WO 2004/090738

(57) **Abstract**

The object of the present invention is to provide a management server device that instructs each of a plurality of application devices, which stores a same password, to update the password, each application device providing a service to a user who is authenticated using the password. If any of the application devices has failed to update the password, the management server device instructs the other application servers, which have successfully update the password, to restore the password.

## Description

### Technical Field

The present invention relates to a password changing system.

### Background Art

Conventionally, in a case where application programs provide a user with a plurality of services, it is common that the application programs use the same password to authenticate the user.

In such a case, the user is required to frequently change the password to ensure the security.

Patent Document 1 discloses a method for changing a password that is used by a plurality of services. According to this password changing method, a password managing device starts up application programs which provide the services one after another, and then instructs each application program to change the password. However, it is possible that some of the application programs fail to change the password.

This trouble can be caused by a hardware failure such as an external disk failure of the system, a power source failure such as a temporally blackout, a connection failure of the network, or the like.

If such a failure happens, with regard to the application program that has failed to change the password, the password managing device requests the user to change the password again when the user restarts the application program to use its service.

Accordingly, consistency of the password for the plurality of the services is maintainable when the application program is restarted.

However, according to the Patent Document 1, there is a problem that the password for the service that has failed to change the password is not the same as the password for the other services until the application is started up next time.

### Patent Document 1

### Japanese laid-open patent application publication NO.2002-169777

### Disclosure of the Invention

The present invention is made to solve the above-described problem. The object of the present invention is to provide a management server device, an application device, and a password changing system that are able to maintain the consistency of the password even if some of the application programs fail to change the password.

To achieve the above-described object, the present invention provides a management server device that instructs each of a plurality of application devices, which stores a same password therein, to update the password, each application device providing a service to a user who is authenticated using the password, the management server device comprising: a first unit operable to have all the application devices attempt to update the password; a second unit operable to judge whether each application device is capable of updating the pas sword based on a result of the attempt by the application device; and a third unit operable, if at least one of the application devices is not capable of updating the password, to have all the application devices keep the password non-updated.

With the stated structure, even if the second unit judges that the password is not updatable by any of the application server, the consistency of the password is maintainable by keeping the password which is not updated with regard to all the application devices.

The management server device may further comprise: a fourth unit operable to receive a password update request from a user device, wherein the first unit may have all the application devices attempt to update the password based on the password update request.

With the stated structure, the management server device can control all the application devices so as to update the password based on the will of the user.

The first unit may instruct all the application devices to update the password, the second unit may judge whether the password has been successfully updated by each application device, and the third unit may instruct, if any of the application devices has failed to update the password, the other application devices, which have successfully updated the password, to restore the password.

With the stated structure, the second unit judges whether any of the application devices has failed to update the password, and the third unit instructs, if any of the application devices has failed to update the password, the other application devices, which have succeeded to update the password, to restore the non-updated password. Therefore, if any of the application devices fails to update the password, the password can be immediately unified for all the application servers.

The fourth unit may receive the password update request that includes the password and a new password, and the first unit may generate a password update instruction that includes the password and the new password, and transmit the password update instruction to each application device.

With the stated structure, the fourth unit receives the password update request that includes the new password. Accordingly, the user can arbitrarily assign the new password by himself.

The second unit may include: a response receiving subunit operable to receive a response that indicates an update success or an update failure from each application device; and a determining subunit operable to determine, if the response indicates the update success, that the application device, from which the judging subunit receives the response, has successfully updated the password, and to determine, if the response indicates the update failure, that the application device has failed to update the password.

With the stated structure, the response receiving subunit receives the response from each application device, and if the response indicates the update failure, the determining subunit determines that the application device has failed to update the password. Accordingly, it becomes possible to properly detect the password change failure by each application device.

The second unit may include: a timer subunit operable to count elapsed time; an initializing subunit operable to reset the counted elapsed time to an initial value when the first unit transmits the password update instruction; a waiting subunit operable to wait for the response to be transmitted from each application device, and receive the response if the response is transmitted; a judging subunit operable to judge whether the counted elapsed time is more than a predetermined threshold value; and a determining subunit operable, in the case where the counted elapsed time is equal to or smaller than the threshold value and the waiting subunit has received the response that indicates the update success, to determine that the application device, from which the waiting subunit has received the response, has successfully updated the password, and operable, in the other cases, to determine that the application device has failed to update the password.

With the stated structure, the determining subunit determines that the application device has failed to update the password if the counted elapsed time is larger than the threshold value. Accordingly, waiting time can be reduced to be not more than the threshold value.

The first unit may instruct all the application devices to prepare to update the password, the second unit may judge whether each application device has already prepared to update the password, and the third unit may cancel, if at least one of the application devices has not prepared to update the password yet, the instruction to prepare to update the password for the other application devices which have already prepared to update the password.

With the stated structure, it becomes possible to cancel the instruction to prepare to update the password for the other application devices which have already prepared to update the password, if at least one of the application devices has not prepared to update the password yet. Accordingly, the password change for each application device is not performed unless all the application devices prepare to change the password. This reduces the number of writings onto the hard disk.

The fourth unit may receive the password update request that includes the password and a new password, and the first unit may generate a password update preparing instruction that includes the password and the new password, and transmits the password update preparing instruction to each application device.

With the stated structure, the fourth unit receives the password update request that includes the password and the new password. Accordingly, the user can arbitrarily assign the new password by himself.

The second unit may include: a response receiving subunit operable to receive a response that indicates an update preparation completion or an update preparation incompletion from each application device; and a determining subunit operable to determine, if the response indicates the update preparation completion, that the application device, from which the judging subunit receives the response, has already prepared to update the password, and to determine, if the response indicates the update preparation incompletion, that the application device has not prepared yet to update the password.

With the stated structure, the response receiving subunit receives the response from each application device, and if the response indicates the update preparation incompletion, the determining subunit determines that the application device has not prepared to update the password yet. Accordingly, it becomes possible to properly detect the update preparation incompletion by each application device.

The second unit may include: a timer subunit operable to count elapsed time; an initializing subunit operable to reset the counted elapsed time to an initial value when the first unit transmits the password update preparing instruction; a waiting subunit operable to wait for the response to be transmitted from each application device, and receive the response if the response is transmitted; a judging subunit operable to judge whether the counted elapsed time is more than a predetermined threshold value; and a determining subunit operable, in the case where the counted elapsed time is equal to or smaller than the threshold value and the waiting subunit has received the response that indicates the update preparation completion, to determine that the application device, from which the waiting subunit has received the response, has already prepared to updated the password, and operable, in the other cases, to determine that the application device has not prepared yet to update the password.

With the stated structure, the determining subunit determines that the application device has failed to update the password if the counted elapsed time is larger than the threshold value. Accordingly, waiting time can be reduced to be not more than the threshold value.

The management server device may further comprise a message transmitting unit operable to transmit a message, indicating that the password should be restored, to the user device, if the second unit judges in the negative concerning any of the application devices.

With the stated structure, the message transmitting unit transmits the message to the user device. Accordingly, the user can recognize that the password that should be use is the non-updated password.

The management server device may further comprise a management storing unit operable to store information as to whether each application device is currently being maintained, wherein the first unit may have all the application devices update the password if no application device is currently being maintained.

With the stated structure , the first unit has all the application devices update the password if no application device is currently being maintained. This prevents the password change for the application devices from being hampered by the password change for the application device that is being maintained.

The first unit may stop updating the password if any of the application devices is currently being maintained, and the management server device may further comprise a message transmitting unit operable to transmit a message, indicating that the update of the password should be stopped, to the user device.

With the stated structure, the message transmitting unit transmits the message to the user device. Accordingly, the user can surely recognize that the password is not updatable.

The application devices may be connected to the management server device via a first network, and the user device may be connected to the management server device via a second network that is not connected to the first network.

With the stated structure, each application device and the user device are connected to each other via the management server device. Accordingly, the management server device can monitor the communication between each application device and the user device.

The first network and the second network may constitute an intranet.

With the stated structure, each application server and the user terminal are connected to the management server device via different intranets respectively. Accordingly, they are easily structured using common Internet technologies.

The management server device may be connected to the application devices via dedicated lines respectively, the management server device may transmit and receive information, which is used for updating the password, to and from the application devices via the dedicated lines, and information used for providing the services may be received and transmitted via the first network and the second network.

With the stated structure, the management server device transmits and receives information, which is used for the password update, to and from each application device via the dedicated line. The communication using the dedicated line has a lowrisk of wiretapping. Accordingly, it becomes possible to omit the encrypting information, which is used for the password update, for the transmission.

Further, to provide services, the management server device relays the information relevant to the services between the user device and each application device via the first and second networks. Accordingly, the transmission of the information used for the password update and the transmission of the information relating to the services do not interfere with each other.

The application devices and the user device may be connected to the management server device via a network, and the management server device may further comprise: a storing unit operable to store an association table in which types of the applications and positions of the application devices on the network are associated to each other on a one-to-one basis; a receiving unit operable to receive type information indicating an application type and procedure information indicating details of a procedure; an obtaining unit operable, using the association table, to obtain a position of an application device corresponding to the received type information; and a transmitting unit operable to transmit the procedure information to the application device whose position is obtained by the obtaining unit.

With the stated structure, the obtaining unit obtains, using the association table, the position of the application device corresponding to the type information, and the transmitting unit transmits the procedure information, which is received from the user device, to the application device whose position is obtained by the obtaining unit. Accordingly, the management server device can properly transmit the procedure information received from the user device to the application devices.

The network may be the Internet.

With the stated structure, the management server device can transmit the procedure information between the user device at a remote site and each application server.

A new password updated from the password may be an initial password assigned to the user, the first unit may have all the application devices attempt to update the password to the initial password; the second unit judges whether each application device is capable of updating the password to the initial password; and if at least one of the application devices is not capable of updating the password to the initial password, the third unit may have all the application devices keep the password non-updated.

With the stated structure, the first unit controls all the application devices so as to update the password to the initial password. Accordingly, the password updated can be tried even if the user can not assign the new password.

To achieve the above-described object, the present invention provides an application device that provides a service to a user who is authenticated using a password, and updates the password based on an instruction from a management server device, the application device comprising: an old password storing unit operable to store the password that is not updated; an authentication password storing unit operable to store an authentication password used for authenticating the user; a receiving unit operable to receive a restoration instruction for restoring the password from the management server device; and a writing unit operable to read out the password from the old password storing unit, and overwrite the authentication password with the read-out password.

With the stated structure, upon receiving the restoration instruction from the management server device, the application device reads out the password from the old password storing unit, and overwrites the authentication password stored in the authentication password storing unit with the read-out password. Accordingly, the application device can quickly change the authentication password to the password in accordance with the instruction from the management server device.

The application device may receive and transmit information relating to the service from and to a user device via the management server device.

With the stated structure, the application device transmits and receives the information to and from the user device via the management server device. Accordingly, the application device can guard an access from unauthorized users by denying information transmitted from other than the management server device.

If currently being maintained, the application device may notify the management server device that the application device is currently being maintained.

With the stated structure, before the management server device performs the transmission of the information and the instruction to the application device, the application device has notified the management server device that the maintenance has been performed on the application device. Accordingly, the management server device can cancel or postpone the transmission to the application device.

The application device may be connected to the management server device via a first network, and the user device may be connected to the management server device via a second network that is not connected to the first network.

With the stated structure, the application device and the user device are connected to each other via the management server device. Accordingly, the management server device can monitor the communication between the application device and the user device.

The application device may be connected to the management server device via a dedicated line, the application device may transmit and receive information, which is used for updating the password, to and from the management server device via the dedicated line, and the application device may relay information used for providing the service between the user terminal and the management server device via the first network and the second network.

With the stated structure, the application device transmits and receives information, which is used for the password update, via the dedicated line. Accordingly, there is a low risk of wiretapping, and the structure makes it possible to perform the communication in safety.

Further, to provide services, the application device uses the first and second networks for transmitting and receiving the information relating to the services. Accordingly, the transmission of the information used for the password update and the transmission of the information relating to the services do not interfere with each other.

The application device and the user device may be connected to the management server device via the Internet.

With the stated structure, the application device and the user device are connected to the management server device via the Internet. Accordingly, the transmission and the reception of the information can be performed even if the application device, the user device and the management server device are at different remote sites.

To achieve the above-described object, the present invention provides a password changing system that includes a user device, a plurality of application devices each storing a password and providing a service to a user who is authenticated using the password, and a management server device instructing each of the application devices to update the password, wherein the management server device comprises: a first unit operable to have all the application devices attempt to update the password; a second unit operable to judge whether each application device is capable of updating the password based on a result of the attempt by the application device; and a third unit operable, if at least one of the application devices is not capable of updating the password, to have all the application devices to keep the password non-updated, and each application device comprises: an old password storing unit operable to store the password that is not updated; an authentication password storing unit operable to store an authentication password used for authenticating the user; a receiving unit operable to receive a restoration instruction for restoring the password, which is not updated, from the management server device; and a writing unit operable to read out the password, which is not updated, from the old password storing unit, and overwrite the authentication password with the read-out password.

With the stated structure, even if the password is not updatable for any of the application server, the consistency of the password is maintainable by keeping the non-updated password with regard to all the application devices.

Each application device may receive and transmit information relating to the service from and to the user device via the management server device.

With the stated structure, the application device transmits and receives the information to and from the user device via the management server device. Accordingly, the application device can guard an access from unauthorized users by denying information transmitted from other than the management server device.

The application device may be connected to the management server device via a first network, and the user device may be connected to the management server device via a second network that is not connected to the first network.

With the stated structure, the application device and the user device are connected to each other via the management server device. Accordingly, the management server device can monitor the communication between the application device and the user device.

The first network and the second network may constitute an intranet.

With the stated structure, each application server and the user terminal are respectively connected to the management server device via different intranets. Accordingly, they are easily structured using common Internet technologies.

The management server devicemay be connected to the application devices via dedicated lines respectively, the management server device may transmit and receive information, which is used for updating the password, to and from the application devices via the dedicated lines, and information used for providing the services may be received and transmitted via the first network and the second network

With the stated structure, the application device transmits and receives information, which is used for the password update, via the dedicated line. Accordingly, there is a low risk of wiretapping, and the structure makes it possible to perform the communication in safety.

Further, to provide services, the application device uses the first and second networks for transmitting and receiving the information relating to the services. Accordingly, the transmission of the information used for the password update and the transmission of the information relating to the services do not interfere with each other.

The application devices and the user device may be connected to the management server device via a network, and the management server device may further comprise: a storing unit operable to store an association table in which types of the applications and positions of the application devices on the network are associated to each other on a one-to-one basis; a receiving unit operable to receive type information indicating an application type and procedure information indicating details of a procedure; an obtaining unit operable, using the association table, to obtain a position of an application device corresponding to the received type information; and a transmitting unit operable to transmit the procedure information to the application device whose position is obtained by the obtaining unit.

With the stated structure, the obtaining unit obtains, using the association table, the position of the application device corresponding to the type information, and the transmitting unit transmits the procedure information, which is received from the user device, to the application device whose position is obtained by the obtaining unit. Accordingly, the management server device can properly transmit the procedure information received from the user device to the application devices.

The network may be the Internet.

With the stated structure, the application device and the user device are connected to the management server device via the Internet. Accordingly, the transmission and the reception of the information can be performed even if the application device, the user device and the management server device are at different remote sites.

### Brief Description of the Drawings

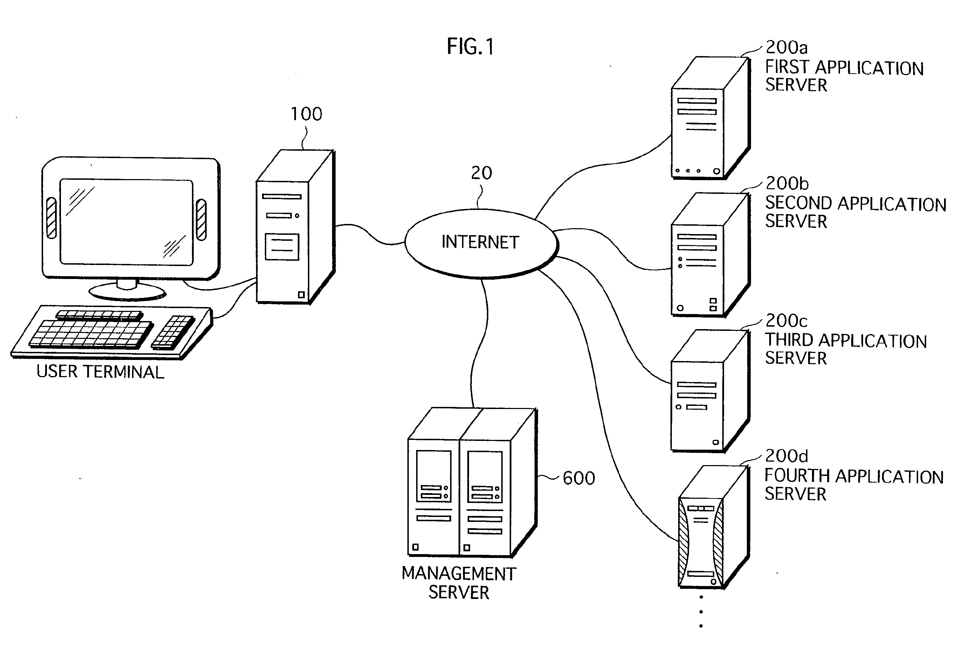

FIG.1 shows a structure of a password changing system;
FIG . 2 is a block diagram showing a structure of a user terminal 100;
FIG . 3 shows an example of information stored in a storing unit 110;
FIG . 4 shows an example of information transmitted and received between each device in the first embodiment;
FIG. 5 shows examples of a login screen and a menu screen displayed on a monitor connected to a user terminal 100;
FIG.6 shows examples of an expense settlement screen and an expense settlement end screen displayed on a monitor connected to a user terminal 100;
FIG. 7 shows examples of a password change screen and a change completion screen displayed on a monitor connected to a user terminal 100;
FIG. 8 shows examples of a change failure screen and a forcible termination screen displayed on a monitor connected to a user terminal 100;
FIG. 9 is a block diagram showing a structure of an application server 200;
FIG .10 shows an example of information stored in an information storing unit 210;
FIG.11 shows details of a password table 221;
FIG.12 shows details of an application login table 231;
FIG .13 is a block diagram showing a structure of a management server 600;
FIG .14 shows an example of information stored in information storing unit 610;
FIG.15 shows details of a login table 631;
FIG.16 shows details of a routing table 641;
FIG.17 shows details of password change table 651;
FIG .18 shows an example of an error screen displayed on a monitor unit 613 of a management server 600;
FIG.19 is a flowchart showing operations performed by a user terminal 100, a management server 600 and an application server 200;
FIG.20 is a flowchart showing operations performed by a user terminal 100, a management server 600 and an application server 200, continued from FIG.19;
FIG.21 is a flowchart showing operations performed by a user terminal 100, a management server 600 and an application server 200, continued from FIG.19;
FIG.22 is a flowchart showing operations performed by a user terminal 100, a management server 600 and an application server 200, continued from FIG.19;
FIG.23 is a flowchart showing operations performed by a user terminal 100, a management server 600 and an application server 200, continued from FIG.19;
FIG.24 is a flowchart showing operations performed by a user terminal 100, a management server 600 and an application server 200, continued from FIG.19;
FIG.25 is a flowchart showing operations performed by a user terminal 100, a management server 600 and an application server 200, continued from FIG.19;
FIG.26 is a flowchart showing operations performed by a user terminal 100, a management server 600 and an application server 200, continued from FIG.19;
FIG. 27 is a flowchart showing operations for a password change performed by a management server 600;
FIG. 28 is a flowchart showing operations for a password change performed by a management server 600, continued from FIG.27;
FIG. 29 is a flowchart showing operations for a password change performed by a management server 600, continued from FIG.27;
FIG. 30 is a flowchart showing operations for a password change performed by an application server 200;
FIG. 31 is a flowchart showing operations for a password change performed by an application server 200, continued from FIG.30;
FIG.32 is a flowchart showing operations for a password restoration performed by a management server 600;
FIG.33 is a flowchart showing operations for a password restoration performed by an application server 200;

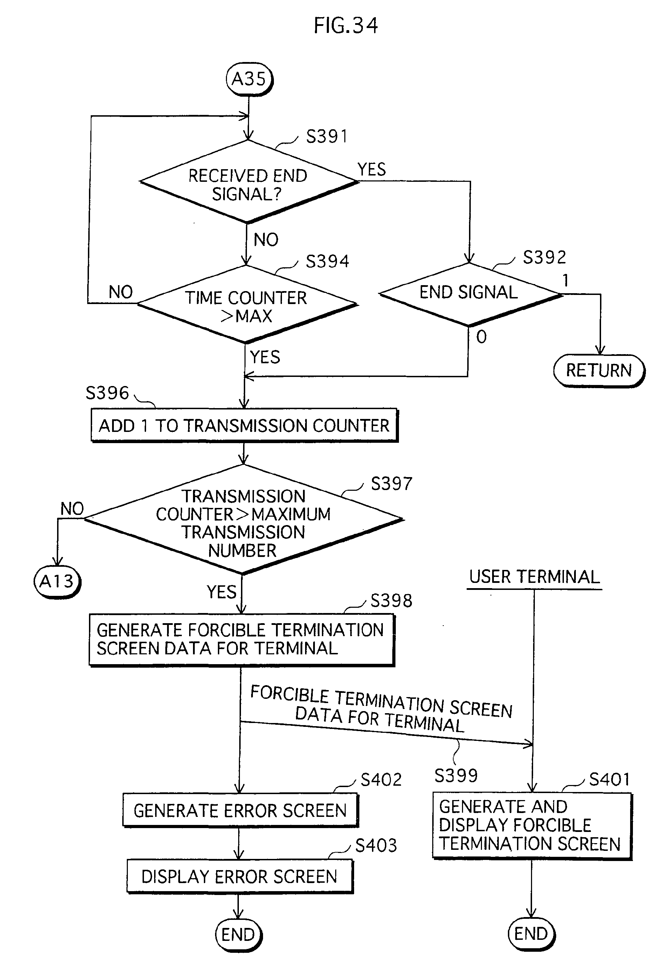

FIG.34 is a flowchart showing operations for a password restoration performed by an application server 200, continued from FIG.33;
FIG.35 is a flowchart showing operations for a two-way authentication performed between two devices;
FIG.36 is a flowchart showing operations for a two-way authentication performed between two devices, continued from FIG.35;
FIG.37 shows passwords respectively stored in application servers during a password change in the first embodiment;
FIG.38 shows a structure of the second embodiment;
FIG.39 is a block diagram showing a structure of a management server 600b in the second embodiment;
FIG.40 shows a structure of the third embodiment;
FIG.41 is a block diagram showing a structure of a management server 600c in the second embodiment;
FIG .42 shows details of a password table 621b in a modification (1); and
FIG.43 shows details of a routing table 641b in a modification (6).

### Best Mode for Carrying Out the Invention

### 1. The First Embodiment

The following describes the first embodiment of the present invention in detail with reference to the drawings.

### 1.1 Outline of Password Changing System

As FIG .1 shows, a password changing system according to the present invention includes a user terminal 100, a first application server 200a, a second application server 200b, a third application server 200c, a fourth application server 200d and a management server 600. Each device is connected to the Internet 20.

The first application server 200a to the fourth application server 200d provide a travel expenses settlement service, a vacation request service, a conference room reservation service, and an employee purchase service respectively.

Each of the management server 600 and the first application server 200a to the fourth application server 200d prestores a user ID of an authenticated user.

Using the user terminal 100 , the user uses the services provided by the first application server 200a to the fourth application server 200d via the Internet 20 and the management server 600.

For this purpose, the user terminal 100 transmits the user ID and the password of the user to the management server 600.

The management server 600 and the first application server 200a to the fourth application server 200d verify the user ID and the password, and authenticate the user of the user terminal 100. Then, each application server provides the user with the service thereof.

The management server 600 also receives a password change instruction from the user terminal 100, and receives a current password and a new password from the user terminal 100. The management server 600 successively transmits the received new password to the first application server 200a to the fourth application server 200d, and instructs the first application server 200a to the fourth application server 200d to change the password.

Here, if any of the first application server 200a to the fourth application server 200d fails to change the password, the management server 600 transmits the current password to the rest of the application servers that have succeeded in changing the password, and instructs those application servers to change the password back to the current password.

In the following description, in the case where the first application server 200a to the fourth application server 200d are not required to be differentiated from each other or in the case where a characteristic to be described is common among the first application server 200a to the fourth application server 200d, each of the application server may be collectively called "the application server 200".

### 1.2 User Terminal 100

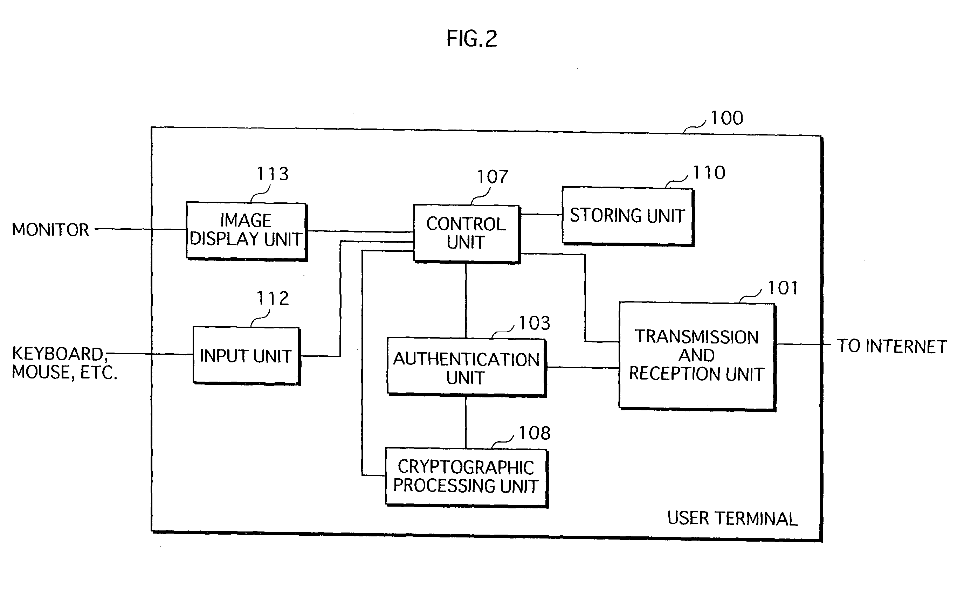

As FIG. 2 shows, the user terminal 100 includes a transmission and reception unit 101, an authentication unit 103, a control unit 107, a storing unit 110, an input unit 112 and an image display unit 113.

More specifically, the user terminal 100 includes a microprocessor, a RAM, a ROM and a hard disk, which are not illustrated. Each of the RAM, the ROM, and the hard disk stores a computer program. The microprocessor operates in accordance with the computer programs, and the user terminal 100 accordingly realizes the function thereof.

### (1) Storing Unit 110

The storing unit 110 includes a hard disk, a RAM and a ROM, and stores several kinds of information.

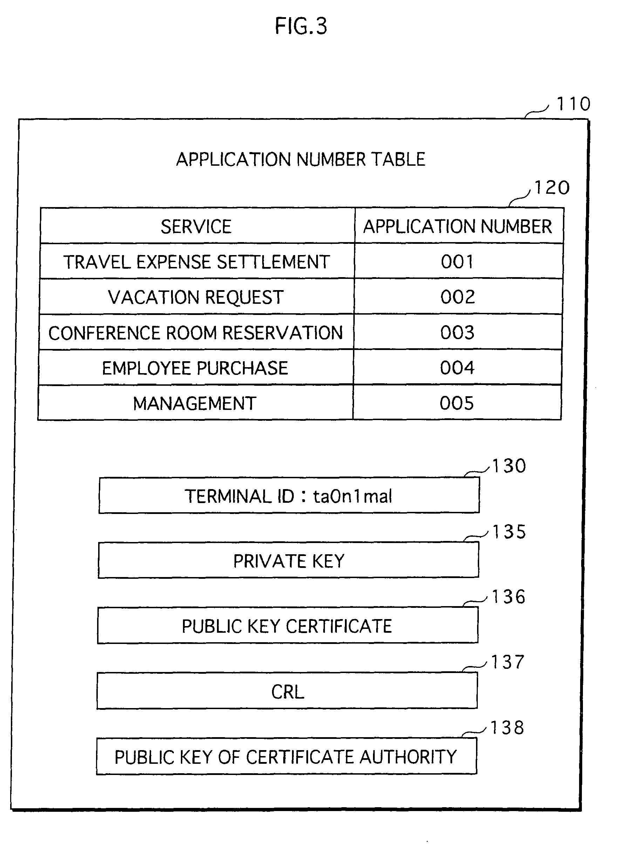

For instance, as FIG.3 shows, the storing unit 110 stores an application number table 120, a terminal ID 130, a private key 135, a public key certificate 136, a CRL (Certificate Revocation List) 137 and a public key 138 of a certificate authority.

The application number table 120 is a table used for associating application numbers with the services provided by the application server 200 and the management server 600. The application numbers are assigned to the services. The application number "001" is an identification number for the travel expenses settlement service. The application number "002" is an identification number for the vacation request service. The application number "003" is an identification number for the conference room reservation service. The application number "004" is an identification number for the employee purchase service. The application number "005" is used for identifying other services, such as a login and a password change, provided by the management server 600.

The terminal ID 130 is an identification number that is unique to the user terminal 100.

The public key certificate 136 certifies the validity of a public key that makes a pair with the private key 135. The public key certificate 136 includes a certificate ID, the public key, and a signature data issued by the certificate authority. This signature data is generated by applying a signature generation algorithm S to the public key using a private key of the certificate authority. Here, the certificate authority is a third party, which issues a public key certificate of each device belonging to the password changing system. The signature generation algorithm S is, for instance, an ElGamal signature on a finite field. The ElGamal signature is publicly known, and therefore its explanation is omitted here.

The CRL 137 is issued by the certificate authority, and includes certificate IDs of invalidated public key certificates.

The public key 138 of the certificate authority is a public key that makes a pair with the private key of the certificate authority.

### (2) Transmission and Reception Unit 101

The transmission and reception unit 101 performs transmission and reception of information between each of external devices connected to the Internet 20 and the control unit 107, and between each of the external devices and the authentication unit 103.

The transmission and reception unit 101 stores IP addresses of the user terminal 100 and the management server 600.

The above-described several kinds of information that the transmission and reception unit 101 transmits and receives are included in a packet 140 having a structure shown in FIG . 4 . The packet 140 includes a destination address 141, a source address 142, and a data part 143. The destination address 141 is an IP address of the destination, and the source address 142 is an IP address of the source. The data part 143 includes, for instance, an application number 146, a terminal ID 147 and data 148.

The application number 146 corresponds to a type of the service provided by any of the first application server 200a to the fourth application server 200d and the management server 600. The application number 146 has the same meaning as the application number included in the application number table 120.

Upon receiving the data part 143, including the application number 146, the terminal ID 147 and the data 148, and receiving an transmission instruction from the control unit 107, the transmission and reception unit 101 sets, to the data part 143, the IP address of the user terminal 100 as the source address 142 and the IP address of the management server 600 as the destination address 141. Then, the transmission and reception unit 101 transmits the data part 143.

For the sake of simplifying the description, the application number 146, the terminal ID 147 and the data 148 included in the data part 143 are simply arranged in this explanation. However, the bit length of the data part 143 has to be not more than a maximum value. Therefore, if the data part 143 is longer than the maximum bit length, the data part 143 is to be divided into pieces, and the transmission and reception unit 101 sets a destination address 141 and a source address 142 to each piece of the data part 143, and transmits the pieces.

### (3) Input Unit 112

The input unit 112 is connected to peripheral equipment, such as a keyboard and a mouse. The input unit 112 receives instructions from the user via the peripheral equipment, and outputs operational instruction information in accordance with the received instructions to the control unit 107.

### (4) Control Unit 107

The control unit 107 controls several kinds of procedures for processing information, which are executed by the user terminal 100 This is realized by the above-described processor operating in accordance with the computer program.

Regarding the present invention, the control unit 107 receives several kinds of operational instruction information from the input unit 112. The control unit 107 performs procedures for the login, procedures for use of the several kinds of services and procedures for the password change in accordance with the received operational instruction information.

During the procedures above, the control unit 107 receives screen data from the management server 600. The screen data is, for instance, login screen data, menu screen data for the terminal, expense settlement screen data for the terminal, expense settlement end screen data for the terminal, password change screen data for the terminal, change completion screen data for the terminal, change failure screen data for the terminal, and forcible termination screen data for the terminal. The control unit 107 also receives several kinds of information relating to the services, the password change, a two-way authentication and cryptographic processing. The control unit 107 processes the received screen data and the information.

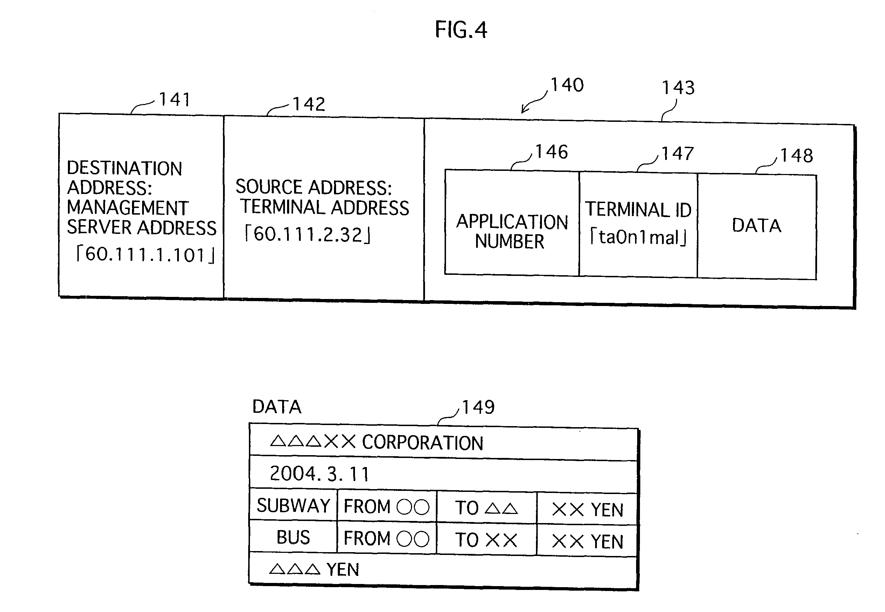

The information that the control unit 107 transmits to the management server 600 via the transmission and reception unit 101 during the procedures above has a structure of a packet 140 shown in FIG. 4. The control unit 107 reads out the terminal ID 130 from the storing unit 110, extracts the application number from the application number table 120, and generates the data part 143 including the read-out terminal ID 130, the extracted application number, and the several kinds information. The control unit 107 outputs the generated data part 143 to the transmission and reception unit 101, and instructs the transmission and reception unit 101 to transmit the data part 143.

In the following description, the generation of the data part 143 is simplified. Only the application number, the terminal ID, and the several kinds of information are used for the description.

The following describes the procedures performed for the login, for use of the several kinds of services, and for the password change.

### <Login>

If receiving operational instruction information representing an electronic application from the input unit 112, the control unit 107 instructs the authentication unit 103 to perform a two-way authentication with the management server 600.

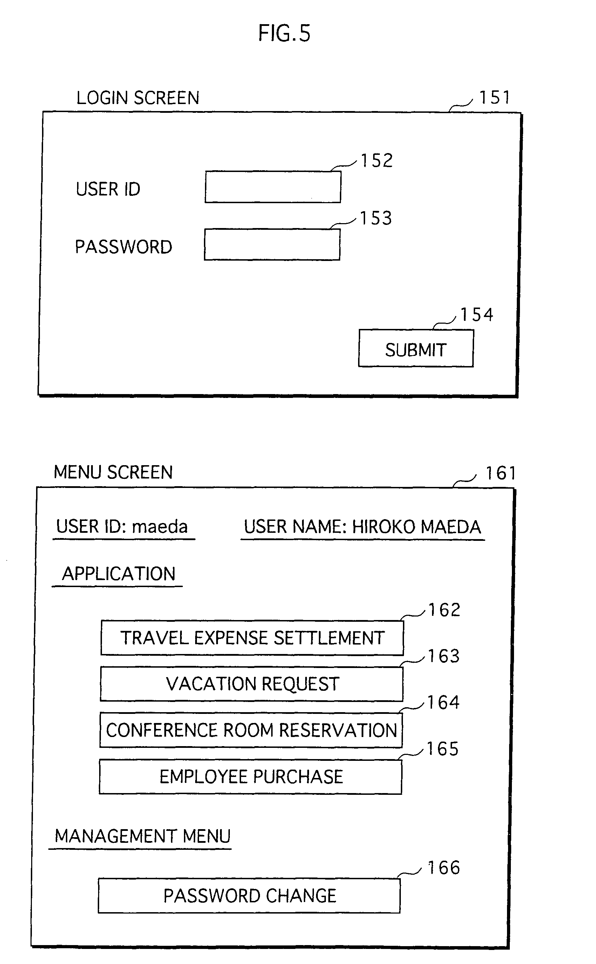

After the authentication unit 103 finishes the two-way authentication, the control unit 107 receives a terminal shared key, and stores the received terminal shred key. Then, the control unit 107 receives the login screen data from the management server 600 via the transmission and reception unit 101, generates a login screen 151 from the received login screen data, outputs the generated login screen 151 to the image display unit 113, and instructs the image display unit 113 to display the login screen 151. FIG.5 shows an example of the login screen 151. The login screen data is used for generating the login screen 151, and it is written in HTML.

Next, the control unit 107 receives an input from the user via the input unit 112. Upon receiving operational instruction information indicating that a submit button 154 is pressed, the control unit 107 outputs a password entered in a password box 153 and the terminal shared key to a cryptographic processing unit 108, and instructs the cryptographic processing unit 108 to perform encryption . Then, the control unit 107 receives the encrypted password from the cryptographic processing unit 108, and reads out the application number "005" and the terminal ID 130 from the storing unit 110. The control unit 107 outputs the read-out application number "005", the read-out terminal ID 130, the received encrypted password and a user ID entered in a user ID box 152 to the transmission and reception unit 101, and instructs the transmission and reception unit 101 to transmit them to the management server 600.

### <Use of Services>

Next, the control unit 107 receives the menu screen data for the terminal from the management server 600, generates a menu screen 161 from the received menu screen data, outputs the generated menu screen 161 to the image display unit 113, and instructs the image display unit 113 to display the menu screen 161. FIG. 5 shows an example of the menu screen for the terminal 161. The menu screen data is used for generating the menu screen 161, and it is written in HTML.

Then, the control unit 107 receives operational instruction information indicating that any of the buttons 162, 163, 164 and 165 is pressed from the input unit 112, and starts processing for using any of the travel expense settlement service, the vacation request service, the conference room reservation service, and the employee purchase service which corresponds to the pressed button.

The following specifically describes only the travel expense settlement service as an example.

The control unit 107 receives, from the input unit 112, operational instruction information indicating that the button 162 is pressed, extracts the application number "001" from the application number table 120 stored in the storing unit 110, and reads out the terminal ID 130. Then, the control unit 107 transmits the extracted application number "001" and the read-out terminal ID 130 to the management server 600 via the transmission and reception unit 101, and requests the management server 600 to start the service.

Next, the control unit 107 receives awaitmessageorthe forcible termination screen data for the terminal or the expense settlement screen data, via the transmission and reception unit 101. The forcible termination screen data for the terminal and the expense settlement screen data for the terminal are respectively used for generating a forcible termination screen 321 and an expense settlement screen 171, and they are both written in HTML.

If receiving the wait massage, the control unit 107 displays the received wait message on the monitor via the image display unit 113. Then, the control unit 107 restarts the processing from the reception of the menu selection by the user.

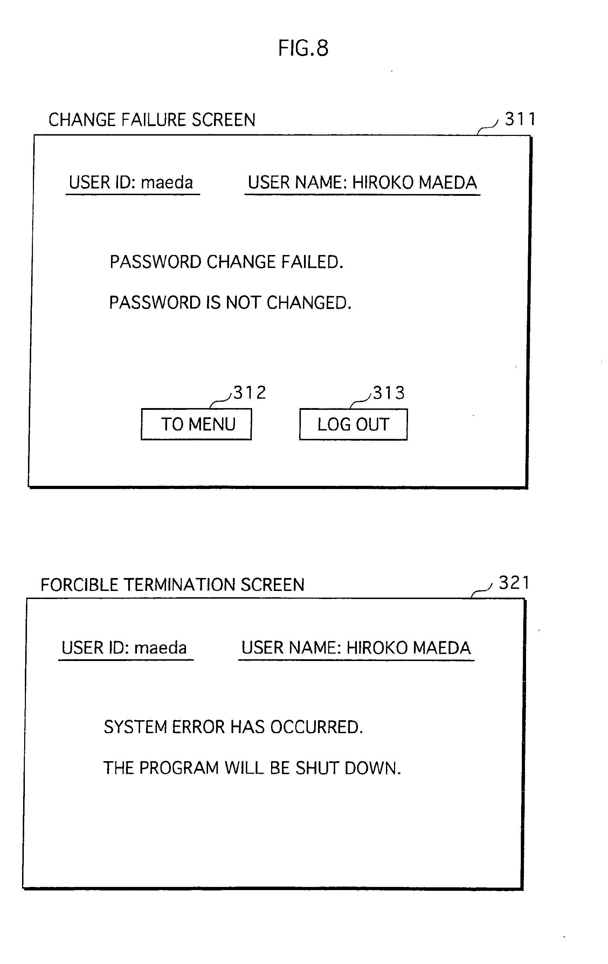

If receiving the forcible termination screen data for the terminal, the control unit 107 generates the forcible termination screen 321 from the received forcible termination screen data, outputs the generated forcible termination screen 321 to the image display unit 113, and instructs the image display unit 113 to display the forcible termination screen 321. Then, the control unit 107 finishes the procedure. FIG.8 shows an example of the forcible termination screen 321.

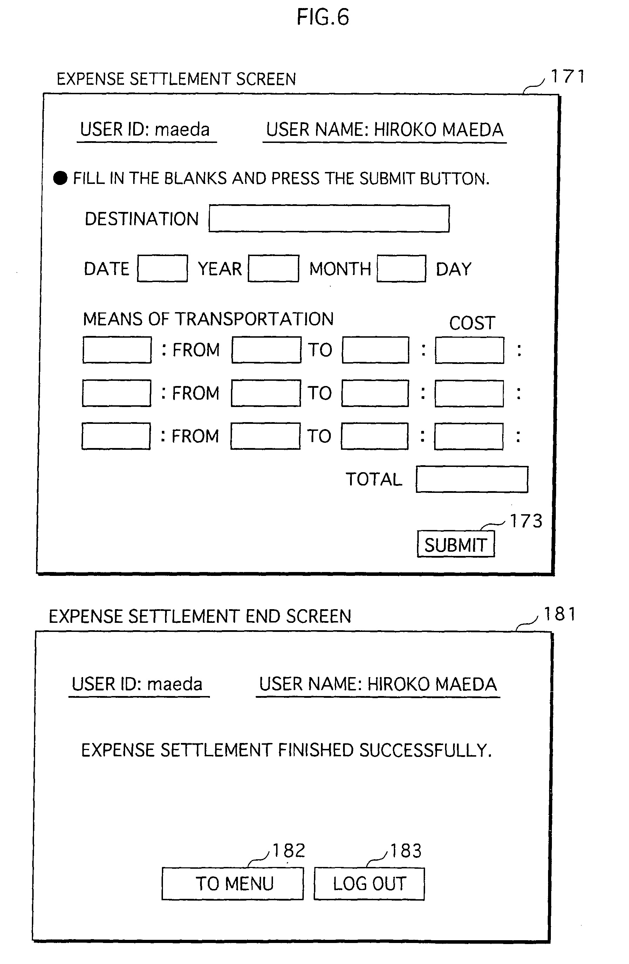

Upon receiving the expense settlement screen data for the terminal, the control unit 107 generates the expense settlement screen 171 from the received expense settlement screen data for the terminal, outputs the generated expense settlement screen 171 to the image display unit 113, and instructs the image display unit 113 to display the expense settlement screen 171. FIG.6 shows an example of the expense settlement screen 171.

Next, the control unit 107 receives an input from the user via the input unit 112. The control unit 107 receives operational instruction information indicating that a submit button 173 on the expense settlement screen 171 is pressed, outputs the data entered on the expense settlement screen 171 and the terminal shared key to the cryptographic processing unit 108, and instructs the cryptographic processing unit 108 to perform encryption. FIG.4shows an example of input data 149, which includes a destination, names of transportation facilities, and fares and so on.

The control unit 107 receives the encrypted input data from the cryptographic processing unit 108, and reads out the application number "001" and the terminal ID 130 from the storing unit 110. The control unit 107 transmits the read-out application number "001", the read-out terminal ID 130 and the received encrypted input data to the management server 600 via the transmission and reception unit 101.

Next, the control unit 107 receives the expense settlement end screen data for the terminal from the management server 600, generates an expense settlement end screen 181 from the received expense settlement end screen data, outputs the generated expense settlement end screen 181 to the image display unit 113, and instructs the image display unit 113 to display the expense settlement end screen 181. FIG.6 shows an example of the expense settlement end screen 181. The expense settlement end screen data is used for generating the expense settlement end screen 181, and it is written in HTML.

Next, the control unit 107 receives, from the input unit 112, operational instruction information indicating that a menu button 182 or a logout button 183, which are on the expense settlement end screen 181, is pressed.

If receiving operational instruction information indicating that a menu button 182 is pressed, the control unit 107 instructs the image display unit 113 to display the menu screen 161, and receives a menu selection.

If receiving operational instruction information indicating that the logout button 183 is pressed, the control unit 107 generates a logout notification, reads out the application number "005" and the terminal ID 130 from the storing unit 110, and transmits the read-out application number "005", the read-out terminal ID 130 and the generated logout notification to the management server 600 via the transmission and reception unit 101. Then, the control unit 107 finishes the procedure.

### <Password Change>

Upon receiving operational instruction information indicating that a button 166 on the menu screen 161 is pressed, the control unit 107 generates a password change instruction for requesting the password change, reads out the application number "005" and the terminal ID 130, and transmits the read-out application number "005", the read-out terminal ID 130 and the generated password change instruction to the management server 600 via the transmission and reception unit 101.

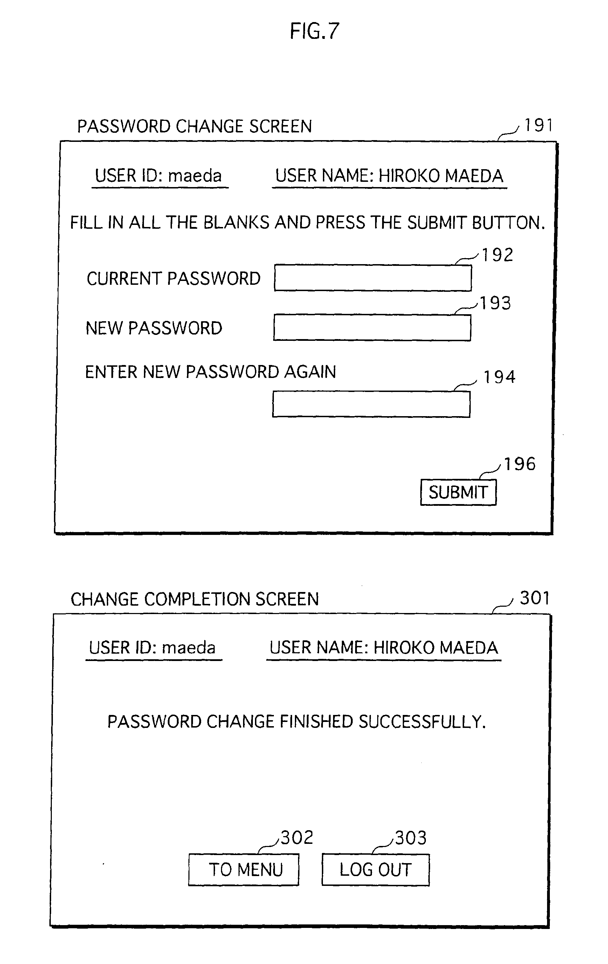

Next, the control unit 107 receives password change screen data for the terminal from the management server 600 via the transmission and reception unit 101. The control unit 107 generates a password change screen 191 from the received password change screen data for the terminal, outputs the generated password change screen 191 to the image display unit 113, and instructs the image display unit 113 to display the password change screen 191. FIG.7 shows an example of the password change screen 191. The password change screen data for the terminal is used for generating the password change screen 191, and it is written in HTML.

Next, the control unit 107 receives an input from the user via the input unit 112. In the following description, the password filled into a blank field 192 by the user is called "the current password", and the password filled into the blank fields 193 and 194 is called "the new password".

Upon receiving operational instruction information indicating that a submit button 195 is pressed, the control unit 107 outputs the current password and the new password, which are received from the user, and the terminal shared key to the cryptographic processing unit 108, and instructs the cryptographic processing unit 108 to perform encryption. Next, the control unit 107 receives an encrypted current password and an encrypted new password from the cryptographic processing unit 108. Then, the control unit 107 reads out the application number "005" and the terminal ID 130 from the storing unit 110, and transmits the read-out application number "005", the read-out terminal ID 130, and the received encrypted current password and the received encrypted new password, to the management server 600 via the transmission and reception unit 101.

Next, the control unit 107 receives, from the management server 600, change completion screen data for the terminal, change failure screen data for the terminal or forcible termination screen data for the terminal. The change completion screen data for the terminal and the change failure screen data for the terminal are used for generating a change completion screen 301 and a change failure screen 311 respectively, and they are written in HTML for instance.

If receiving the forcible termination screen data for the terminal, the control unit 107 generates the forcible termination screen 321 from the received forcible termination screen data for the terminal, and displays the forcible termination screen 321 on the monitor via the image display unit 113 , and finishes the procedure.

If receiving the change completion screen data for the terminal, the control unit 107 generates the change completion screen 301 from the received change completion screen data for the terminal, and displays the change completion screen 301 on the monitor via the image display unit 113. FIG.7 shows an example of the change completion screen 301.

Next, the control unit 107 receives an input from the user via the input unit 112. If receiving the operational instruction information indicating that a menu button 302 on the change completion screen 301 is pressed, the control unit 107 instructs the image display unit 113 to display the menu screen 161 for receiving the menu selection from the user.

If receiving the operational instruction information indicating that a logout button 303 is pressed, the control unit 107 generates a logout notification, reads out the application number "005" and the terminal ID 130 from the storing unit 110, and transmits the read-out application number "005", the read-out terminal ID 130 and the logout notification to the management server 600 via the transmission and reception unit 101. Then, the control unit 107 finishes the procedure.

If receiving the change failure screen data for the terminal, the control unit 107 generates a change failure screen 311 from the received change failure screen data for the terminal, and displays the generated change failure screen 311 on the monitor via the image display unit 113 . FIG . 8 shows an example of the change failure screen 311. Next, the control unit 107 receives a button operation from the user via the input unit 112. If receiving operational instruction information indicating that a menu button 312 on the change failure screen 311 is pressed, the control unit 107 instructs the image display unit 113 to display the menu screen 161, and returns to the reception of the menu selection by the user.

If receiving operational instruction information indicating that a logout button 313 is pressed, the control unit 107 generates a logout notification, reads out the application number "005" and the terminal ID 130 from the storing unit 110, and transmits the read-out application number "005", the read-out terminal ID 130 and the logout notification to the management server 600 via the transmission and reception unit 101. Then, the control unit 107 finishes the procedure.

### (5) Authentication Unit 103

Prior to the communication between the control unit 107 and an external device, the authentication unit 103 performs two-way authentication with the external device, using the private key 135 and the public key certificate 136. Only if the two-way authentication succeeds, the authentication unit 103 allows the communication between the control unit 107 and the external device, and generates a terminal shared key that is the same as the terminal shared key of the external device. Here, the external device is, more specifically, the management server 600.

### (6) Cryptographic Processing Unit 108

The cryptographic processing unit 108 receives several kinds of information, the terminal shared key, and an instruction to perform encryption from the control unit 107. Receiving the instruction to perform encryption, the cryptographic processing unit 108 applies an encryption algorithm *E1* to the received information, using the received terminal shared key, to generate encrypted information. Then, the cryptographic processing unit 108 outputs the generated encrypted information to the control unit 107.

Here, the information, which the cryptographic processing unit 108 receives from the control unit 107, is, more specifically, the password, the input information, the current password, and the new password.

The cryptographic processing unit 108 also receives several kinds of encrypted information, the terminal shared key, and an instruction to perform decryption, from the control unit 107. Receiving the instruction to perform decryption, the cryptographic processing unit 108 applies a decryption algorithm D2 to the received information, using the received terminal shared key, to generate the several kinds of information.

Here, the decryption algorithm D2 is used for decrypting the encrypted information encrypted by an encryption algorithm E2. A shared key encryption method, such as DES , can be used as the encryption algorithms *E1* and *E2*. DES is not explained here, because it is publicly known.

### (7) Image Display Unit 113

The image display unit 113 is connected to an external monitor.

The image display unit 113 receives several kinds of screens from the control unit 107, and receives instructions to display the screens from the control unit 107 as well. The image display unit 113 generates an image signal from the received each screen, and generates a vertical synchronizing signal and a horizontal synchronizing signal. Then, the image display unit 113 outputs the image signal to the monitor in accordance with the generated vertical synchronizing signal and the generated horizontal synchronizing signal.

### 1.3 Application Server 200

The first application server 200a to the fourth application server 200d provide the user terminal 100 with several kinds of services respectively. In this embodiment, the first application server 200a provides the travel expenses settlement service, the second application server 200b provides the vacation request service, the third application server 200c provides the conference roomreservation service, and the fourth application server 200d provides the employee purchase service.

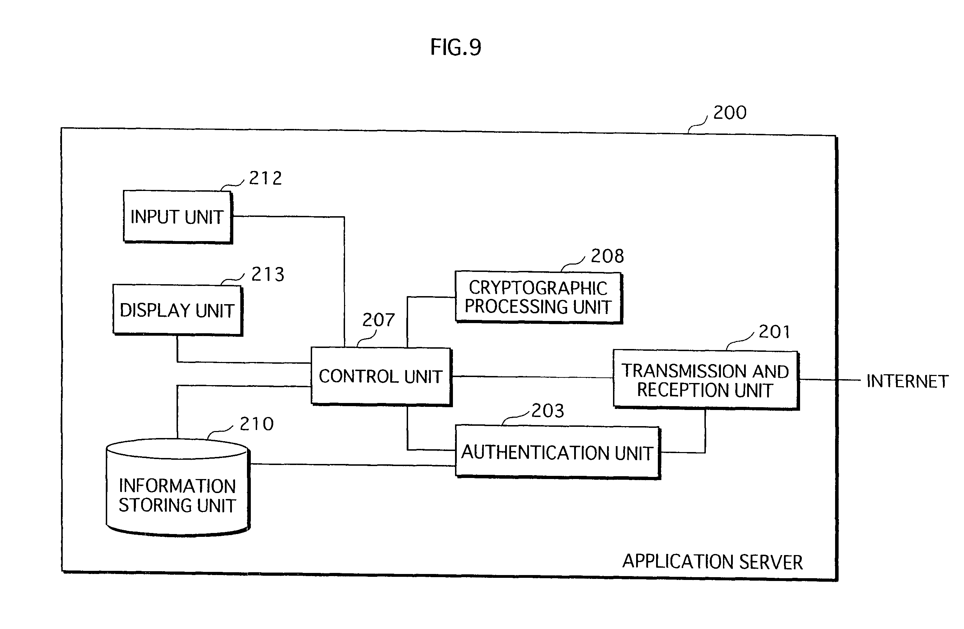

As FIG.9 shows, the application server 200 includes a transmission and reception unit 201, an authentication unit 203, a control unit 207, a cryptographic processing unit 208, an information storing unit 210, an input unit 212, and a display unit 213.

The application server includes, more specifically, a microprocessor, a RAM, a ROM, and so on, which are not illustrated. Each of the RAM and the ROM stores a computer program. The microprocessor operates in accordance with the computer programs, and accordingly the application server 200 realizes the function thereof.

### (1) Information Storing Unit 210

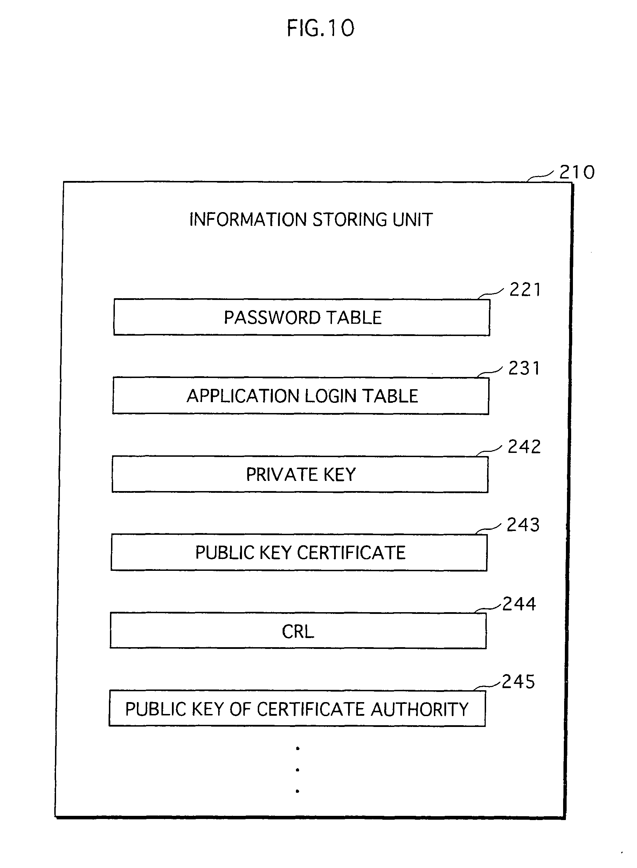

The information storing unit 210 includes a hard disk unit, and stores, for instance, a password table 221, an application login table 231, a private key 242, a public key certificate 243, a CRL 244 and a public key 245 of the certificate authority as FIG.10 shows. Although not specifically illustrated, the information storing unit 210 also stores several kinds of programs and image data, which are used for executing the service of the application server 200.

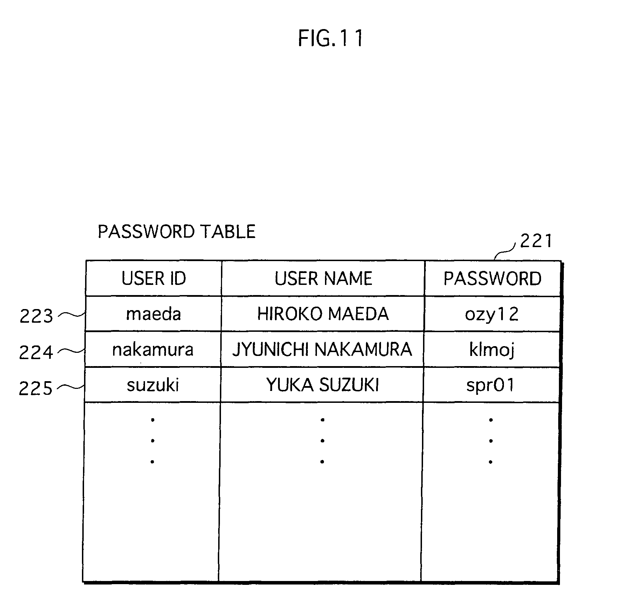

As FIG.11 shows, the password table 221 includes pieces of password information 223, 224, 225 and so on and each piece of the password information includes a user ID, a user name, and a password. The user ID corresponds to an authenticated user of the application server 200 on a one-to-one basis, and the user name is the name of the user corresponding to the user ID. The password is a string of characters or numbers, used for judging whether the user corresponding to the user ID is an authenticated user of the application server 200.

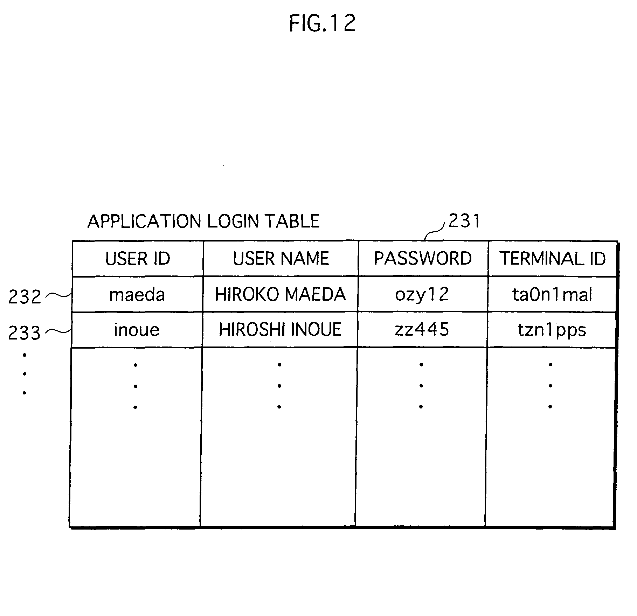

As FIG. 12 shows, the application login table 231 includes pieces of login information 232, 233 and so on and each piece of the login information includes a user ID, a user name, a password, and a terminal ID.

The user ID corresponds to a user who has been authenticated by the application server 200 based on the password, and who currently uses the service provided by the application server 200. The user name and the password are respectively the name and the password of the user corresponding to the user ID. The terminal ID is a unique identifier of the user terminal which is currently used by the user.

The public key certificate 243 certifies the validity of the public key that makes a pair with the private key 242, and includes acertificateID, thepublickey, and a signature data by the certificate authority.

The CRL 244 and the public key 245 of the certificate authority are the same as respectively. The CRL 137 and the public key 138 of the certificate authority are stored in the user terminal 100. Therefore, they are not explained here.

### (2) Transmission and Reception Unit 201

The transmission and reception unit 201 stores IP addresses of the application server 200 and the management server 600.

The transmission and reception unit 201 performs transmission and reception of information between the management server 600 and the control unit 207, and between the management server 600 and the authentication unit 203.

The several kinds of information that the transmission and reception unit 201 transmits and receives between the control unit 207 and the management server 600 are included in a packet 140 having the structure shown in FIG.4. The transmission and reception unit 201 receives, from the control unit 207, the data part 143 that includes the application number, the terminal ID and the several kinds of information, and receives an instruction to transmit the data part 143.

Upon receiving the instruction to transmit the data part 143 from the control unit 207, the transmission and reception unit 201 sets, to the data part 143, the IP address of the application server 200 as the source address and the IP address of the management server 600 as the destination address. Then, the transmission and reception unit 101 transmits the data part 143.

The transmission and reception unit 201 denies accesses from the external devices, except for the management server 600. More specifically, the transmission and reception unit 201 determines whether the source address included in the received packet is the IP address of the management server 600. If the source address is not the IP address of the management server 600, the transmission and reception unit 201 deletes the received packet.

### (3) Input Unit 212 and Display Unit 213

The input unit 212 receives information and an instruction which are input from the operator, and outputs the operational instruction information corresponding to the received information and the received instruction to the control unit 207.

The display unit 213 displays several kinds of information under control of the control unit 207.

### (4) Control Unit 207

With the above-described processor operating in accordance with the computer programs, the control unit 207 controls the information processing performed by the application server 200.

The control unit 207 receives the public key certificate from the management server 600, outputs the received public key certificate to the authentication unit 203, and instructs the authentication unit 203 to perform two-way authentication with the management server 600. If the two-way authentication by the authentication unit 203 succeeds, the control unit 207 receives a server shared key from the authentication unit 203, and stores the received server shared key. Using the stored server shared key, the control unit 207 performs secret communication, and performs transmission and reception of information in safety during the following procedures.

The control unit 207 also stores the application number of the service that the application server 200 itself provides. In the following procedures, to transmit information via the transmission and reception unit 201, the control unit 207 generates the data part 143 that includes the stored application number, the terminal ID of the user terminal 100 used by the user to whom the service will be provided, and information to be transmitted. Then, the control unit 207 outputs the generated data part 143 to the transmission and reception unit 201. In the following description, the generation of the data part 143 is simplified. Only the application number, the terminal ID, and the several kinds of information are used for the explanation.

The control unit 207 receives, from the management server 600, the application number of the application server 200, the terminal ID, the user ID, the encrypted password, and a service start request. Likewise, the control unit 207 receives the application number, the terminal ID, and the logout notification from the management server 600.

The control unit 207 receives, from the management server 600, the application number corresponding to the application server 200, the terminal ID, the user ID, the encrypted current password, the encrypted new password, and the password change instruction. Likewise, the control unit 207 receives the application number corresponding to the application server 200, the terminal ID, the user ID, the encrypted current password, the encrypted new password, and a password restoration instruction.

The following describes procedures performed by the control unit 207 for providing services, for changing the password, for restoring the password, and for logging out.

### (i) Procedure for Providing Service

In the procedure for providing the service, every time the control unit 207 receives the several kinds of information from the management server 600, the control unit 207 checks whether the piece of the login information 232, which includes the terminal ID of the terminal 100 received with the several kinds of information, exists in the application login table 231. This is performed for checking whether the user of the user terminal 100 has been already logged in. In the following description of the procedure for providing the service, the explanation of the check as to whether the user has been already logged in is omitted.

Receiving the application number, the terminal ID of the user terminal 100 used by the user to whom the service will be provided, the user ID, the encrypted password and the service start request from the management server 600, the control unit 207 starts the procedure for providing the service. As an example, the following describes the travel expense settlement service provided by the first application server 200a.

The control unit 207 outputs the received encrypted password and the server shared key, which is generated through the two-way authentication, to the cryptographic processing unit 108, and instructs the cryptographic processing unit 108 to perform decryption. Receiving the password from the cryptographic processing unit 108, the control unit 207 checks whether a piece of the password information including the received user ID and the received password exists in the password table 221. If judging that the piece of the password information including the received user ID and the received password does not exist in the password table 221, the control unit 207 transmits a received user ID and a password error signal, which represents that the password stored in the management server 600 is not the same as the password stored in the first application server 200a, to the management server 600. Then, the control unit 207 finishes the procedure for providing the service.

If judging that the piece of the password information including the received user ID and the received password exists in the password table 221, the control unit 207 selects the piece of the password information 223 that includes the received user ID and the password received from the cryptographic processing unit 208. Then, the control unit 207 generates the piece of the login information 232 from the received terminal ID and the selected piece of the password information 223, and adds the generated piece of the login information 232 into the application login table 231.

Next, the control unit 207 reads out the expense settlement screen data from the information storing unit 210, and extracts the user ID and the user name from the piece of the login information 232. Then the control unit 207 generates the settlement screen data for the terminal based on the read-out expense settlement screen data and the extracted user ID and user name. Next, the control unit 207 extracts the terminal ID from the piece of the login information 232, and transmits the application number "001" stored in the control unit 207 itself, the extracted terminal ID, and the generated expense settlement screen data for the terminal to the management server 600 via the transmission and reception unit 201.

Next, the control unit 207 receives the application number "001" , the terminal ID and the encrypted input data from the management server 600. The control unit 207 outputs the received encrypted input data and the server shared key to the cryptographic processing unit 208, and instructs the cryptographic processing unit 208 to perform decryption. The control unit 207 receives the input data from the cryptographic processing unit 208 and performs the travel expense settlement service for the user according to the received input data.

After the travel expense settlement is finished, the control unit 207 reads out the expense settlement end screen data from the information storing unit 210, generates the expense settlement end screen data for the terminal from the read-out expense settlement end screen data and the piece of the login information 232, and transmits the application number "001" , the terminal ID included in the piece of the login information 232, and the generated expense settlement end screen data for the terminal to the management server 600. Then, the control unit 207 finishes the travel expense settlement service.

### (ii) Password Change

Receiving the application number corresponding to the application server 200, the terminal ID of the user terminal 100 used by the user who is the target of the password change, the user ID, the encrypted current password, the encrypted new password, and the instruction for the password change from the management server 600, the control unit 207 temporally stores the received terminal ID.

Next, the control unit 207 outputs the received encrypted current password, the received encrypted new password and the server shared key to the cryptographic processing unit 208, and instructs the cryptographic processing unit 208 to perform decryption. The control unit 207 receives the current password and the new password from the cryptographic processing unit 208, and selects a piece of password information 223 that includes the received current password and the received user ID from the password table 221. Next, the control unit 207 replaces the password included in the selected piece of the password information 223 with the new password.

If the replacement finishes successfully, the control unit 207 generates an end signal "1". If the replacement fails due to a defective hard disk and so on, the control unit 207 generates an end signal "0", and transmits the application number of the application server 200 itself, the temporally stored terminal ID, and the end signal to the management server 600 via the transmission and reception unit 201. Then, the control unit 207 finishes the password change.

### (iii) Password Restoration

Receiving the application number corresponding to the application server 200, the terminal ID, the user ID, the encrypted current password, the encrypted new password, and the instruction for the password restoration from the management server 600, the control unit 207 temporally stores the received terminal ID. Next, the control unit 207 outputs the received encrypted current password, the received encrypted new password, and the server shared key to the cryptographic processing unit 208, and instructs the cryptographic processing unit 208 to perform decryption.

The control unit 207 receives the current password and the new password from the cryptographic processing unit 208, and selects a piece of password information 223 that includes the received current password and the received user ID from the password table 221. Next, the control unit 207 replaces the password included in the selected piece of the password information 223 with the received current password.

If the replacement finishes successfully, the control unit 207 generates an end signal "1" . If the replacement fails, the control unit 207 generates an end signal "0", and transmits the application number of the application server 200 itself, the temporally stored terminal ID, and the end signal to the management server 600 via the transmission and reception unit 201. Then, the control unit 207 finishes the password restoration.

### (iv) Logout

Receiving the application number, the terminal ID of the user terminal 100 and the logout notification from the management server 600 via the transmission and reception unit 201, the control unit 207 searches the application login table 231 for the piece of the login information 232 that includes the received terminal ID. If the piece of the login information 232 does not exist in the application login table 231, the control unit 207 finishes the logout without performing any operation.

If the piece of the login information 232 exists in the application login table 231, the control unit 207 deletes the piece of the login information 232, and finishes the logout.

### (5) Authentication Unit 203

Prior to the communication between the control unit 207 and an external device, the authentication unit 203 performs two-way authentication with the external device, using the private key 242 and the public key certificate 243. Only if the two-way authentication succeeds, the authentication unit 203 allows the communication between the control unit 207 and the external device, and generates the terminal shared key that is the same as the terminal shared key of the external device. Here, the external device is, more specifically, the management server 600.

### (6) Cryptographic Processing Unit 208

The cryptographic processing unit 208 receives several kinds of information, the server shared key and an instruction to perform encryption from the control unit 207. Receiving the instruction to perform encryption, the cryptographic processing unit 208 applies an encryption algorithm E4 to the received information, using the received terminal server key, to generate encrypted information. Then, the cryptographic processing unit 208 outputs the generated encrypted information to the control unit 207.

The cryptographic processing unit 208 also receives several kinds of encrypted information, the server shared key, and an instruction to perform decryption, from the control unit 207. Receiving the instruction to perform decryption, the cryptographic processing unit 208 applies a decryption algorithm D3 to the received encrypted information, using the received server shared key, to generate the several kinds of information. Then, the cryptographic processing unit 208 outputs the generated information.

The encrypted information, which the cryptographic processing unit 208 receives from the control unit 207, is, more specifically, theencryptedpassword, the encrypted input information, the encrypted current password, and the encrypted new password.

Here, the decryption algorithm D3 is used for decrypting the encrypted information encrypted by an encryption algorithm *E3*. A shared key encryption method, such as DES, can be used as the encryption algorithms E3 and E4.

### 1.4 Management Server 600

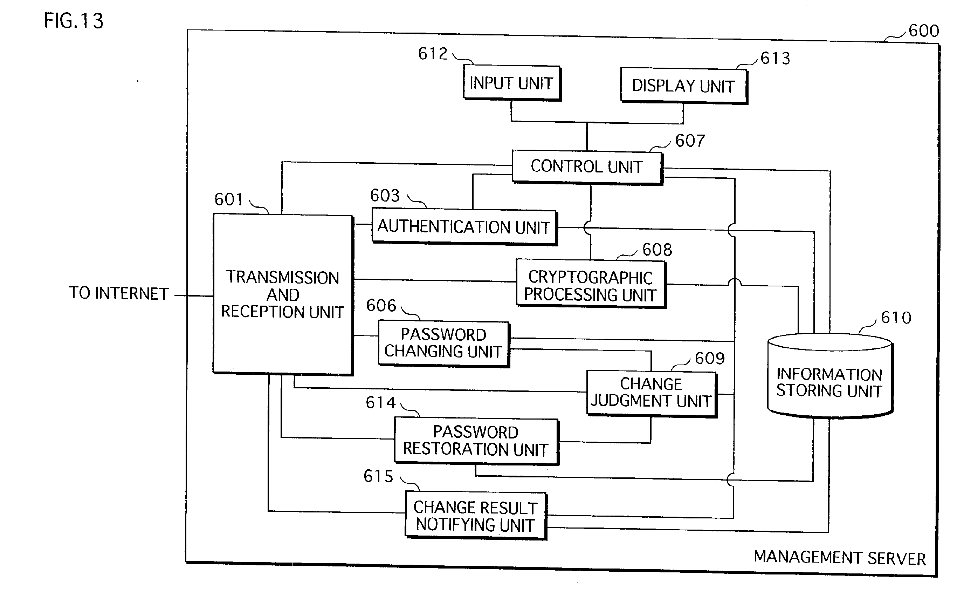

As FIG.13 shows, the management server 600 includes a transmission and reception unit 601, an authentication unit 603, a password changing unit 606, a control unit 607, a cryptographic processing unit 608, a password restoring unit 614, a change judging unit 609, a change result notifying unit 615, a information storing unit 610, an input unit 612, and a display unit 613.

More specifically, the management server 600 includes a microprocessor, a RAM, a ROM, and a hard disk, which are not illustrated. Each of the RAM, the ROM, and the hard disk stores a computer program. The microprocessor operates in accordance with the computer programs, and accordingly the management server 600 realizes the function thereof.

### (1) Information Storing Unit 610

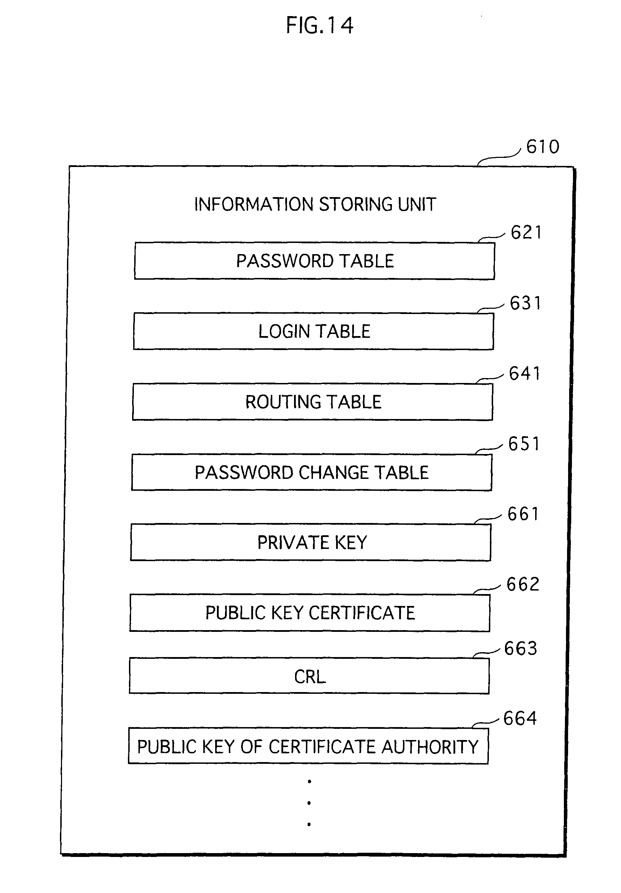

The information storing unit 610 includes a hard disk unit, and stores, for instance, a password table 621, a login table 631, a routing table 641, a password change table 651, a private key 661, a public key certificate 662, a CRL 663 and a public key 664 of the certificate authority as FIG.14 shows.

The password table 621 has the same structure as the password table 221 of the application server 200. Therefore, the password table 621 is not explained here.

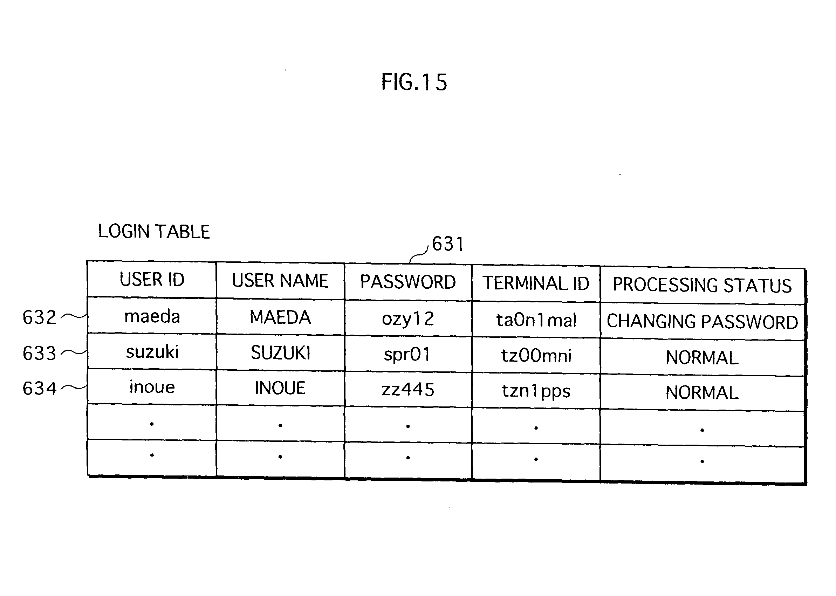

As FIG.15 shows, the login table 631 includes pieces of login information 632, 633, 644 and so on, and each piece of the login information includes a user ID, a user name, a password, a terminal ID and a processing status.

The user ID corresponds to a user who has been authenticated by the management server 600 and currently uses the several kinds of services, and the user name and the password are respectively the name and the password of the user corresponding to the user ID. The terminal ID is a unique identifier of the user terminal currently used by the user. The processing status indicates the type of the processing performed between the user terminal having the terminal ID and the application server 200, and between the user terminal and the management server 600. While the password change is being performed, a status "changing password" is given to the processing status, and while the processing relating to the several kinds of services is performed by the application server 200, a status "normal" is given to the processing status.

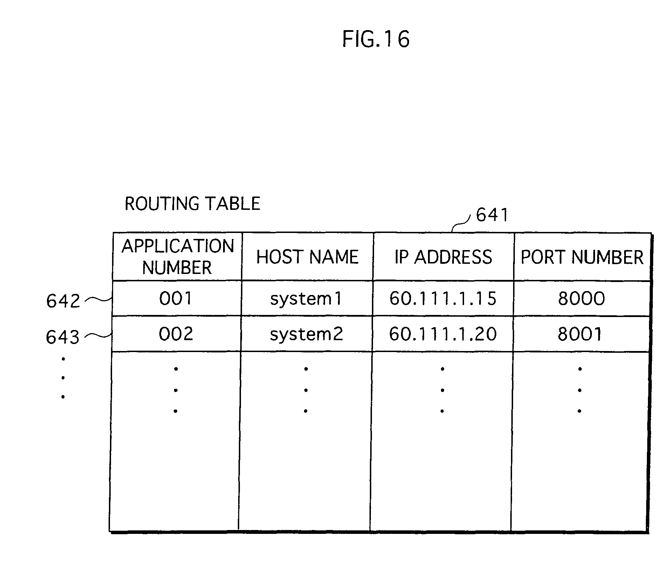

As FIG.16 shows, the routing table 641 includes pieces of route information 642, 643 and so on, and each piece of the route information includes an application number, a host name, an IP address, and a port number.

The application number is an identifier used for identifying the service provided by each application server, and corresponds to one of the first application 200a to the fourth application number 200d. The application number has the same meaning as the application number included in the application number table 120 stored in the user terminal 100. The host name is a unique identifier used for identifying the application server 200 corresponding to the application number. The IP address represents the location of the application server 200 on the network, and the port number is used for specifying the application server 200 to which the management server 600 transmits information.

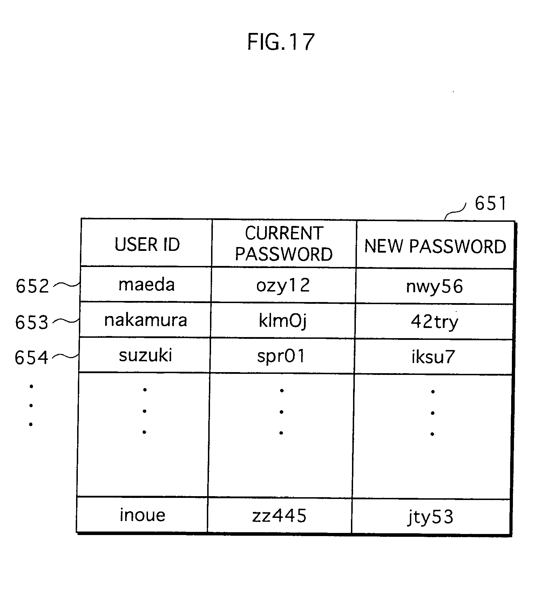

As FIG.17 shows, the password change table includes pieces of change information 652, 653, 654 and so on and each piece of the change information includes a user ID, a current password, and a new password.

The User ID is an identifier assigned to an authenticated user of the application server 200 and the management server 600. The current password is a password that is used by the user before the password change is performed, and the new password is a password to which the user wishes to change the current password through the password change. More specifically, the current password is a character string to be entered into the blank field 192 on the password change screen of FIG.7, and the new password is a character string to be entered into the blank fields 193 and 194.

The public key certificate 662 certifies the validity of the public key that makes a pair with the private key 661, and includes acertificateID, thepublickey, and a signature data by the certificate authority.

The CRL 663 and the public key 664 of the certificate authority are respectively the same as the CRL 137 and the public key 138 of the certificate authority, which are stored in the user terminal 100. Therefore, they are not explained here.

Also, although not specifically illustrated, the information storing unit 610 stores the several kinds of screen data.

### (2) Transmission and Reception unit 601

The transmission and reception unit 601 stores the terminal ID of the user terminal 100 and the IP address of the user terminal 100 in association with each other. The transmission and reception unit 601 also stores the IP address of the management server 600.

The transmission and reception unit 601 performs transmission and reception of information among each unit included in the management server 600 and an external device.

The several kinds of information that the transmission and reception unit 601 transmits and receives are included in a packet 140 having the structure shown in FIG.4.

The transmission and reception unit 601 receives, from the control unit 607 or the password change unit 606 or the password restoring unit 614, the data part 143 that includes the application number, the terminal ID of the terminal 100, and the several kinds of information, and also receives an instruction to transmit the data part 143.

Upon receiving the instruction to transmit the data part 143 from the control unit 607, the transmission and reception unit 601 sets, to the data part 143, the IP address of the management server 600 as the source address and the IP address of the user terminal 100 as the destination address. Then, the transmission and reception unit 101 transmits the received data part 143.

If receiving the information from the control unit 607 or the password change unit 606, and receiving an instruction to transmit the information to the application server 200, the transmission and reception unit 601 selects a piece of route information from the routing table 641 based on the application number, and extracts the IP address and the port number from the selected piece of the route information. Next, the transmission and reception unit 601 sets the extracted IP address to the destination address, sets the IP address of the management server 600 to the source address, and sets the extracted port number to the destination port number. Then the transmission and reception unit 601 transmits the information.

### (3) Input Unit 612 and Display Unit 613

The input unit 612 receives information and an instruction that is input from the operator, and outputs the received information and the operational instruction information corresponding to the received instruction to the control unit 607.

The display unit 613 displays several kinds of information under control of the control unit 607.

### (4) Password Changing Unit 606

The password changing unit 606 receives the application number, the terminal ID, the user ID, the encrypted current password, the encrypted new password, and an instruction to perform the password change from the control unit 607. Upon receiving the instruction to perform the password change from the control unit 607, the password changing unit 606 performs the password change, which is described next.

### <Password Change>

Upon receiving, from the control unit 607, the application number, the terminal ID, the user ID, the encrypted current password, the encrypted new password, and an instruction to perform the password change, the password changing unit 606 generates a password change instruction that is used for instructing the application server 200 to perform the password change, and outputs the user ID, the application number, the terminal ID, the encrypted current password and the encrypted new password, which has been received from the control unit 607, and the generated password change instruction to the transmission and reception unit 601, and instructs the transmission and reception unit 601 to transmit the data to the application server 200.

At the same time as the transmission, the password changing unit 606 generates a change instruction completion signal indicating that the password change instruction has been transmitted to the application server 200, and outputs the generated change instruction completion signal, and the application number and the terminal ID, which are received from the control unit 607, to the change judging unit 609.

### (5) Password Restoring Unit 614

The password restoring unit 614 receives the application number, the terminal ID, the user ID, the encrypted current password, the encrypted new password, and an instruction to perform password restoration, from the control unit 607.

The password restoring unit 614 also receives an instruction to retransmit the password restoration instruction from the change judging unit 609.

Upon receiving the instruction to perform the password restoration from the control unit 607, the password restoring unit 614 performs password restoration, which is described next. Note that in the following description, the generation of the data part 143 is simplified. Only the output of the application number, the terminal ID, and the several kinds of information are used for the explanation.

### <Password Restoration>

Upon receiving, from the control unit 607, the application number, the terminal ID, the user ID, the encrypted current password, the encrypted new password, and an instruction to perform the password restoration, the password restoring unit 614 generates a password restoration instruction that is used for instructing the application server 200 to change the password back to the current password, and temporarily stores the application number, terminal ID, encrypted current password, encrypted new password, which are received from the control unit 607, and the generated password restoration instruction. Next, the password restoring unit 614 outputs the application number, terminal ID, user ID, encrypted current password, encrypted new password, which are received from the control unit 607, and the generated password restoration instruction to the transmission and reception unit 601. Then, the password restoring unit 614 instructs the transmission and reception unit 601 to transmit them to the application server 200 that corresponds to the application number.

At the same time as the transmission, the password restoring unit 614 generates a restoration instruction completion signal indicating that the password restoration instruction has been transmitted to the application server 200, and outputs the generated restoration instruction completion signal,and the application number and the terminal ID, which are stored in the password restoring unit 614, to the change judging unit 609.

Upon receiving an instruction to retransmit the password restoration instruction from the change judging unit 609, the password restoring unit 614 reads out the application number, the terminal ID, the user ID, the encrypted current password, the encrypted new password, and the password restoration instruction, which are stored in the password restoring unit 614, and retransmits the application number, the terminal ID, the user ID, the encrypted current password, the encrypted new password and the password restoration instruction via the transmission and reception unit 601.

At the same time as the retransmission is performed, the password restoring unit 614 outputs the restoration instruction completion signal to the change judging unit 609.

### (6) Change Judging Unit 609

The change judging unit 609 includes a time counter for counting elapsed time, and a transmission counter for counting the number of the transmissions of the password restoration instructions.

The change judging unit 609 prestores a maximum waiting time and a maximum transmission number. The maximum waiting time is "1 second", which is the upper limit of the waiting time between the time when the password changing unit 606 or the password restoring unit 614 transmits the password change instruction or the password restoration instruction, and the time when the change judging unit 609 receives the end signal. At the time when the maximum waiting time passes from the transmission of the password change instruction, if the change judging unit 609 has not received the end signal, the change judging unit 609 generates a changeendsignal "0" that indicates a password change failure. At the time when the maximum waiting time passes from the transmission of the password restoration instruction, if the change judging unit 609 has not received the end signal, the change judging unit 609 instructs the password restoring unit 614 to retransmit the password restoration instruction.

The maximum transmission number is "3 times", which is the upper limit of the number of times that the password restoring unit 614 can transmit the password restoration instruction. If the number of the transmissions becomes more than three times, the change judging unit 609 generates a restoration end signal "0" that indicates a password restoration failure.

The change judging unit 609 receives the change instruction completion signal, the application number, and the terminal ID from the password changing unit 606.

The change judging unit 609 receives all of the restoration instruction completion signal, the application number, and the terminal ID, or only the restoration instruction completion signal from the password restoring unit 614.

The following describes (i) judgment for password change and (ii) judgment for password restoration, which are performed by the change judging unit 609.

### (i) Judgment for Password Change

Upon receiving the change instruction transmission completion signal, the application number, and the terminal ID from the password changing unit 606, the change judging unit 609 temporarily stores therein the received application number and terminal ID.

Upon receiving the change instruction transmission completion signal, the change judging unit 609 resets the time counter to "0", and starts counting the elapsed time.

Next, upon receiving the end signal from the application server 200 via the transmission and reception unit 601, the change judging unit 609 judges whether the end signal is "1" or "0". If judging that the end signal is "1", the change judging unit 609 generates a change end signal "1" that indicates a password change success. If judging that the end signal is "0", the change judging unit 609 generates a change end signal "0" that indicates a password change failure.

If having not received the end signal from the application server 200, the change judging unit 609 compares the value of the time counter with the maximum waiting time. If judging that the value of the time counter is not more than the maximum waiting time, the change judging unit 609 repeats the comparison until receiving the end signal, or until the value of the time counter becomes more than the maximum waiting time.

If judging that the value of the time counter is more than the maximum waiting time, the change judging unit 609 judges that the password change for the application server 200 has been failed, and generates the change end signal "0".

Next, the change judging unit 609 outputs the stored application number and terminal ID, and the generated change end signal to the control unit 607.

### (ii) Judgment for Password Restoration

Upon receiving the restoration instruction transmission completion signal, the application number, and the terminal ID from the password restoring unit 614, the change judging unit 609 temporarily stores therein the received application number and terminal ID, and resets the transmission counter to "0".

Upon receiving the restoration instruction transmission completion signal, the change judging unit 609 resets the time counter to "0", and starts counting the elapsed time.

If receiving only the restoration instruction transmission completion signal from the password restoring unit 614, the change judging unit 609 does not reset the transmission counter, and resets the time counter to "0", and starts counting the elapsed time.

Next, upon receiving the end signal from the application server 200 via the transmission and reception unit 601, the change judging unit 609 judges whether the end signal is "1" or "0". If judging that the end signal is "1", the change judging unit 609 generates a restoration end signal "1" that indicates a password restoration success. If judging that the end signal is "0", the change judging unit 609 adds "1" to the transmission counter. Then, the change judging unit 609 compares the value of the transmission counter with the maximum transmission number. If judging that the value of the transmission counter is notmore than the maximum transmission number, the change judging unit 609 instructs the password restoring unit 614 to retransmit the password restoration instruction.

If having not received the end signal from the application server 200, the change judging unit 609 compares the value of the time counter with the maximum waiting time. If judging that the value of the time counter is not more than the maximum waiting time, the change judging unit 609 repeats the comparison until receiving the end signal, or until the value of the time counter becomes more than the maximum waiting time.

If judging that the value of the time counter is more than the maximum waiting time, the change judging unit 609 adds "1" to the transmission counter. Then, the change judging unit 609 compares the value of the transmission counter with the maximum transmission number. If the value of the transmission counter is not more than the maximum transmission number, the change judging unit 609 instructs the password restoring unit 614 to retransmit the password restoration instruction.

If the value of the transmission counter is more than the maximum transmission number, the change judging unit 609 generates the restoration end signal "0" that indicates a password restoration failure.

Upon generating the restoration end signal, the change judging unit 609 outputs the stored application number and terminal ID, and the generated restoration end signal to the control unit 607.

### (7) Control Unit 607

The control unit 607 controls several kinds of information processing executed by the management server 600. This function is realized by the above-described processor operating according to the computer program.

The control unit 607 stores the application number indicating the service provided by the application server 200 in association with the application server 200.

The control unit 607 receives the public key certificate from the user terminal 100 via the transmission and reception unit 601.

Upon receiving the public key certificate from the user terminal 100, the control unit 607 outputs the received public key certificate to the authentication unit 603, and instructs the authentication unit 603 to perform the two-way authentication. After the two-way authentication is finished by the authentication unit 603, the control unit 607 receives the terminal shared key. Using the terminal shared key, the control unit 607 performs the secret communication with the user terminal in safety in the following procedures.

The several kinds of information that the control unit 607 receives via the transmission and reception unit 601 are included in a packet 140 having the structure shown in FIG.4. The control unit 607 identifies the received application number, and judges which of the application server 200 and the management server 600 is the device that proves the user with the service. To transmit the several kinds of information, the control unit 607 generates the data part 143 that includes the information to be transmitted, the terminal ID of the user terminal 100 used by the user who is the target of the service, and the application number corresponding to the device that is to perform the processing. Then, the control unit 607 outputs the generated data part 143 to the transmission and reception unit 601, and instructs the transmission and the reception unit 601 to transmit the data. Here, the device that is to perform the processing is any of the application servers and the management server 600.

In the following description, the generation of the data part 143 is simplified. Only the application number, the terminal ID, and the several kinds of information are used for the explanation.

The control unit 607 performs the login procedures for the user, relaying procedures among the several kinds of information, the password change control, the password restoration control, and the logout procedures. The following describes the login procedures for the user, relaying procedures among the several kinds of information, the password change control, the password restoration control, and the logout procedures.

### (i) User Login Procedures for User

After the authentication unit 603 finishes the two-way authentication, the control unit 607 receives the terminal shared key from the authentication unit 603, and stores therein the received terminal shared key. The control unit 607 reads out the login screen data from the information storing unit 610, and transmits the read-out login screen data to the user terminal 100 via the transmission and reception unit 601.

Next, the control unit 607 receives the application number "005", the terminal ID, the user ID, and the encrypted password, from the user terminal 100, outputs the received encrypted password and terminal shared key to the cryptographic processing unit 608, and instructs the cryptographic processing unit 608 to perform decryption. Upon receiving the password from the cryptographic processing unit 608, the control unit 607 searches the password table 621 for the piece of the password information that includes the received user ID and password. If judging that the piece of the password information that includes the received user ID and password does not exist in the password table 621, the control unit 607 retransmits the login screen data to the user terminal 100.

If judging that the piece of the password information that includes the received user ID and the password exists in the password table 621, the control unit 607 selects the piece of the password information that includes the received user ID and the password. The control unit 607 generates the piece of the login information 632 based on the received terminal ID and the selected piece of the password information, and adds the generated piece of the login information into the login table 631. At this point of time, the control unit 607 gives the status "normal" to the processing status. This indicates that the login has been finished.

In the succeeding procedures, every time receiving the several kinds of information from the user terminal 100, the control unit 607 checks whether the login table 631 includes the piece of the login information 632 including the terminal ID that the control unit 607 receives with the several kinds of information, and whether the user of the user terminal 100 has been already logged in. In the following description, a detailed explanation of such a login check is omitted.

Next, the control unit 607 reads out the menu screen data from the information storing unit 610, generates the menu screen data for the terminal based on the read-out menu screen data, and the user ID and the user name, included in the piece of the login information 632 which is added into the login table 631, and transmits the generated menu screen data for the terminal to the user terminal 100 via the transmission and reception unit 601. Next, the control unit 607 receives the application ID, the terminal ID and the service start request, or the application ID, the terminal ID, and the password change instruction from the user terminal 100 via the transmission and the reception unit 601. If receiving the application ID, the terminal ID and the service start request, the control unit 607 performs relaying procedures between the user terminal 100 and the application server 200. If receiving the application ID, the terminal ID and the password change instruction, the control unit 607 performs the password change and the password restoration.

### (ii) Relaying Procedures for Services

Upon receiving the application number, the terminal ID, and the service start request, the control unit 607 performs the relaying procedures between the application server 200 specified by the received application number and the user terminal 100, in the following manner.

The following describes the relaying procedures performed between the first application server 200a and the user terminal 100.

The control unit 607 confirms that the user of the user terminal 100 has been already logged in, and instructs the authentication unit 603 to perform two-way authentication with the application server 200a. After the authentication unit 603 finishes the two-way authentication, the control unit 607 receives the server shared key from the authentication unit 603, and stores the received server shared key.

Next, the control unit 607 selects the piece of login information 623 included in the login table 631 and including the received terminal ID, and extracts the user ID and the password from the selected piece of login information 632. The control unit 607 outputs the extracted password and server shared key to the cryptographic processing unit 608, and instructs the cryptographic processing unit 608 to encrypt the password. Then, the control unit 607 receives the encrypted password from the cryptographic processing unit 608. The control unit 607 outputs the application number "001", the terminal ID and the service start request, which are received from the user terminal 100, and the read-out user ID, and the encrypted password received from the cryptographic processing unit 608, to the transmission and reception unit 601. Then, the control unit 607 instructs the transmission and reception unit 601 to transmit them to the first application server 200a.

Next, the control unit 607 receives the application number "001", the terminal ID, the password error signal and the user ID, or the application number "001", the terminal ID and the expense settlement screen data for the terminal, from the application server 200a via the transmission and reception unit 601.

If receiving the application number "001", the terminal ID, the password error signal and the user ID, the control unit 607 reads out the forcible termination screen data from the information storing unit 610. Then, the control unit 607 extracts the user ID and the user name from the piece of the login information 632 including the received user ID.

The control unit 607 generates the forcible termination screen data for the terminal based on the read-out forcible termination screen data, the extracted user ID and the extracted user name, and transmits the received terminal ID and the generated forcible termination screen data for the terminal to the user terminal 100 via the transmission and reception unit 601. Next, the control unit 607 generates an error screen 331 from the received user ID and the error screen data, outputs the error screen 331 to the display unit 613, and notifies the operator of the management server 600 that a password inconsistency happens.

If receiving the application number "001", the terminal ID, and the expense settlement screen data for the terminal, the control unit 607 transmits the received application number "001", terminal ID and expense settlement screen data for the terminal to the user terminal 100 via the transmission and reception unit 601.

Next, the control unit 607 receives the application number "001", the terminal ID, and the encrypted input data from the user terminal 100 via the transmission and reception unit 601. Based on the received terminal ID, the control unit 607 confirms that the user of the user terminal 100 has been already logged in.

Next, the control unit 607 outputs the received encrypted input data and the terminal shared key to the cryptographic processing unit 608, and instructs the cryptographic processing unit 608 to decrypt the encrypted input data. Then, the control unit 607 receives the input data from the cryptographic processing unit 608. Next, the control unit 607 outputs the received input data and the server shared key to the cryptographic processing unit 608, and instructs the cryptographic processing unit 608 to encrypt the input data. The control unit 607 receives the encrypted input data from the cryptographic processing unit 608.

Next, the control unit 607 transmits the application number "001", the received terminal ID, and the encrypted input data received from the cryptographic processing unit 608, to the first application server 200a via the transmission and reception unit 601.

Next, the control unit 607 receives the application number "001", the terminal ID, and the expense settlement end screen data for the terminal from the application server 200a via the transmission and reception unit 601. The control unit 607 transmits the received application number "001", terminal ID, and expense settlement screen data for the terminal to the user terminal 100 via the transmission and reception unit 601.

### (iii) Password Change Control

The control unit 607 performs a password change control, by executing a reception procedure, a password change instruction and a result notification in this order. The following describes the reception procedure, the password change instruction and the result notification.

### (iii-a) Reception Procedure

The control unit 607 receives the application number "005", the terminal ID, and the password change instruction from the user terminal 100 via the transmission and reception unit 601. Then, the control unit 607 confirms that the user of the user terminal 100 has been already logged in.

Next, the control unit 607 reads out the password change screen data from the information storing unit 610, generates the password change screen data for the terminal based on the read-out password change screen data and the piece of the login information 632, and transmits the generated password change screen data for the terminal to the user terminal 100 via the transmission and reception unit 601.

Next, the control unit 607 receives the application number "005", the terminal ID, the encrypted current password, and the encrypted new password from the user terminal 100 via the transmission and reception unit 601. The control unit 607 selects the piece of login information 632 including the received terminal ID, and changes the processing status of the selected piece of the login information 632 to the "changing password".

Next, the control unit 607 outputs the received encrypted current password and encrypted new password, and the terminal shared key to the cryptographic processing unit 608, and instructs the cryptographic processing unit 608 to decrypt the encrypted current password and the encrypted new password. The control unit 607 receives the generated current password and new password from the cryptographic processing unit 608.

Next, the control unit 607 reads out the user ID from the piece of the login information 632, whose processing status has been changed, and searches the password table 621 for the piece of the password information including the read-out user ID and the received current password. If judging that the password table 621 does not include the piece of the password information including the read-out user ID and the received current password, the control unit 607 retransmits the password change screen to the user terminal 100 via the transmission and reception unit 601, and requests the user to reenter the current password and the new password.

If judging that the password table 621 includes the piece of the password information including the read-out user ID and the received current password, the control unit 607 selects the piece of the password information 652 including the read-out user ID from the password change table 651. The control unit 607 changes the current password included in the selected piece of the password information 652 to the current password received from the cryptographic processing unit 608, and changes the new password included in the selected piece of the password information 652 to the new password received from the cryptographic processing unit 608.

### (iii-b) Password Change

Next, the control unit 607 performs the password change for the first application server 200a to the fourth application server 200d in the following manner.

The control unit 607 instructs the authentication unit 603 to perform the two-way authentication with the first application server 200a. After the authentication unit 603 finishes the two-way authentication, the control unit 607 receives the server shared key from the authentication unit 603, and stores therein the server shared key. Next, the control unit 607 extracts the current password and the new password from the piece of the password change information 652, and outputs the extracted current password and new password, and the server shared key generated through the two-way authentication with the first application server 200a, to the cryptographic processing unit 608, and instructs the cryptographic processing unit 608 to encrypts the current password and the new password.

Next, the control unit 607 receives the encrypted current password and the encrypted new password from the cryptographic processing unit 608. The control unit 607 extracts the user ID from the piece of the password change information 652. Then, the control unit 607 outputs the application number "001" corresponding to the first application server 200a, the user ID of the user terminal 100, the extracted user ID, and the received encrypted current password and encrypted new password, to the password changing unit 606. Then, the control unit 607 instructs the password changing unit 606 to perform the password change.

Next, the control unit 607 receives the application number "001", the terminal ID, and the change end signal from the change judging unit 609. If the received change end signal is "1", which indicates the password change success, the control unit 607 judges that the password change for the first application server 200a succeeds.

If the received change end signal is "0", which indicates the password change failure, the control unit 607 judges that the password change for the first application server 200a fails, and cancels the password change for the second application server 200b and later. Then, the processing returns to the password restoration control.

If judging that the password change for the first application server 200a succeeds, the control unit 607 performs the password change for the second application server 200b by executing the two-way authentication, the encryption of the current password and the new password, the instruction of the password change, and the obtainment of the change end signal in this order in the same manner as performed for the first application server 200a.

If the password change for the second application server 200b succeeds, the control unit 607 performs the password change for the third application server 200c in the same manner, and if it fails, the control unit 607 cancels the password change for the third application server 200c and the fourth application server 200d, and performs the password restoration.

If the password change for the third application server 200c succeeds, the control unit 607 performs the password change for the fourth application server 200d, and if it fails, the control unit 607 cancels the password change for the fourth application server 200d and performs the password restoration.

If the password change for the forth application server 200d succeeds, the control unit 607 performs the following result notification, and if it fails, the control unit 607 performs the password restoration.

### (iii-c)Result Notification

If the password changes for all of the first application server 200a to the fourth application server 200d succeeds, the control unit 607 selects, from the password table 621 stored in the information storing unit 610, the piece of the password information including the user ID that has been output to the password changing unit 606. Then, the control unit 607 replaces the password included in the selected piece of the password information with the new password. Next, the control unit 607 selects, from the login table 631, the piece of the login information 632 including the user ID that has been output. Then, the control unit 607 replaces the password including in the selected piece of the login information 632 with the new password.

Next, the control unit 607 generates a completion signal indicating that the password change has been completed, extracts the user ID and the user name from the piece of the login information 632, whose password has been replaced, and outputs the generated completion signal, the user ID and the terminal ID to the change result notifying unit 615. Then, the control unit 607 instructs the change result notifying unit 615 to notify the user terminal 100 of the change result.

Then, the control unit 607 changes the processing status of the piece of the login information to "normal".

### (iv) Password Restoration

If the password change for any of the application servers fails in the middle of the procedure described in (iii), the control unit 607 performs the password restoration.

More specifically, the control unit 607 identifies the application server 200 whose password change has been failed, based on the application number received from the change judging unit 609 with the change end signal "0". If judging that the password change for the first application server 200a to the third application server 200c has been succeeded, and the password change for the fourth application server 200d has been failed, the control unit 607 performs the password restoration for the third application server 200c to the first application server 200a in this order, and performs a failure notification.

If judging that the password change for the first application server 200a and the second application server 200b has been succeeded, and the password change for the third application server 200c has been failed, the control unit 607 performs the password restoration for the second application server 200b and the first application server 200a in this order, and performs the failure notification.

If judging that the password change for the first application server 200a has been succeeded, and the password change for the second application server 200b has been failed, the control unit 607 performs the password restoration for the first application server 200a, and performs the failure notification.

If judging that the password change for the first application server 200a has been failed, the control unit 607 performs only the failure notification.

If the password restoration fails in any of the application servers, the control unit 607 performs an error handling.

The following describes the password restoration for the application server, the failure notification, and the error handling in detail.

### (iv-a) Password Restoration for Application Server

The control unit 607 extracts the current password and the new password from the piece of the password change information 652, outputs the extracted current and new passwords and the server shared key of the relevant application server 200, to the cryptographic processing unit 608, and instructs the cryptographic processing unit 608 to encrypt the current password and the new password. The control unit 607 receives the encrypted current and new passwords from the cryptographic processing unit 608, outputs the application number corresponding to the application server 200, the terminal ID of the user terminal 100, the user ID included in the piece of the password change information 652, and the received encrypted current and new passwords to the password restoring unit 614, and instructs the password restoring unit 614 to perform the password restoration.

Next, the control unit 607 receives the application number, the terminal ID, and the restoration end signal from the change judging unit 609. If the received restoration end signal is "1" indicating that the password restoration has been succeeded, the control unit 607 judges that the password restoration for the application server 200 corresponding to the received application number has been succeeded, and performs the password restoration for the next application server 200, or the failure notification.

If the received restoration end signal is "0" indicating that the password restoration has been failed, the control unit 607 judges that the password restoration for the application server 200 corresponding to the received application number has been failed.

If judging that the password restoration for the application server 200 has been failed, the control unit 607 cancels the password restoration or the failure notification for other application servers, and performs the error handling, which is described later.

### (iv-b) Failure Notification

The control unit 607 generates a failure signal indicating that the password change has failed, selects the piece of login information including the terminal ID received from the change judging unit 609, extracts the user ID and the user name from the selected piece of the login information 632, and outputs the generated failure signal and the extracted user ID and the user name to the change result notifying unit 615. Then, the control unit 607 instructs the change result notifying unit 615 to perform the result notification.

Next, the control unit 607 changes the processing status of the piece of the login information 632 to "normal", and finishes the procedure.

### (iv-c) Error Handling

If judging that the password restoration for any of the application servers has been failed, the control unit 607 reads out the forcible termination screen data from the information storing unit 610, generates the forcible termination screen data for the terminal based on the read-out forcible termination screen data, and the use ID and the user name included in the piece of the login information 632, and transmits the generated forcible termination screen data for the terminal to the user terminal 100 via the transmission and reception unit 601.

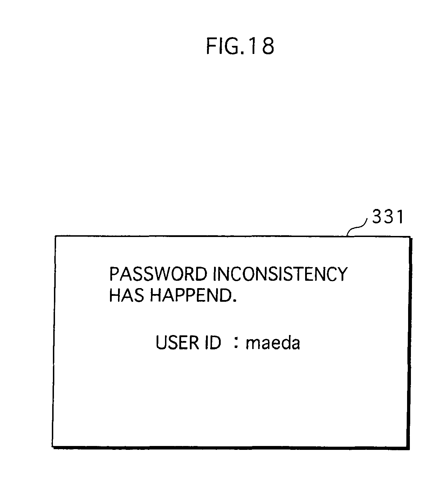

Next, the control unit 607 reads out the error screen data from the information storing unit 610, generates the error screen 331 from the read-out error screen data and the user ID included in the piece of the login information 632, displays the generated error screen 331 on the display unit 613, and notifies the user of that the error has happened. FIG.18 is an example of the error screen 331 displayed at this point of time.

### (v) Logout

The control unit 607 receives the application number "005", the terminal ID, and the logout notification from the user terminal 100 via the transmission and reception unit 601. Upon receiving the logout notification, the control unit 607 transmits the received terminal ID and logout notification to the first application server 200a to the fourth application server 200d via the transmission and reception unit 601. Next, the control unit 607 deletes the piece of the login information including the received terminal ID from the login table 631.

### (8) Change Result Notifying Unit 615

The change result notifying unit 615 receives the completion signal, the user ID, the user name, the terminal ID, and an instruction to perform the result notification, from the control unit 607.

The change result notifying unit 615 also receives the failure signal, the user ID, the user name and the instruction to perform the result notification, from the control unit 607.

If receiving the completion signal, the user ID, the user name, the terminal ID, and the instruction to perform the result notification, the change result notifying unit 615 reads out the change completion screen data from the information storing unit 610, generates the change completion screen data for the terminal based on the read-out change completion screen data, the received user ID and the received user name, and transmits the generated change completion screen data for the terminal to the user terminal 100.

If receiving the failure signal, the user ID, the user name, the terminal ID, and the instruction to perform the result notification, the change result notifying unit 615 reads out the change failure screen data from the information storing unit 610, generates the change failure screen data for the terminal based on the read-out change failure screen data, the received user ID and the received user name, and transmits the generated change failure screen data for the terminal to the user terminal 100 via the transmission and reception unit 301.

### (9) Authentication Unit 603

The authentication unit 603 performs the two-way authentication with external devices connected to the Internet 200 in accordance with the instruction received from the control unit 607, and generates the shared key.

Here, the external device is the user terminal 100 and the application server 200. The authentication unit 603 shares the terminal shared key with the user terminal 100, and shares the server shared key with each application server.

### (10) Cryptographic Processing Unit 608

The cryptographic processing unit 608 performs encryption and decryption of the several kinds of information in accordance with the instruction received from the control unit 607.

More specifically, the cryptographic processing unit 608 receives, from the control unit 607, the encrypted password and the terminal shared key, or the encrypted input data and the terminal shared key, or the encrypted current password and the encrypted new password and the terminal shared key. The cryptographic processing unit 608 applies the decryption algorithm *D1* to the received encrypted password, encrypted input data, encrypted current password, and encrypted new password with use of the received terminal shared key to generate the password, and outputs the generated password to the control unit 607.

The cryptographic processing unit 608 also receives the password and the server shared key, or the input data and the server shared key, or the current password and the new password and the server shared key. the cryptographic processing unit 608 applies the encryption algorithm E3 to the received password, input data, current password, and the new password with use of the received server shared key to generate the encrypted password, the encrypted input data, the encrypted current password, and the encrypted new password respectively, and outputs the generated encrypted password, encrypted input data, encrypted current password, and encrypted new password to the control unit 607.

### 1.5 Operations by Password Changing System

The following describes the operations performed by the password changing system.

### (1) Operations by User Terminal 100

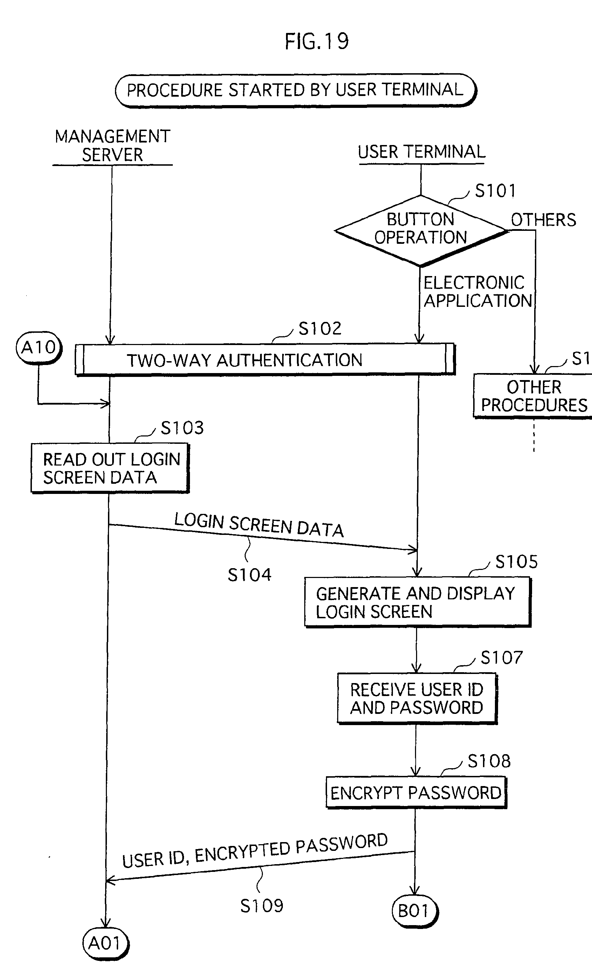

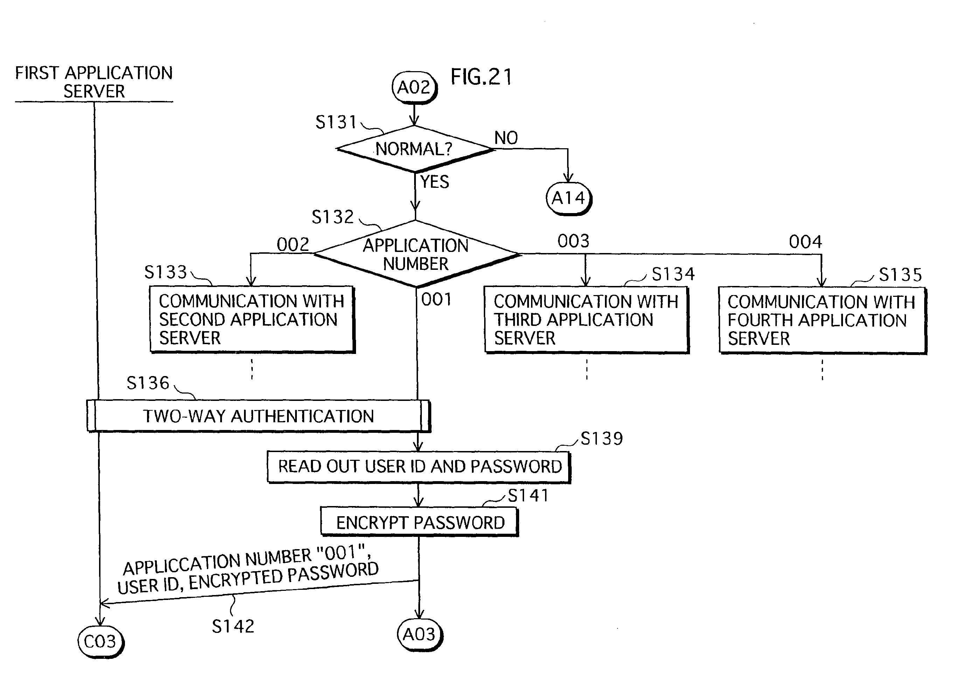

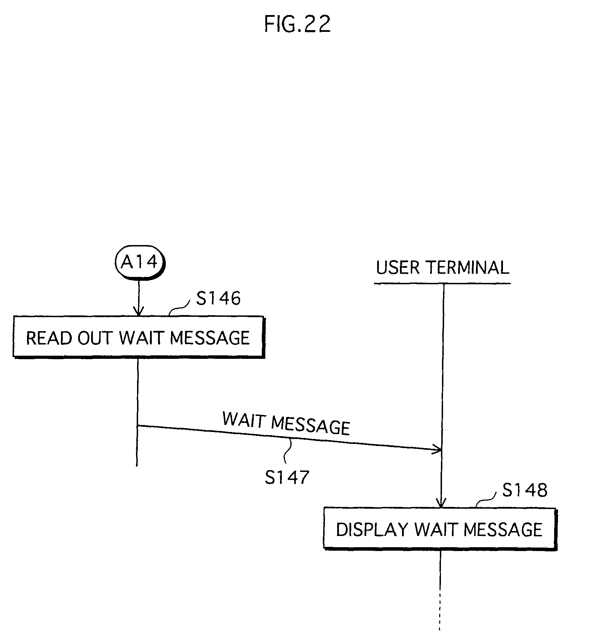

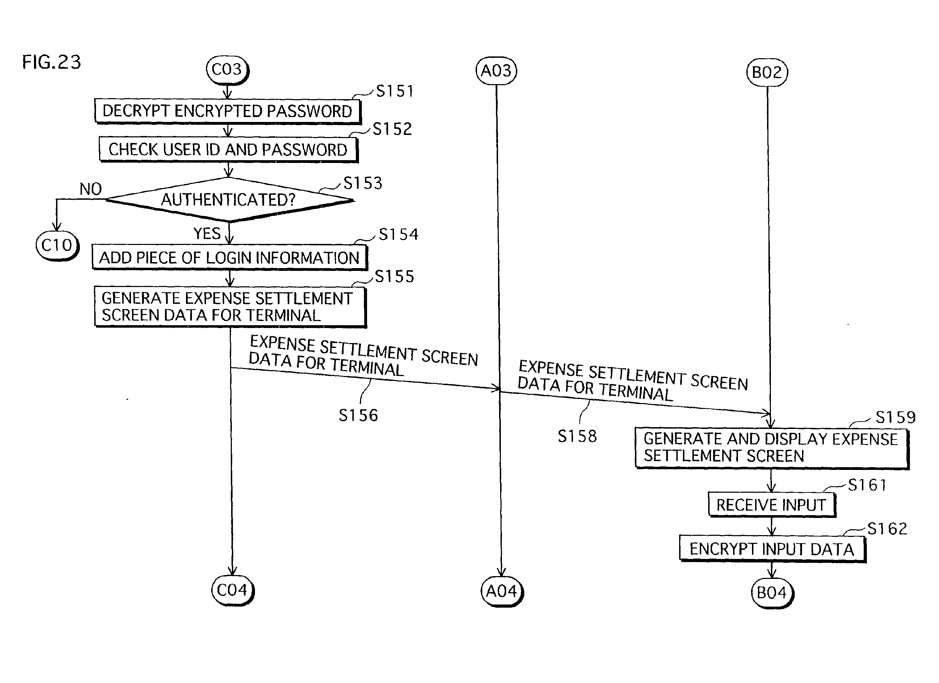

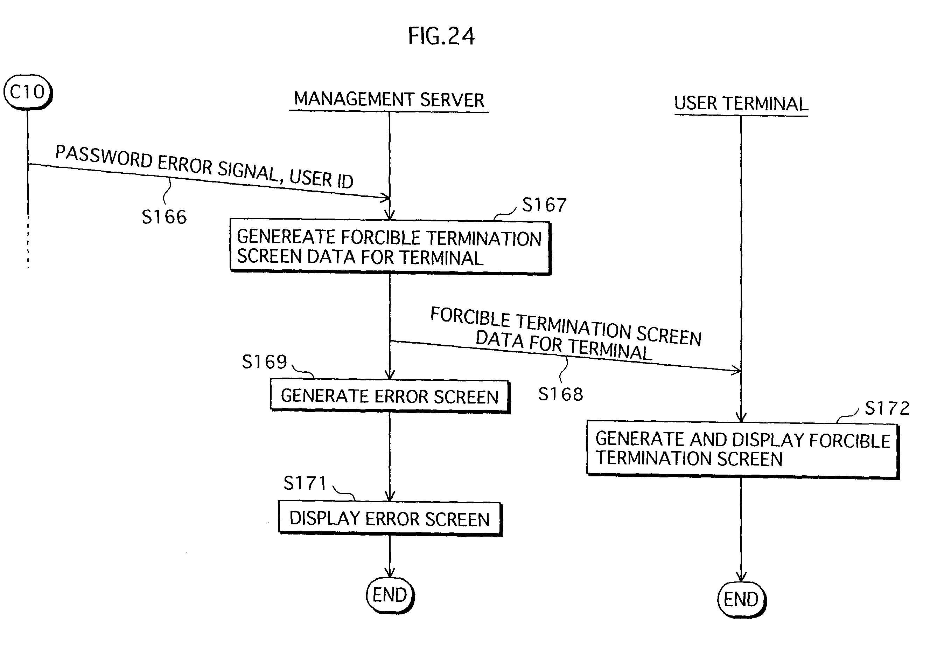

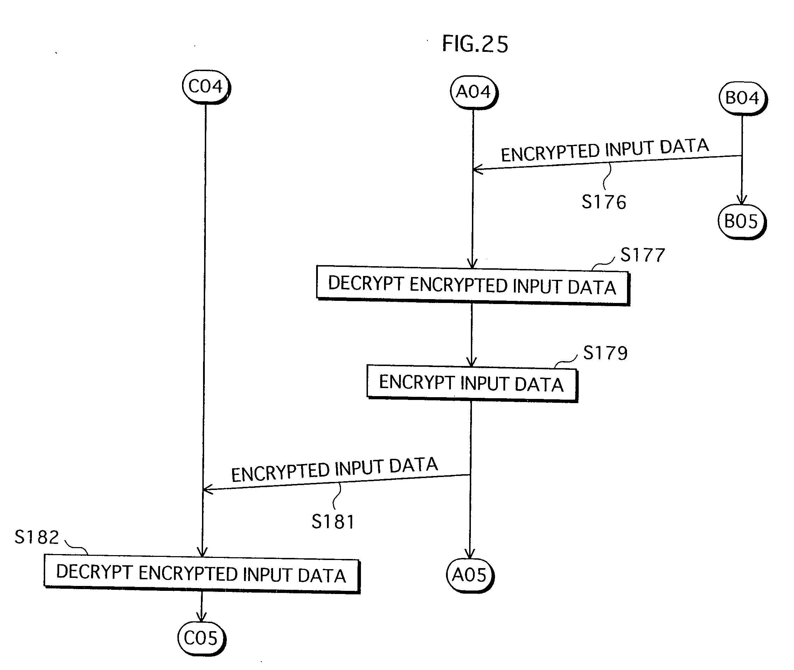

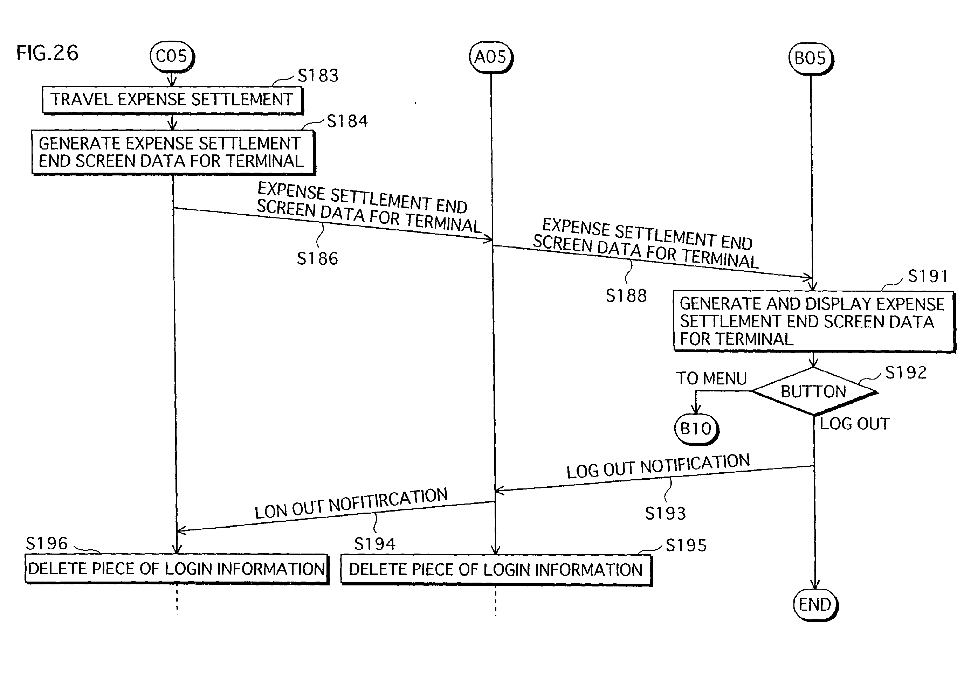

The following describes the procedures performed by the user terminal 100, with reference to the flowcharts shown in FIG.19 to FIG.26. In the following operations, although not specifically illustrated, the application number of the application server 200 or the management server 600 which performs the operation and the terminal ID of the user terminal 100 are transmitted and received with the several kinds of information among the devices.

The user terminal 100 receives button operations from the user (Step S101). If the user terminal 100 receives a button operation indicating the electronic application, the processing goes to Step S102. If receiving other button operations, the user terminal 100 performs other procedures (Step S100).

The user terminal 100 performs the two-way authentication with the management server 600, and shares the terminal shared key (Step S102).

After the two-way authentication finishes, the management server 600 reads out the login screen data (Step S103), and transmits the read-out login screen data to the user terminal 100 (Step S104).

The user terminal 100 receives the login screen data from the management server 600, generates the login screen 151 from the received login screen data, and displays the generated login screen 151 on the monitor (Step S105). Next, the user terminal 100 receives the user ID and the password input by the user (Step S107), and encrypts the received password using the terminal shared key to generate the encrypted password (Step S108). The user terminal 100 transmits the user ID and the generated encrypted password to the management server 600 via the Internet 20 (Step S109).

The management server 600 receives the user ID and the encrypted password via the Internet 20, and decrypts the received encrypted password using the terminal shared key to generate the password (Step S111). Then, the management server 600 checks whether the piece of password information including the received user ID and the received password exists in the password table 621 (Step S112) . If the piece of the password information including the received user ID and the received password does not exist, the management server 600 judges that the authentication fails (Step S113: NO), and the processing returns to Step S103. If the piece of the password information including the received user ID and the received password exists, the management server 600 judges that the authentication succeeds (Step S113: YES), and generates the piece of the login information 632 based on the piece of the password information including the received user ID, the received password and the received terminal ID of the user terminal 100. Then, the management server 600 adds the generated piece of the login information 632 into the login table 631 (Step S115).

Next, the management server 600 reads out the menu screen data from the information storing unit 610, generates the menu screen data for the terminal based on the read-out menu screen data and the piece of the login information 632, which has been added into the login table 631 (Step S116), and transmits the generated menu screen data for the terminal to the user terminal 100 via the Internet 20 (Step S117).

The user terminal 100 receives the menu screen data for the terminal via the Internet 20, generates the menu screen 161 from the received menu screen data for the terminal, and displays the menu screen 161 on the monitor (Step S121). Next, the user terminal receives the menu selection by the user (Step S122).

If the password change is selected by the user with the button operation (Step S122), the processing goes to the password change (Step S127).

If the travel expense settlement service is selected by the user (Step S122), the user terminal 100 reads out the application number "001" (Step S123) . If the vacation request service is selected by the user (Step S122), the user terminal 100 reads out the application number "002" (Step S124) . If the conference room reservation service is selected by the user (Step S122), the user terminal 100 reads out the application number "003" (Step S125) . If the employee purchase service is selected by the user (Step S122), the user terminal 100 reads out the application number "004" (Step S126). Then, the user terminal 100 transmits the read-out application number and the service start request to the management server 600 (Step S128).

The management server 600 receives the application number and the service start request from the user terminal 100 via the Internet 20. The management server 600 selects the piece of the login information 632 including the terminal ID received with the service start request, and checks whether the processing status included in the selected piece of the login information 632 is "normal" (Step S131). If judging that the processing status is not "normal" (Step S131: NO), the management server 600 reads out the wait message from the information storing unit 610 (Step S146), and transmits the read-out wait message to the user terminal 100 via the Internet 20 (Step S147).

The user terminal 100 receives the wait message from the management server 600, and displays the received wait message (Step S148).

If judging that the processing status included in the selected piece of the login information 632 is "normal" (Step S131: YES), the management server 600 identifies the received application number (Step S132). If judging that the application number is "002" (Step S132: 002), the management server 600 starts communication with the second application server 200b. If judging that the application number is "003" (Step S132: 003), the management server 600 starts communication with the third application server 200c. If judging that the application number is "004" (Step S132: 004), the management server 600 starts communication with the fourth application server 200d (Step S135).

If judging that the application number is "001" (Step S132: 001), the management server 600 starts communication with the first application server 200a. Firstly, the management server 600 performs the two-way authentication with the first application server 200a, and shares the server shared key with the first application server 200a (Step S136).

Next, the management server 600 reads out the use ID and the password, which are included in the selected piece of the login information 632 (Step S139), and encrypts the read-out password using the serve shared key to generate the encrypted password (Step S141) . The management server 600 transmits the received service start request, application number "001", the read-out user ID, and the generated encrypted password to the first application server 200a (Step S142).

The first application server 200a receives the service start request, the application number "001", the user ID and the encrypted password from the management server 600 via the Internet 20, and decrypts the received encrypted password using the server shared key to generate the password (Step S151) . The first application server 200a checks whether the piece of the password information including the received user ID and the generated password exists in the password table 221 (Step S152). If the piece of the password information including the received user ID and the generated password does not exist, the first application server 200a judges that the authentication has been failed (Step S153: NO), and transmits the received ID and the password error signal, which represents that the password stored in the management server 600 is not the same as the password stored in the first application server 200a, to the management server 600 via the Internet (Step S166).

The management server 600 receives the password error signal and the user ID from the first application server 200a, generate the forcible termination screen data for the terminal (Step S167), transmits the generated forcible termination screen data for the terminal to the user terminal 100 (Step S168). Next, the management server 600 generates the error screen 331 (Step S169), and displays the generated error screen 331 on the display unit 613 to notify the operator that the password inconsistency happens (Step S171).

The user terminal 100 receives the forcible termination screen data for the terminal from the management server 600 via the Internet 20, generates the forcible termination screen 321 from the received forcible termination screen data for the terminal, and displays the generated forcible termination screen 321 on the monitor (Step S172). Then, the user terminal 100 finishes the procedure.

If the piece of the password information 223 including the received user ID and the generated password exists in the password table 221, the first application server 200a judges that the authentication has been succeeded (Step S153: YES), generates the piece of the login information 232 based on the piece of the password information 223 and the terminal ID which is received with the service start request, and adds the generated piece of the login information 232 into the application login table 231 (Step S154).

Next, the first application server 200a generates the expense settlement screen data for the terminal (Step S155), and transmits the generated expense settlement screen data for the terminal to the management server 600 (Step S156).

The management server 600 receives the expense settlement screen data for the terminal from the first application server 200a via the Internet 20, and transmits the received expense settlement screen data for the terminal to the user terminal 100 (Step S158).

The user terminal 100 receives the expense settlement screen data for the terminal from the management server 600 via the Internet 20, generates the expense settlement screen 171 from the received expense settlement screen data for the terminal, and displays the expense settlement screen 171 on the monitor (Step S159). The user terminal 100 receives data input by the user (Step S161), and encrypts the input data using the terminal shared key to generate the encrypted input data (Step S162). Then, the user terminal 100 transmits the generated encrypted input data to the management server 600 (Step S176).

The management server 600 receives the encrypted input data from the user terminal 100 via the Internet 20, and decrypts the received encrypted data to generate the input data (Step S177). Then, the management server 600 encrypts the generated input data using the server shared key to generate the encrypted input data (Step S179) , and transmits the generated encrypted input data to the first application server 200a (Step S181).

The first application server 200a receives the encrypted input data via the Internet 200, and decrypts the received encrypted input data using the server shared key to generate the input data (Step S182). Then the first application server 200a performs the travel expense settlement based on the generated input data (Step S183). After finishing the travel expense settlement, the first application server 200a generates an expense settlement end screen data for the terminal (Step S184), and transmits the generated expense settlement end screen data for the terminal to the management server 600 (Step S186).

The management server 600 receives the expense settlement end screen data for the terminal from the first application server 200a via the Internet 20, and transmits the received expense settlement end screen data for the terminal to the user terminal 100 (Step S188) .

The user terminal 100 receives the expense settlement end screen data for the terminal from the management server 600 via the Internet 20, generates the expense settlement end screen 181 from the received expense settlement end screen data, and displays the generated expense settlement end screen 181 on the monitor (Step S191) . Then, the user terminal 100 receives the button operation by the user (Step S192). If the user terminal 100 detects that the menu button 182 is pressed, the processing returns to Step S121 and the user terminal 100 receives the menu selection by the user.

If detecting that the logout button 183 is pressed (Step S192), the user terminal 100 transmits the logout notification representing the logout to the management server 600 (Step S193).

The management server 600 receives the logout notification from the user terminal 100 via the Internet 20, and transmits the received logout notification to the first application server 200a (Step S194). Then, the management server 600 selects the piece of the login information 632 including the terminal ID that is received with the logout notification, and delete the selected piece of the login information 632 from the login table 631 (Step S195). Although not illustrated, the management server 600 transmits the logout notification to the second application server 200b and the third application server 200c as well.

The application server 200a receives the logout notification from the management server 600 via the Internet 20. The application server 200a searches for the piece of the login information including the terminal ID received with the logout notification. If the piece of the login information 232 including the received terminal ID exists, the application server 200a deletes the piece of the login information 232 from the application login table 231 (Step S196). In the same manner, the second application server 200b to the fourth application server 200d delete the piece of the login information, if any, from their respective application login tables.

### (2) Password Change by Management Server 600

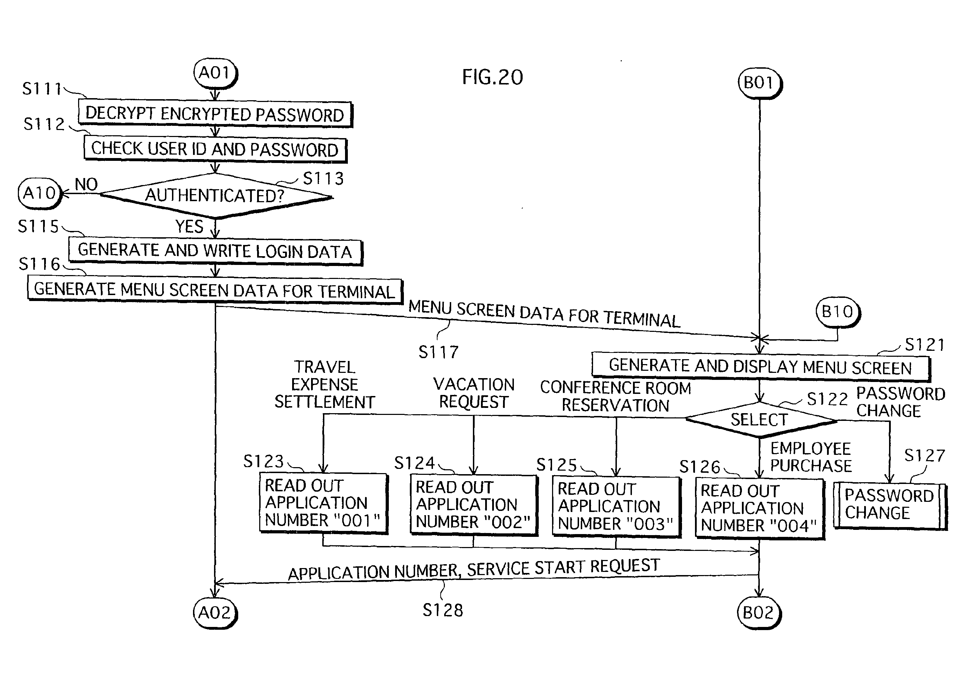

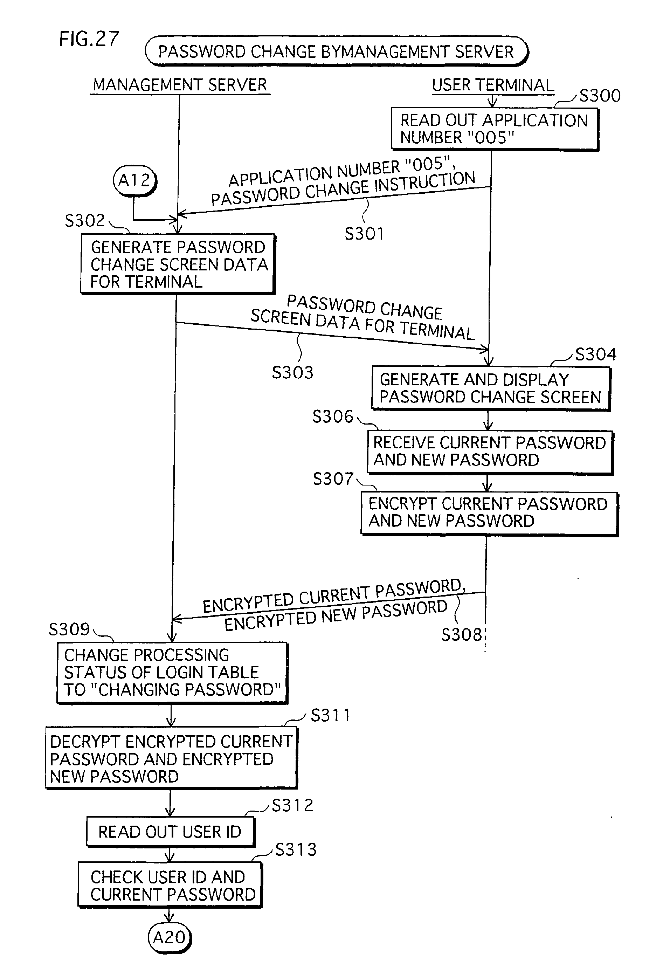

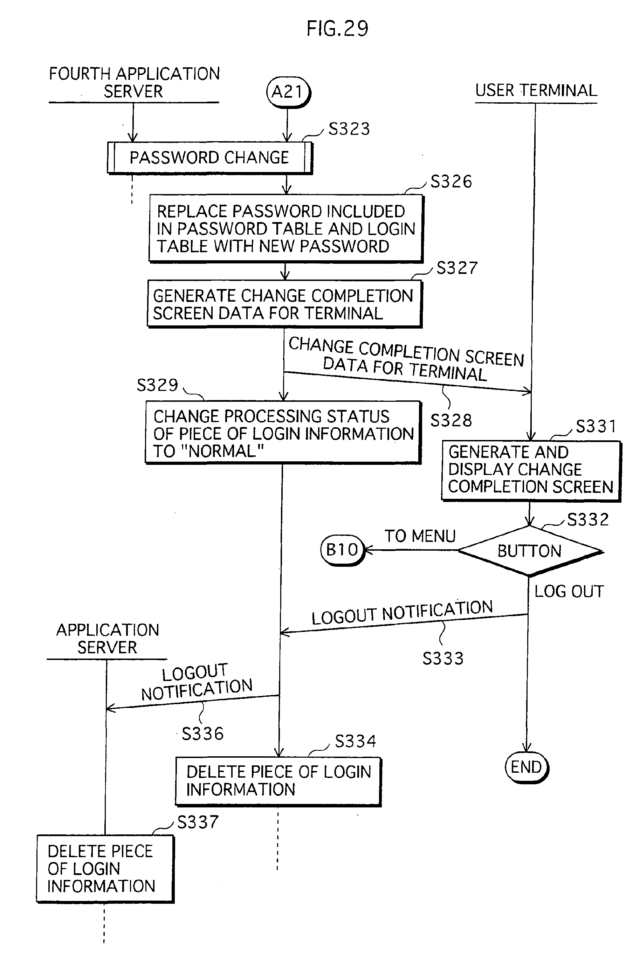

The following describes the password change performed by the management server 600, with reference to flowcharts shown in FIG.27 to FIG.29. This describes Step S127 in FIG.20 in detail.

The user terminal 100 reads out the application number "005" (Step S300), and transmits the read-out application number "005" and the password change instruction to the management server 600 (Step S301).

The management server 600 receives the application number "005" and the password change instruction via the Internet 20. Receiving the password change instruction, the management server 600 generates the password change screen data for the terminal (Step S302), and transmits the generated password change screen data for the terminal to the user terminal 100 (Step S303).

The user terminal 100 receives the password change screen data from the management server 600 via the Internet 20, generates the password change screen 191 from the received password change screen data for the terminal, and displays the password change screen 191 on the monitor (Step S304). Then, the user terminal 100 receives the current password and the new password input by the user (Step S306). The user terminal 100 encrypts the received current password and the new password using the terminal shared key to generate the encrypted current password and the encrypted newpassword (Step S307) . Then, the user terminal 100 transmits the generated encrypted current password and encrypted new password to the management server 600 (Step S308).

The management server 600 receives the encrypted current password and the encrypted new password from the user terminal 100 via the Internet 20. The management server 600 selects the piece of the login information 632 in the login table 631, based on the terminal ID received with the encrypted current password and the encrypted new password, and changes the processing status in the selected piece of the login information 632 to "changing password" (Step S309).

Next, the management server 600 decrypts the received encrypted current password and encrypted new password using the terminal shared key to generate the current password and the new password (Step S311). The management server 600 reads out the user ID from the piece of the login information 632 whose processing status has been changed (Step S312), and checks whether the piece of the password information including the read-out user ID and the generated current password exists in the password table 621 (Step S313).

If the piece of the password information including the read-out user ID and the generated current password does not exist in the password table 621, the management server 600 judges that the authentication has been failed (Step S316: NO), and the processing returns to Step S302. Then, the management server 600 retransmits the password change screen data for the terminal.

If the piece of the password information including the read-out user ID and the generated current password exists in the password table 621, the management server 600 judges that the authentication has been succeeded (Step S316: YES).

Next, the management server 600 selects the piece of the password change information including the read-out user ID and the generated current password from the password change table 651 (Step S317), and replaces the current password and the new password included in the selected piece of the password change information 652 with the generated current password and the generated new passwordrespectively (Step S318).

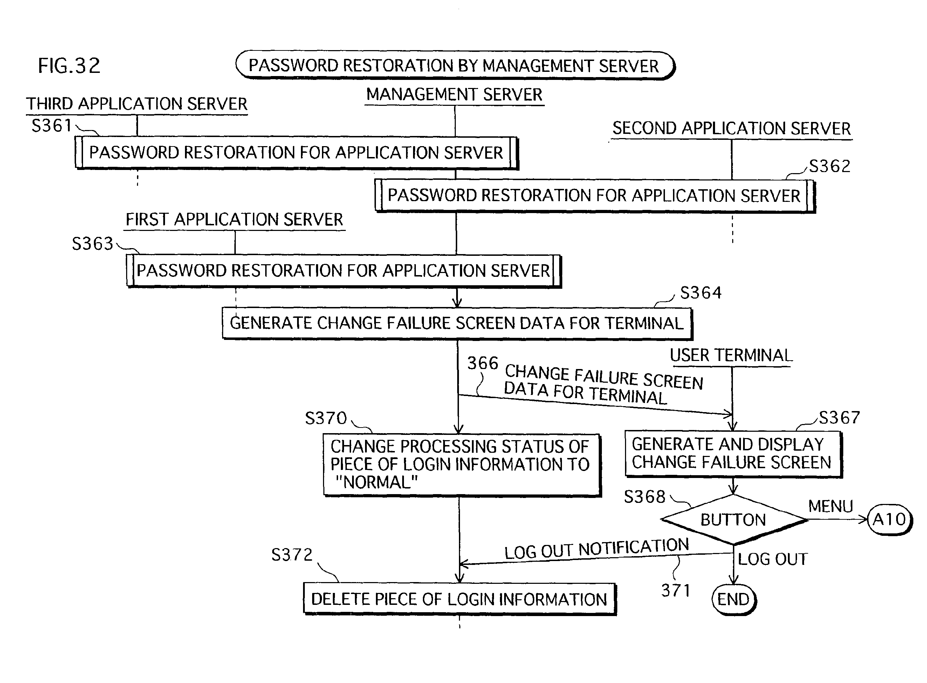

Next, the management server 600 performs the password change for the first application server 200a (Step S319) . If the password change for the first application server 200a finishes successfully, the management server 600 performs the password change for the second application server 200b (Step S321). If the password change for the first application server 200a does not finish successfully, the processing goes to Step S364 shown in FIG.32, which is the step of the password restoration. If the password change for the second application server 200b finishes successfully, the management server 600 performs the password change for the third application server 200c (Step· S322) . If the password change for the second application server 200b does not finish successfully, the processing goes to Step S363 shown in FIG.32. If the password change for the third application server 200c finishes successfully, the management server 600 performs the password change for the fourth application server 200d (Step S323). If the password change for the third application server 200c does not finish successfully, the processing goes to Step S362 shown in FIG.32. If the password change for the fourth application server 200d does not finish successfully, the processing goes to Step S361 shown in FIG.32.

If the password change for all of the first application server 200a to the fourth application server 200d finishes successfully, the management server 600 selects the piece of the password information including the user ID, which the management server 600 has transmitted, from the password table 621, and replaces the password included in the selected piece of the password information with the new password. Also, the management server 600 selects the piece of the login information 632 including the user ID, which the management server 600 has transmitted, from the login table 631, and replaces the password included in the selected piece of the login information 632 with the new password (Step S326).

Next, the management server 600 generates the change completion screen data for the terminal (Step S327), transmits the generated change completion screen data for the terminal to the user terminal 100 (Step S328), and changes the processing status of the piece of the login information 632 to "normal" (Step S329).

The user terminal 100 receives the change completion screen data for the terminal from the management server 600 via the Internet 20, generates the change completion screen 301 from the received change completion screen data for the terminal, and displays the generated change completion screen 301 on the monitor (Step S331). Then, the user terminal 100 receives the button operation by the user (Step S332). If the user terminal 100 detects that the menu button 302 is pressed, the processing returns to step S121, and the user terminal 100 displays the menu screen.

If detecting that the logout button 303 is pressed, the user terminal 100 transmits the logout notification to the management server 600, and finishes the procedure (Step S333).

The management server 600 receives the logout notification from the user terminal 100 via the Internet 20. The management server 600 transmits the received logout notification to the first application server 200a to the fourth application server 200d (Step S336). Next the management server 600 selects the piece of the login information 632 based on the terminal ID received with the logout notification, and deletes the selected piece of the login information 632 (Step S334).

The application server 200 receives the logout notification from the management server 600, and searches the application login table 231 for the piece of the login information including the terminal ID that is received with the logout notification. If the piece of the login information including the received terminal ID exists in the application login table 231, the application server 200 deletes the piece of the login information (Step S337).

### (3) Password Change by Application Server 200

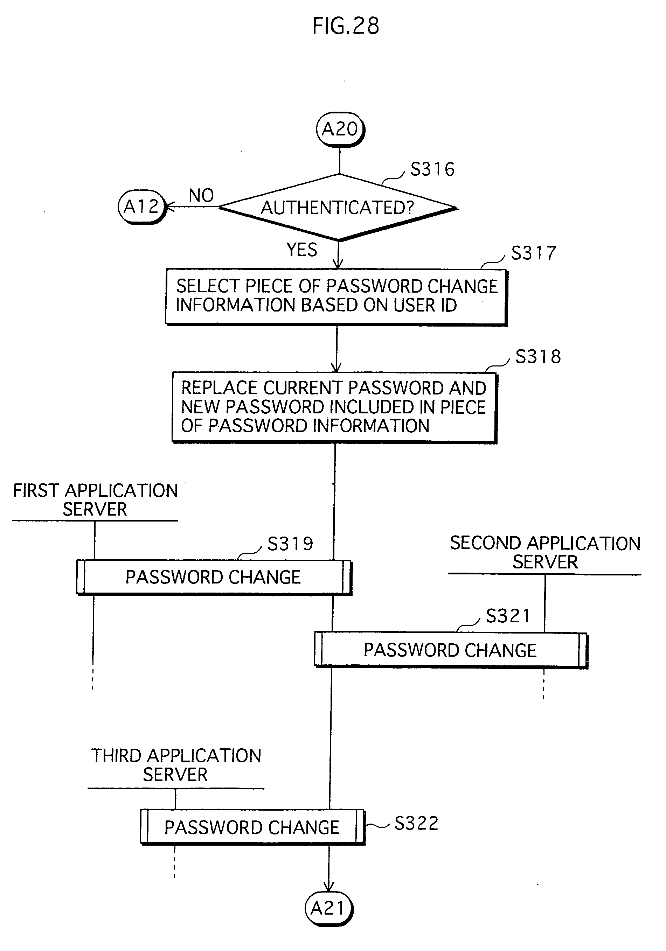

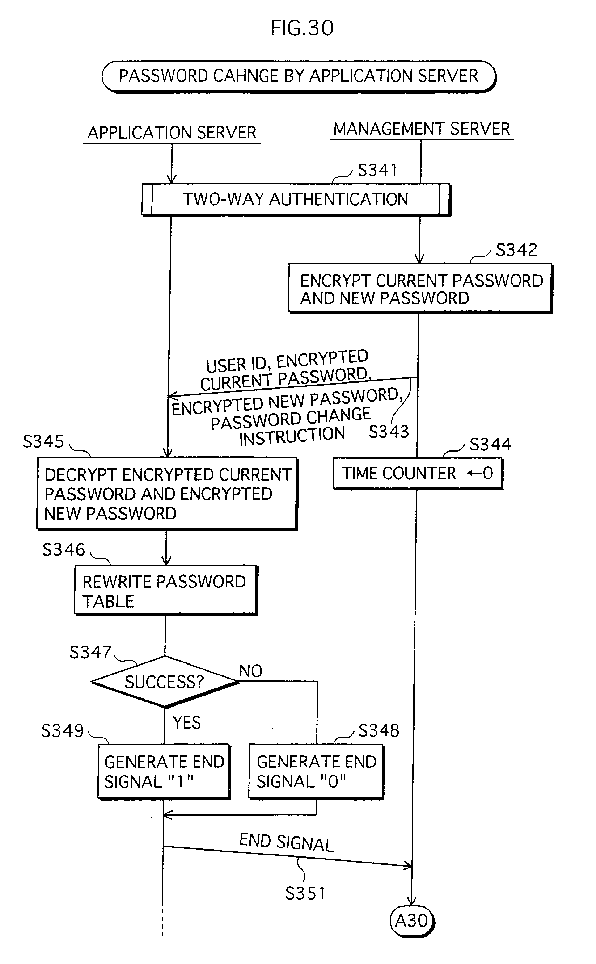

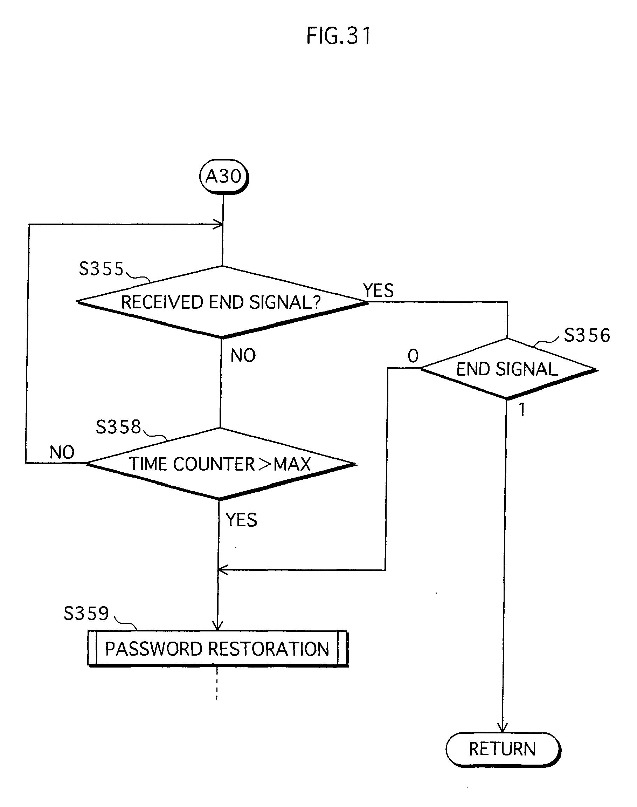

The following describes the password change performed by each application server 200, with reference to the flowcharts shown in FIG.30 and FIG.31. This explains Step S319, Step S321, Step S322 and Step S323 shown in FIG.28 in detail.

The management server 600 performs the two-way authentication with the application server 200, and generates the server shared key (Step S341). The management server 600 extracts the user ID, the current password, and the new password from the piece of the password change information 652, which has been replaced in Step S318, and encrypts the extracted current password and new password using the server shared key to generate the encrypted current password and the encrypted new password (Step S342). The management server 600 transmits the extracted user ID and the generated encrypted current password and encrypted new password to the application server 200, and instructs the application server to perform the password change (Step S343). Then, the management server 600 sets "0" to the time counter for counting the elapsed time from the time when the password change instruction is transmitted, and starts counting the elapsed time (Step S344).

The application server 200 receives the user ID, the encrypted current password, and the encrypted new password from the management server 600 via the Internet 20, and receives the instruction to perform the password change. The application server 200 decrypts the received encrypted current password and encrypted new password using the server shared key to generate the current password and the new password (Step S345).

The application server 200 selects the piece of the password information 223 from the password table 221, which includes the received user ID, and replaces the password included in the selected piece of the password information 223 with the new password (Step S346). If judging that the password replacement succeeds (Step S347: YES), the application server 200 generates the end signal "1" (Step S349). If judging that the password replacement fails (Step S347: NO), the application server 200 generates the end signal "0" (Step S348).

Next, the application server 200 transmits the generated end signal to the management server 600 via the Internet 20 (Step S351).

Upon receiving the end signal from the application server 200 (Step S335 YES), the management server 600 identifies the received end signal (Step S356). If judging that the received end signal is "1" , the management server 600 finishes the password change for the application server 200.

If judging that the received end signal is "0" (Step S356: "0"), the management server 600 performs the password restoration (Step S359).

If having not received the end signal from the application server 200 (Step S355: NO), the management server 600 compares the value of the time counter with the maximum waiting time (Step S358) . If the management server 600 judges that the value of the time counter is not more than the maximum waiting time (Step S358: NO), the processing returns to Step S355, and the management server 600 repeats Steps S355 to S358 until receiving the end signal from the application server 200, or the value of the time counter becomes more than the maximum waiting time.

If judging that the value of the time counter is more than the maximum waiting time (Step S358: YES), the management server 600 judges that the password change for the application server 200 has failed, and performs the password restoration (Step S359).

### (4) Password Restoration by Management Server 600

The following describes the password restoration performed by the management server 600, with reference to the flowchart show in FIG.32. This explains Step S359 in FIG.31 in detail.

If Step S319 in FIG.28 is in progress, the management server 600 performs the password restoration from Step S364. If Step S321 is in progress, the management server 600 performs the password restoration from Step S363. If Step S322 is in progress, the management server 600 performs the password restoration from Step S362. If Step S323 is in progress, the management server 600 performs the password restoration from Step S361.

The management server 600 performs the password restoration for the third application server 200c (Step S361). If Step S361 finishes successfully, the management server 600 performs the password restoration for the second application server 200b (Step S362) . If Step S362 finishes successfully, the management server 600 performs the password restoration for the first application server 200a (Step S363).

If Step S363 finishes successfully, the management server 600 generates the change failure screen data for the terminal based on the change failure screen data and the piece of the login information 632 (Step S364), and transmits the generated change failure screen data for the terminal to the user terminal 100 (Step S366).

The user terminal 100 receives the change failure screen data for the terminal from the management server 600 via the Internet 20, generates the change failure screen 311 from the received change failure screen data for the terminal, and displays the generated change failure screen 311 on the monitor (Step S367) . Then, the user terminal 100 receives the button operation by the user (Step S368) . If the user terminal 100 detects that the menu button 312 is pressed, the processing goes to Step S121.

If detecting that the logout button 313 is pressed, the user terminal 100 transmits the logout notification to the management server 600 (Step S371).

The management server 600 receives the logout notification from the user terminal 100 via the Internet 20, selects the piece of the login information 632 based on the terminal ID received with the logout notification, and deletes the selected piece of the login information 632 (Step S372).

Although not illustrated, the management server 600 transmits the received logout notification to the application server 200. The application server 200 receives the logout notification from the management server 600 via the Internet 20, and searches the application login table 231 for the piece of the login information including the terminal ID received with the logout notification. If the piece of the login information including the terminal ID exists, the application server 200 deletes the piece of the login information.

### (5) Password Restoration by Application Server 200

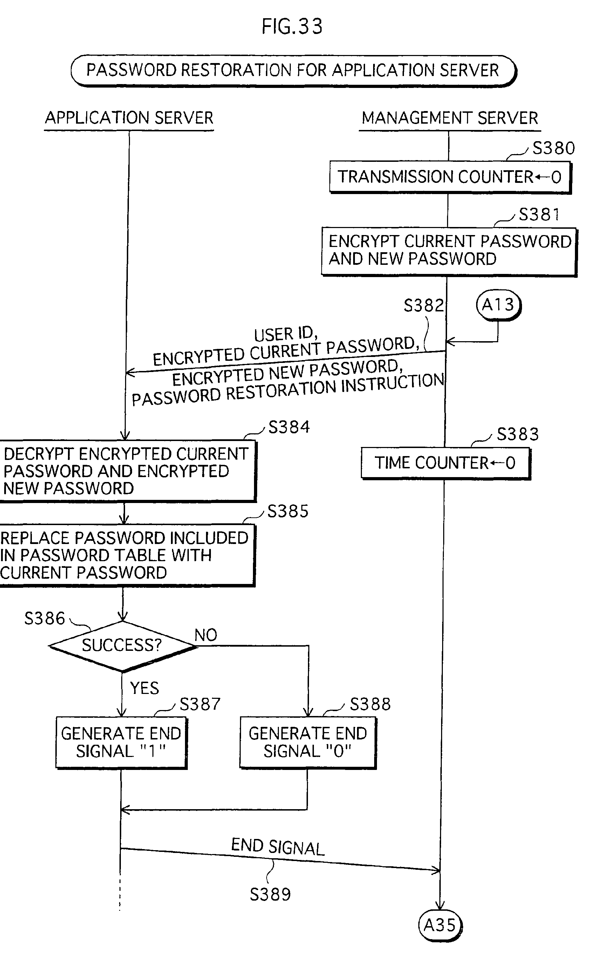

The following describes the password restoration performed by the application server 200, with reference to the flowchart shown in FIG.33. This explains the Step S361, Step S362, and Step S363 shown in FIG.32 in detail.

The management server 600 sets "0" to the transmission counter that is used for counting the number of the transmission of the password restoration instructions (Step S380). Then, the management server 600 reads out the user ID, the current password and the new password included in the piece of the password change information 652, and encrypts the read-out current password and new password using the server shared key to generate the encrypted current password and the encrypted new password (Step S381). The management server 600 transmits the read-out user ID and the generated encrypted current password and encrypted new password to the application server 200, and instructs the application server 200 to perform the password decryption (Step S382). The management server 600 sets "0" to the transmission counter that is used for counting the number of the transmission of the password restoration instructions, and starts counting the elapsed time (Step S383).

The application server 200 receives the user ID, the encrypted current password, the encrypted new password from the management server 600 via the Internet 20, and receives the instruction to perform the password restoration. The application server 200 decrypts the received encrypted current password and encrypted new password using the server shared key to generate the current password and the new password (Step S384). The application server 200 selects the piece of the password information including the received user ID and the generated new password from the password table 221, and replaces the password included in the selected piece of the password information with the new password (Step S385).

If the replacement of the password succeeds (Step S386: YES), the application server 200 generates the end signal "1" (Step S387) . If the replacement of the password fails (Step S386: NO), the application server 200 generates the end signal "0" (Step S388). Next, the application server 200 transmits the generated end notification to the management server 600 (Step S389).

If receiving the end signal from the application server 200 via the Internet 20 (Step S391: YES), the management server 600 identifies the received end signal (Step S392). If judging that the received end signal is "1", the management server 600 finishes the password restoration for the application server 200 successfully.

If the management server 600 judges that the received end signal is "0" (Step S392), the processing goes to Step S396.

If not receiving the end signal from the application server 200 (Step S391: NO), the management server 600 compares the value of the time counter and the maximum waiting time (Step S394). If the management server 600 judges that the value of the time counter isnotmorethanthemaximumwaitingtime (Step S394 : NO), the processing returns to Step S391, and the management server 600 repeats Steps S391 to S394 until receiving the end signal from the application server 200, or the value of the time counter becomes more than the maximum waiting time.

If judging that the value of the time counter is more than the maximum waiting time (Step S394: YES), the management server 600 adds one to the value of the transmission counter (Step S396). Then, the management server 600 compares the value of the transmission counter and the maximum transmission number (Step S397). If the value of the transmission counter is not more than the maximum transmission number (Step S397: NO), the processing goes to Step S382.

If the value of the transmission counter is more than the maximum transmission number (Step S397 : YES), the management server 600 judges that the password restoration hasfailed. Then, the management server 600 generates the forcible termination screen data for the terminal (Step S398), and transmits the generated forcible termination screen data for the terminal to the user terminal 100 (Step S399).

Next, the management server 600 generates the error screen 311 (Step S402), and displays the generated error screen 311 on the display unit 613 (Step S403).

The user terminal 100 receives the forcible termination screen data for the terminal from the management server 600 via the Internet 20. The user terminal 100 generates the forcible termination screen 321 from the received forcible termination screen data for the terminal, and displays the generated forcible termination screen 321 on the monitor (Step S401). Then, the user terminal 100 finishes the procedure.

### (6) Two-way Authentication

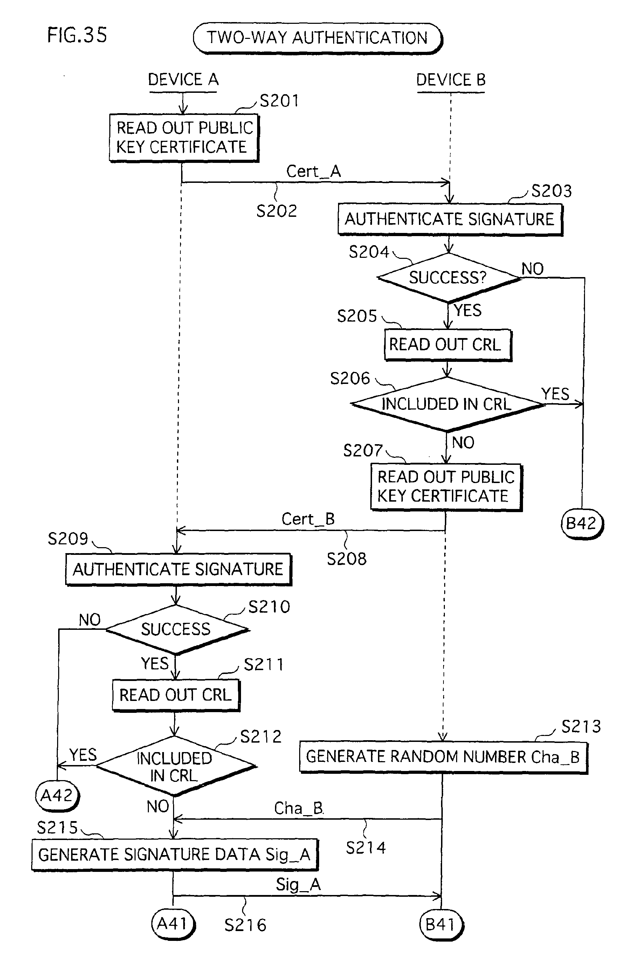

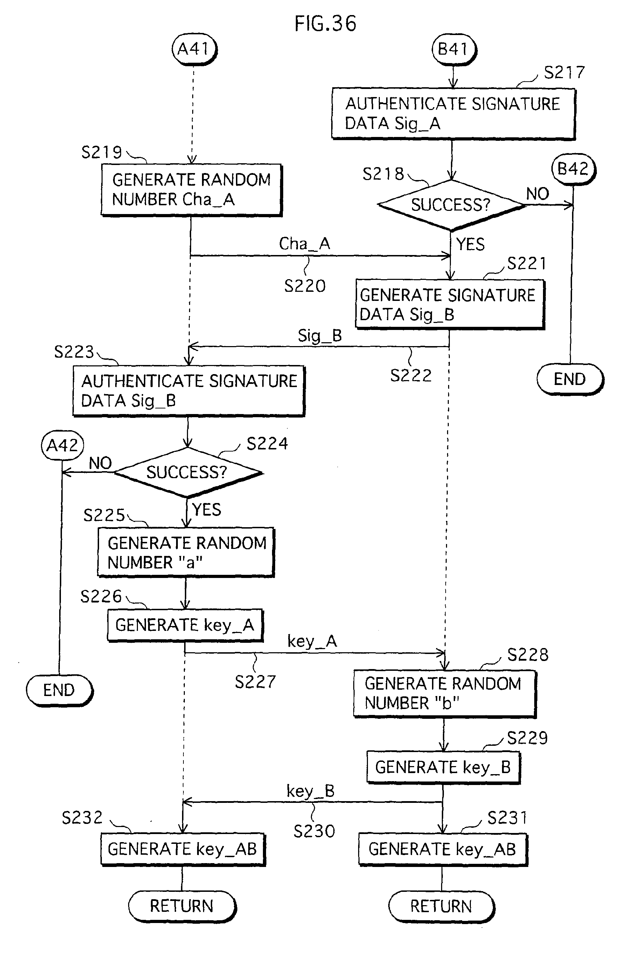

The following describes the two-way authentication performed among devices, with reference to FIG. 35 and FIG.36.

Note that this authentication method described below is only an example, and other authentication methods or other key sharing methods may be used. In this specification, the two-way authentication is performed between the user terminal 100 and the management server 600, and between the management server 600 and the application server 200. Therefore, the two devices between which the two-way authentication is performed are respectively called a device A and a device B in the following explanations. In the description above, the shared key generated through the two-way authentication between the user terminal 100 and the management server 600 is called "the terminal shared key", and the shared key generated through the two-way authentication between the management server 600 and the application server 200 is called "the server shared key" .

Here, assume that *Gen()* is a key generating function, *Y* is a parameter that is unique to the system, and *Gen(x, Gen(z, Y))= Gen (z, Gen (x, Y)).* The key generating function can be carried out with a publicly known technique, and therefore it is not describe here in detail.

The device A reads out a public key certificate *Cert_A* (Step S201), and transmits the read-out public key certificate *Cert_A* to the device *B* (Step S202).

Using a public key *PK_CA* of the certificate authority, the device *B*, which has received the public key certificate *Cert_A*, applies a signature data authentication algorithm Vto signature data *Sig_CA,* which is included in the received public key certificate *Cert_A*, to authenticate the signature data (Step S203). Here, the signature data authentication algorithm *V* is an algorithm used for authenticating signature data generated by the signature generation algorithm *S.* If the authentication fails (Step S204 : NO), the device *B* finishes the procedure.

If the authentication succeeds (Step S204: YES), the device *B* reads out the CRL (Step S205), and judges whether an ID number *ID_A* included in the received public key certificate *Cert_A* is included in the read-out CRL (Step S206). If judging that the ID number *ID_A* is included in the CRL (Step S206: YES), the device *B* finishes the procedure.

If the ID number *ID_A* is not included in the CRL (Step S206: NO), the device *B* reads out a public key certificate *Cert_B* (Step S207), and transmits the read-out public key certificate *Cert_B* to the device A.

Using the public key *PK_*CA of the certificate authority, the device A, which has received the public key certificate *Cert*_*B*, applies the signature data authentication algorithm V to the signature data *Sig_CA,* which is included in the received public key certificate *Cert_B,* to authenticate the signature data (Step S209). If the authentication fails (Step S210: NO), the device A finishes the procedure.

If the authentication succeeds (Step S210: YES), the device A reads out the CRL (Step S211), and judges whether an ID number *ID_B* included in the received public key certificate *Cert_B* is included in the read-out CRL (Step S212) . If judging that the ID number *ID_B* is included in the CRL (Step S212: YES), the device *A* finishes the procedure. If the ID number *ID_B* is not included in the CRL (Step S212: NO), the device A continues the procedure.

The device B generates a random number *Cha_ B* (Step S213), and transmits the generated random number *Cha_ B* to the device A (Step S214).

The device A receives the random number *Cha_B,* and applies the signature generation algorithm S to the received random number *Cha_B,* using a private key *SK_A* of the device *A,* to generate signature data *Sig_A* (Step S215). Then, the device *A* transmits the generated signature data *Sig_A* to the device *B* (Step S216).

Upon receiving the signature data *Sig_A,* the device *B* applies the signature authentication algorithm *V* to the received signature data *Sig_A,* using the public key *PK_A* of the device *A,* which is included in the received public key certificate *Cert_A*, to authenticate the signature data *Sig_A* (Step S217). If judging that the authentication has been failed (Step S218 : NO), the device *B* finishes the procedure. If judging that the authentication has been succeeded (Step S218: YES), the device *B* continues the procedure.

The device *A* generates a random number *Cha_A* (Step S219), and transmits the generated random number CAa_A to the device *B* (Step S220).

The device *B* receives the random number *Cha_A,* and applies the signature generation algorithm *S* to the received random number *Cha_A,* using a private key *SK_B* of the device *B,* to generate signature data *Sig_B* (Step S221). Then, the device *B* transmits the generated signature data *Sig_B* to the device *A* (Step S222).

Upon receiving the signature data *Sig_B,* the device *A* applies the signature authentication algorithm V to the received signature data *Sig_B,* using the public key *PK_B* of the device *B,* which is included in the received public key certificate *Cert_B*, to authenticate the signature data *Sig_B* (Step S223). If judging that the authentication has been failed (Step S2224 : NO), the device A finishes the procedure. If judging that the authentication has been succeeded (Step S224: YES), the device *A* generates a random number "a" (Step S225), and generates a *Key_A* = *Gen (a, Y),* using the generated random number "a" (Step S226). Then, the device A transmits the generated *key_A* to the device *B* (Step S227).

Upon receiving the *Key_A,* the device *B* generates a random number *"b"* ( Step S228 ) , and generates a *Key_B=Gen (b, Y) ,* using the generated random number *"b"* (Step S229). Then, the device *B* transmits the generated *Key_B* to the device A (Step S230).

The device B generates *Key_AB=Gen (b, Key_A)=Gen (b, Gen (a, Y))* as the shared key, using the generated random number "b" and the received *Key_A* (Step S231).

The device A receives the *Key_B,* and generates *Key_AB=Gen(a, Key_B)=Gen (a, Gen (b, Y) )* as the shared key, using the generated random number "a" and the received *Key_B* (Step S232).

### (7) Example Performance of Password Change

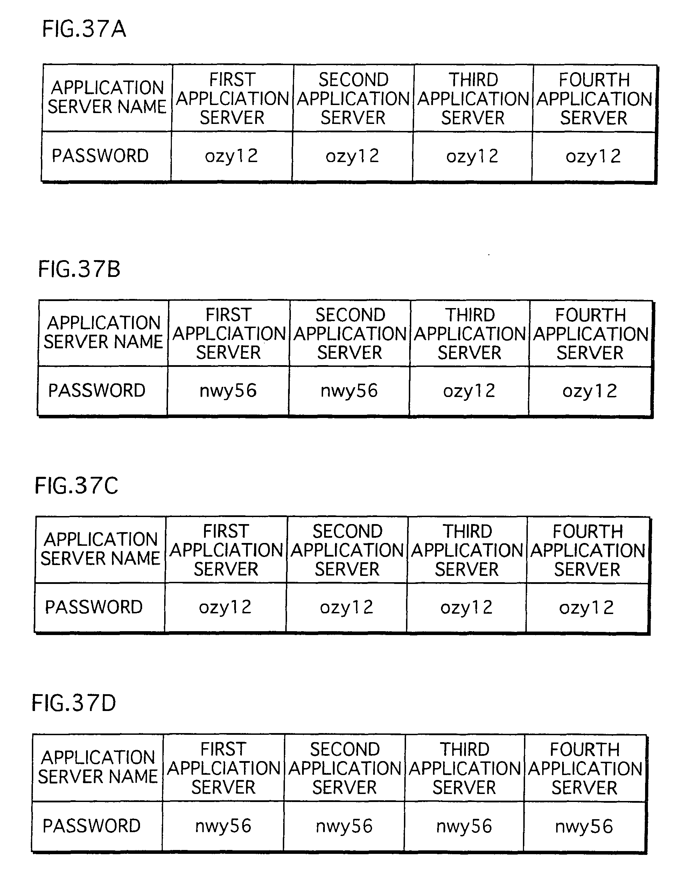

The following describes an example performance of the password change, with reference to FIG.37. Here, assume the case where a current password "ozy12" of a user having a user ID "maeda" is to be changed to a new password "nwy56". The current password and the new password are transmitted and received in safety between the user terminal 100 and the management server 600, and between the management server 600 and the application server 200, by the secret communication using the terminal shared key or the server shared key. However, in the following description, the explanations for the encryption and the decryption are omitted for the sake of simplification.

As FIG.37A shows, before the password change is performed, each application server 200 stores the password "ozy12" corresponding to the user ID "maeda".

Upon receiving the password change instruction from the user terminal 100, the management server 600 transmits the password change screen data for the terminal to the user terminal 100.

The user terminal 100 receives the password change screen data for the terminal, generates the password change screen 191 from the received password change screen data for the terminal, and displays the password change screen 191. The user terminal 100 receives the current password "ozy12" and the new password "nwy56" input by the user, and transmits the received current password "ozy12" and new password "nwy56" to the management server 600.

The management server 600 receives the current password "ozy12" and the new password "nwy56" from the user terminal 100. Then, the management server 600 transmits the received current password "ozy12" and the new password "nwy56" to the first application server 200a, and instructs the application server 200a to change the password.

The first application server 200a replaces the current password "ozy12" stored thereof by the new password "nwy56", and transmits the end signal "1".

Upon receiving the end signal "1" , indicating that the password change has been successfully finished, from the first application server 200a, the management server 600 transmits the current password "ozy12" and the new password "nwy56" to the second application server 200b in the same manner, instructs the second application server 200b to change the password, and receives the end signal "1". At this point of time, as FIG.37B shows, the first application server 200a and the second application server 200b store the new password "nwy56", and the third application server 200c and the fourth application server 200d stores the current password "ozy12".

Next, the management server 600 transmits the current password "ozy12" and the new password "nwy56" to the third application server 200c, and instructs the third application server 200c to change the password.

Here, assume that the third application server 200c fails to change the password, and transmits the end signal "0" to the management server 600.

Upon receiving the end signal "0" , indicating that the password change has been failed, from the third application server 200c, the management server 600 transmits the current password "ozy12" and the new password "nwy56" to the second application server 200b, instructs the second application server 200b to restore the password. Then, the management server 600 receives the end signal "1", indicating that the password restoration succeeds, from the second application server 200b. Next, the management server 600 instructs the first application server 200a to restore the password in the same manner, and receives the end signal "1" from the first application server 200a. Then, the management server 600 finishes the password restoration. At this point of time, as FIG. 37C shows, eachapplication server 200 stores the current password "ozy12".

FIG. 37D shows the passwords stored by the application servers in the case where the password change for the third application server 200c and the fourth application server 200d succeeds.

### 1.6 Summary

As described above, in the first embodiment of the present invention, the management server 600 receives the password change instruction from the user terminal 100. The management server 600 receives the current password and the new password from the user terminal 100 in safety by the secret communication using the terminal shared key.

Next, the management server 600 transmits the current password and the new password to the first application server 200a in safety by the secret communication using the server shared key, and instructs the application server 200a to change the password. If the password change for the first application server 200a succeeds, the management server 600 instructs the second application server 200b to the fourth application server 200d, in this order, to change the password in the same manner.

If the password change for any of the first application server 200a to the fourth application server 200d fails, the management server 600 transmits the current password and the new password to the application server that has already finishes the password change, and instructs the application server to restore the password.

In this way, the first embodiment of the present invention can maintain the consistency among the passwords of a plurality of the application servers, even if the password change for any of the application servers fails.

### 2. The Second Embodiment

The following describes a password changing system according to the second embodiment of the present invention.

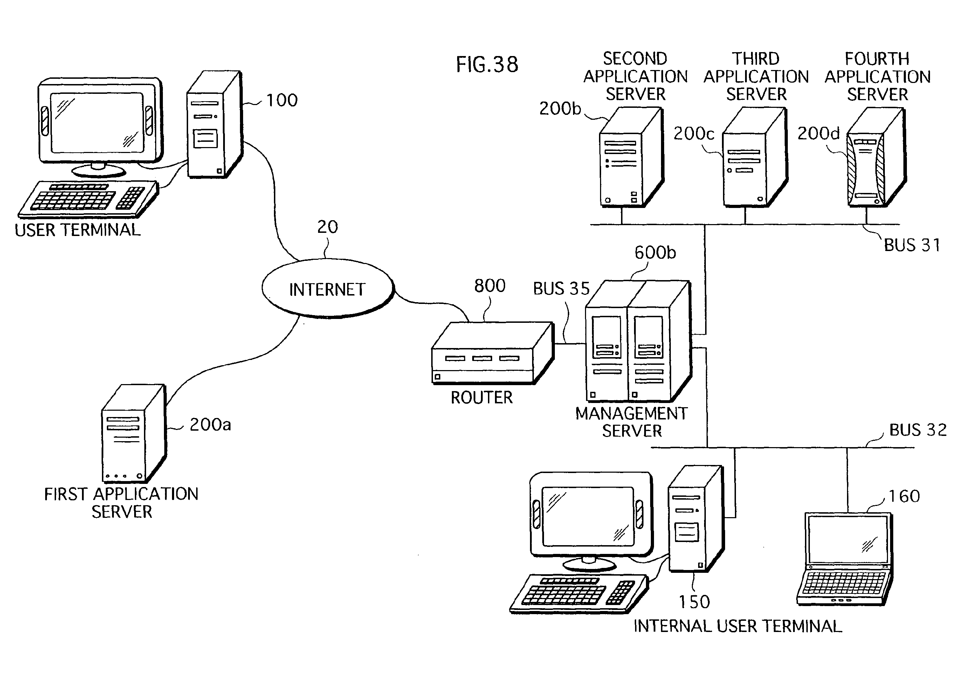

As FIG.38 shows, the password changing system according to the second embodiment includes a user terminal 100, an internal user terminals 150, 160 and so on, a first application server 200a, a second application server 200b, a third application server 200c, a fourth application server 200d, a management server 600d, and a router 800.

The second application server 200b to the fourth application server 200d and the management server 600b are connected to the bus 31 so as to form a bus LAN. The internal user terminals 150, 160, and so on, and the management server 600 are connected to the bus 32 so as to form a bus LAN. Each of the buses 31 and 32 is, more specifically, a coaxial cable having terminators at both ends.

The management server 600b is further connected to the Internet via the router 800 having a firewall function.

The management server 600b, the second application server 200b to the fourth application server 200d, and the internal user terminals 150, 160 and so on constitute a LAN in one building, for instance.

The user terminal 100 and the first application server 200a are connected to the Internet 20.

In the same manner as the first embodiment, each of the management server 600b and the first application server 200a to the fourth application server 200d prestores the user ID of the authenticated user and the password in association with each other.

The first application server 200a to the fourth application server 200d provide a travel expenses settlement service, a vacation request service, a conference room reservation service, and an employee purchase service respectively.

The user uses these services using the user terminal 100 via the Internet 20 and the management server 600b. The user can use the services from the internal user terminals 150, 160 and so on via the bus 31 and the bus 32 as well.

The user terminal 100 or the internal user terminals 150, 160 and so on transmits the user ID and the password of the user to the management server 600b.

Each of the management server 600b and the first application server 200a to the fourth application server 200d authenticates the user ID and the password, which are transmitted from the user terminal 100 or the internal user terminals 150, 160 and so on, to confirm that the user of the user terminal 100 or the internal user terminals 150, 160 and so on is the authenticated user. Then, each application server provides its own service.

The management server 600b receives the current password, the new password, and the instruction to change the password from the user terminal 100 or the internal user terminals 150, 160 and so on. The management server 600b sequentially transmits the received new password to the first application server 200a to the fourth application server 200d, and instructs the first application server 200a to the fourth application server 200d to perform the password change.

Here, if any of the first application server 200a to the fourth application server 200d fails to change the password, the management server 600b transmits the current password to the application server which has already changed the password to the new password, and instructs the application server to change the password to the current password.

The specific structures and the operations of the user terminal 100 and the internal user terminal 150, 160 and so on are the same as the user terminal 100 in the first embodiment. Therefore, they are not explained here.

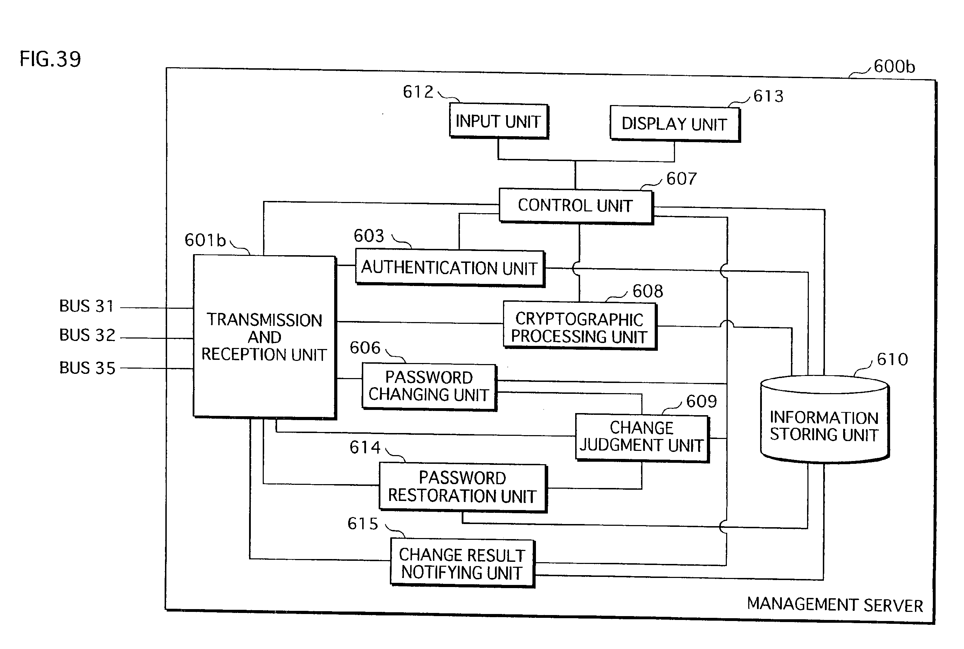

As FIG.39 shows, the management server 600b includes a transmission and reception unit 601b, an authentication unit 603, a password changing unit 606, a control unit 607, a cryptographic processing unit 608, a password restoring unit 614, a change judging unit 609, a change result notifying unit 615, an information storing unit 610, an input unit 612, and a display unit 613.

The transmission and reception unit 601b is connected to the bus 31, the bus 32, and a bus 35. The transmission and reception unit 601b performs the transmission and the reception of information between each of the second application server 200b to the fourth application server 200d and each unit included in the management server 600b via the bus 31, and performs the transmission and the reception of information between each of the internal user terminals 150, 160 and so on and each unit included in the management server 600b via the bus 32. The transmission and the reception unit also performs the transmission and the reception of information between the user terminal 100, the first application server 200a and each unit included in the management server 600b via the bus 35, the router 20, and the Internet 20.

To perform the transmission and the reception of information to and from the second application server 200b to the fourth application server 200d, the transmission and reception unit 601b selects the bus 31, and to perform the transmission and the reception of information to and from the internal user terminals 150, 160 and so on, the transmission and reception unit 601b selects the bus 32. To perform the transmission and the reception of information to and from the user terminal 100 and the first application server 200a, the transmission and reception unit 601b selects the bus 35.

Other specific operations by the transmission and reception unit 601b are the same as those of the transmission and reception unit 601 in the first embodiment.

Also, the specific operations by the authentication unit 603, the password changing unit 606, the control unit 607, the cryptographic processing unit 608, the password restoring unit 614, the change judging unit 609, the change result notifying unit 615, the input unit 612 and the display unit 613 and the structure of the information storing unit 610 are the same as those in the first embodiment explained with reference to FIG.13.

The router 800 has the firewall function, and allows or denies several kinds of information which are transmitted from external devices connected to the Internet 20 and addressed to each device within the LAN, to pass through the router 800. More specifically, the router judges whether IP addresses and port numbers included in the packets received via the Internet satisfy predetermined conditions. If they satisfy the conditions, the router 800 allows the packets to pass through, and if they do not satisfy the conditions, the router 800 deletes the packet. Such a method is generally called a packet filtering. The above-described firewall function is only an example, ant other methods may be used.

As described above, the second embodiment can use the firewall function of the router 800 to protect the management server 600a and the devices connected to the LAN against attacks from unauthenticated external devices connected to the Internet 20.

### 3. The Third Embodiment

The following describes a password changing system according to the third embodiment of the present invention.

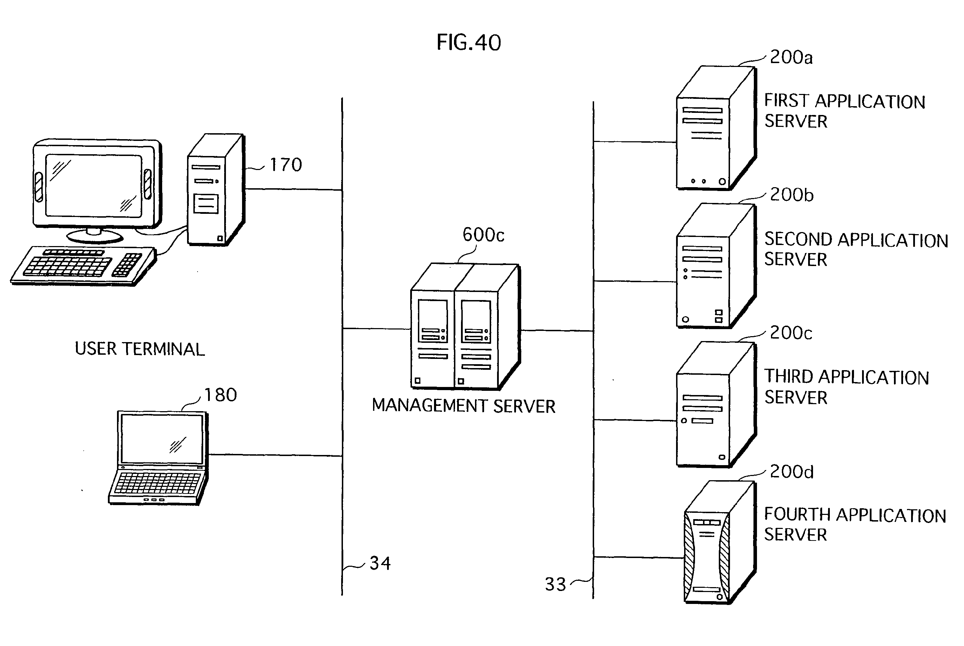

As FIG.40 shows, the password changing system according to the second embodiment includes a user terminals 170, 180 and so on, a first application server 200a, a second application server 200b, a third application server 200c, a fourth application server 200d, and a management server 600c.

The first application server 200a to the fourth application server 200d and the management server 600c are connected to the bus 33 so as to form a bus LAN. The user terminals 170, 180 and so on and the management server 600c are connected to the bus 34 so as to form a bus LAN. Each of the buses 33 and 34 is, more specifically, a coaxial cable having terminators at both ends.

The management server 600c, the first application server 200a to the fourth application server 200d, and the user terminals 170, 180 and so on constitute a LAN in one building, for instance.

The first application server 200a to the fourth application server 200d provide a travel expenses settlement service, a vacation request service, a conference room reservation service, and an employee purchase service respectively.

The user uses any of the user terminals 170, 180 and so on, to use the service provided by the first application server 200a to the fourth application server 200d via the management server 600.

The user terminal 170 transmits the user ID and the password of the user to the management server 600c.

The management server 600c and the first application server 200a to the fourth application server 200d respectively authenticate the user ID and the password to confirm that the user of the user terminal 170 is the authenticated user. Then, each application server provides its own service.

The management server 600c receives the instruction to change the password from the user terminal 170, and receives the current password and the new password from the user terminal 100. The management server 600c sequentially transmits the received new password to the first application server 200a to the fourth application server 200d, and instructs the first application server 200a to the fourth application server 200d to change the password.

Here, if any of the first application server 200a to the fourth application server 200d fails to change the password, the management server 600c transmits the current password to the application server which has already changed the password to the new password, and instructs the application server to change the password to the current password.

The specific structures and the operations of the first application server 200a to the fourth application server 200d are the same as the first application server 200a to the fourth application server 200d in the first embodiment. Therefore, they are not explained here.

The specific structures and the operations of the user terminals 170, 180 and so on are the same as the user terminal 100 in the first embodiment. Therefore, they are not explained here.

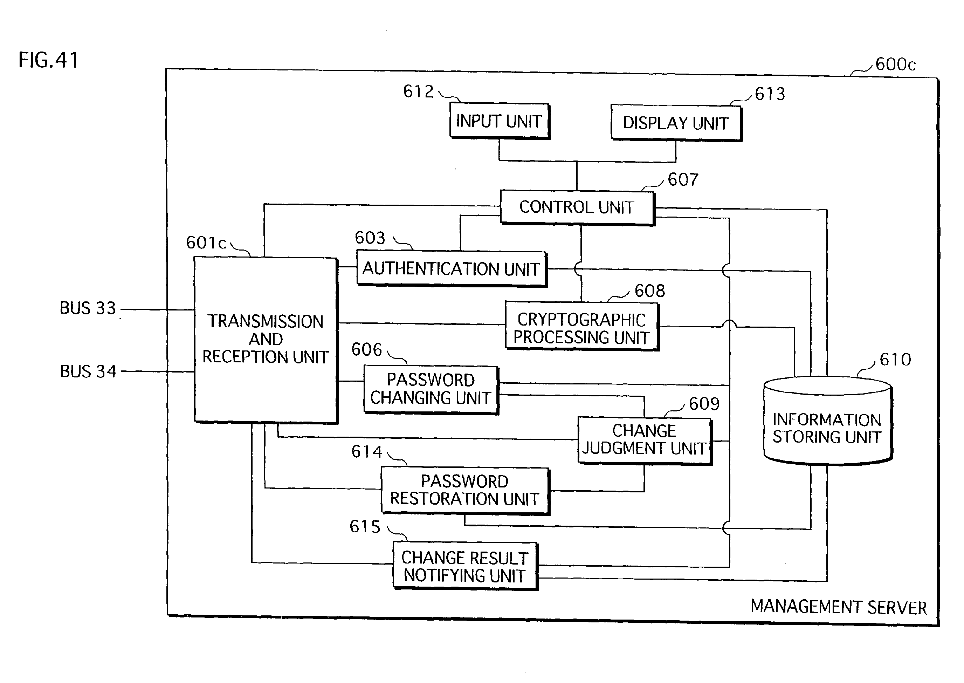

As FIG.41 shows, the management server 600c includes a transmission and reception unit 601c, an authentication unit 603, a password changing unit 606, a control unit 607, a cryptographic processing unit 608, a password restoring unit 614, a change judging unit 609, a change result notifying unit 615, an information storing unit 610, an input unit 612, and a display unit 613.

The transmission and reception unit 601c performs the transmission and the reception of information between the first application server 200a to the fourth application server 200d and each unit included in the management server 600c via the bus 33. The transmission and reception unit 601c performs the transmission and the reception of information between the user terminals 170, 180 and so on and each unit included in the management server 600c.

To perform the transmission and the reception of information to and from the second application server 200b to the fourth application server 200d, the transmission and reception unit 601c selects the bus 33, and to perform the transmission and the reception of information to and from the internal user terminals 170, 180 and so on, the transmission and reception unit 601c selects the bus 34.

Other specific operations by the transmission and reception unit 601c are the same as those of the transmission and reception unit 601 in the first embodiment.

Also, the specific operations by the authentication unit 603, the password changing unit 606, the control unit 607, the cryptographic processing unit 608, the password restoring unit 614, the change judging unit 609, the change result notifying unit 615, the input unit 612 and the display unit 613 and the structure of the information storing unit 610 are the same as those of the management server 600 in the first embodiment. Therefore, they are not explained here.

In the third embodiment, the application server 200 is connected to the user terminals 170 and 180 via the management server 600c. The several kinds of information transmitted and received when the user uses the service provided by the application server 200 from the user terminals 170 and 180 necessarily passes through the management server 600c. Therefore, itbecomes easy for the management server 600c to detect an unauthorized use of the services by a malicious user.

If the location where above-described services are provided and the above-described communication relating to the password change are performed is only within the closed LAN or the LAN protected by the firewall just as the third embodiment, the two-way authentication performed by the authentication unit 60e can be omitted. Accordingly, the provision of the services and the communication relating to the password change can be performed quickly.

### 4. Modifications

### (1) Start of Password Change instructed by Management Server

In the above-described embodiments, the password change is started by the management server 600 by receiving the password change request from the user terminal or the internal user terminal. However, the management server 600 may request the user to change the password.

More specifically, the management server 600 prestores the maximum period of the validity of the password. The management server 600 also prestores the IP address of the user terminal that is mainly used by the user, in association with the user ID of the user. The management server 600 stores a password table 621b, instead of the password table 621.

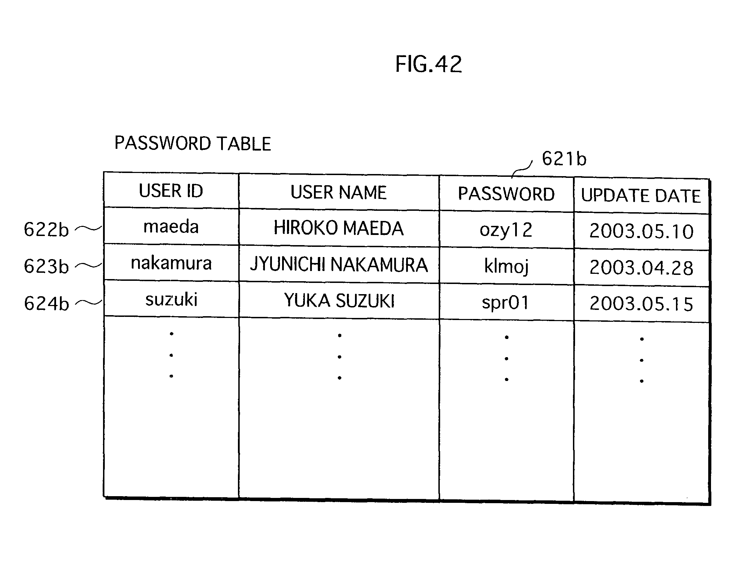

As FIG.42 shows, the password table 621b includes pieces of password information 622b, 623b, 624b, and so on. Each piece of the password information includes a user ID, a user name, a password and an update date. The user ID, the user name and the password are the same as the user ID, the user name and the password included in the password table 621 of the above-described embodiments. Therefore, they are not described here. The update date represents the last date when the password included in the piece of the password information is updated. For instance, the password included in the piece of the password information 622b was changed to "ozy12" on May 10, 2000.

The management server 600 periodically checks the update data included in each piece of the password information, and request the user who has not changed the password for more than the maximum period of the validity of the password to change the password by transmitting a message to the prestored user terminal to notify the user that the maximum period has been passed.

### (2) Forcible Password Change

In the above-described (1) , the management server 600 may force the user to change the password if the user, who has not changed the password when the maximum period of the validity of the password is passed, tries to use the services.

More specifically, in the above-described first to third embodiments, upon receiving the user ID and the encrypted password from the user terminal, the management server 600 may firstly select the piece of the password information 622b, which includes the received user ID, from the password table 621b. Then, the management server 600 reads out the update date included in the selected piece of the password information 622b. The management server 600 calculates an expire date "2000 . 6.9" by adding the maximum period of the validity (e.g. 30 days) to the read-out update date, and compares the expire date with the current date. If judging that the current date is later than the expire date, the management server 600 may transmit the password change screen data for the terminal to the user terminal, and force the user to change the password so that otherwise the user can not use the services.

### (3) Inquiry to Application Server 200

In the above-described first to third embodiments, the management server 600 transmits the user ID, the encrypted current password, the encrypted new password, and the password change instruction to the application server 200 at the same time. However, the management server 600 may previously send an inquiry to each application server 200 as to whether the password change is possible, and instruct each application server 200 only if all the application servers can perform the password change.

More specifically, the management server 600 transmits the user ID, the encrypted current password, and the new password and an inquiry as to whether the password change is possible, to the first application server 200a.

Upon receiving the user ID, the encrypted current password, the encrypted new password and the inquiry as to whether the password change is possible from the management server 600, the first application server 200a generates a response signal indicating whether the password change is possible. The application server 200a generates a response signal "1" if the password change is possible, and generates a response signal "0" if the password change is impossible due to a hard disk failure. Then, the application server 200a transmits the generated response signal to the management server 600.

The management server 600 receives the response signal from the application server 200a. If the response signal is "1", the management server 600 transmits the user ID, the encrypted current password, the encrypted new password, and the inquiry to the second application server 200b in the same manner. Then, if the response signal received from the second application server 200b is "1" as well, the management server 600 transmits the same inquiry to the next application server 200.

If receiving the response signal "1" from all the application servers, the management server 600 instructs all the application servers to change the password.

Each application server 200 receives the password change instruction from the management server 600, and decrypts the previously received encrypted current password and encrypted new password to generate the current password and the new password . Each application server 200 selects the piece of the password information including the received user ID and the generated current password, and replaces the password included in the selected piece of the password information with the generated new password.

Next, the management server 600 transmits the change completion screen data for the terminal to the user terminal to notify the user that the password change has finished successfully.

If receiving the response signal "0" from any of the application servers during the inquiry, the management server 600 judges that the password change for the relevant application server 200 is impossible, and notifies all the application servers, to which the inquiry has been already sent, of the cancellation of the password change.

Next, the management server 600 transmits the change failure screen data for the terminal to the user terminal to notify the user that the password change has failed.

### (4) Judgement based on Time Out

In the above-described (3), when transmitting the inquiry as to whether the password change is possible to each application server 200, time from the transmission of the inquiry may be counted. If not receiving the response signal from the application server within a predetermined maximum waiting time, the management server 600 may judge that the password change for the application server is impossible.

### (5) Connection using Dedicated Line

In the third embodiment, the password changing system may include a dedicated line for the password change.

More specifically, the management server 600 and each application server 200 may be directly connected by a dedicated line. For providing the normal services, the management server 600 and each application server 200 transmit and receive information via the bus 33 and the bus 34.

### (6) Processing Status of Application Server 200

In the above-described first to third embodiments, the management server 600 may store the processing status of each application server 200, and cancel the password change based on the processing status.

More specifically, the management server 600 may store a routing table 641b instead of the routing table 641.

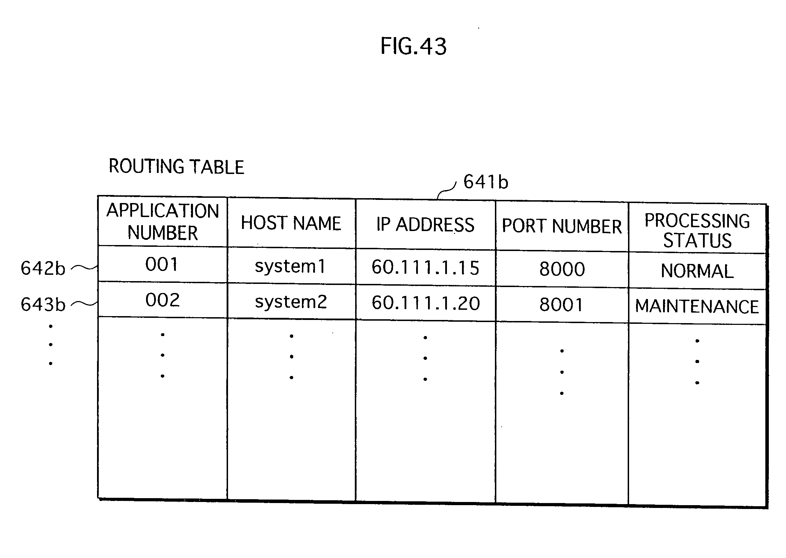

As FIG.43 shows, the routing table 641b includes pieces of route information 642b, 643b and so on. Each piece of the route information includes an application number, a host name, an IP address, a port number, and a processing status. The application number, the host name, the IP address, and the port number are respectively the same as the application number, the host name, the IP address, and the port number included in the above-described routing table 641. Therefore, they are not explained here. The processing status represents the processing status of the application server 200 indicated by the application number.

A processing status "normal" represents that the application server 200 indicated by the application number is performing the normal service. A processing status "maintenance" represents that the application server indicated by the application number is being maintained. If the processing status is "maintenance", the management server 600 judges that the password change for the relevant application server is impossible.

The management server 600 periodically transmits a monitor signal to each application server 200.

Each application server 200 receives the monitor signal. If its own processing status is "normal", the application server 200 returns a response signal "normal". If its own processing status is "maintenance" , the application server 200 returns a response signal "maintenance".

The management server 600 receives the response signal from each application server 200, and replaces the processing status of each application server included in the stored routing table 641b, based on the received response signal.

Upon receiving the password change request from the user terminal or the internal user terminal, the management server 600 checks the processing statuses in the routing table 641b. If judging that all the processing statuses of the application serves are "normal" , the management server 600 starts the above-described password change.

If there is any application server 200 whose processing status is not "normal", the management server 600 notifies the user terminal that the password change is currently unacceptable.

Each application server 200 may spontaneously notify the management server 600 of the processing status of itself, regardless of the monitor signal from the management server 600.

### (7) Storage of Current Password by Application Server

In the above-described first to third embodiments, the management server 600 stores the current password and the new password using the password change table 651. However, each application server 200 may store the current password and the new password.

If this is the case, the management server 600 transmits the user ID, the encrypted current password, and the encrypted newpassword to the first application server 200a to the fourth application server 200d in this order, and instructs the first application server 200a to the fourth application server 200d to change the password.

Each application server 200 receives the user ID, the encrypted current password and the encrypted new password, decrypts the received encrypted current password and encrypted new password, selects the piece of the password information including the user ID and the current password, and replaces the password included in the selected piece of the password information with the new password. If the replacement finishes successfully, the application server 200 transmits the end signal "1" to the management server. Then, the application server 200 stores the current password in association with the piece of the password information whose password has been replaced.

The management server 600 receives the end signal from the application server 200. If the received end signal is "1", the management server 600 transmits the user ID, the encrypted current password, and the encrypted new password to the next application server 200.

If the received end signal is "0", or if the management server 600 does not receive the end signal within a predetermined period, the management server 600 judges that the password change has failed, and transmits the password restoration instruction to the application server 200 from which the end signal "1" has been transmitted.

The application server 200 which receives the password restoration instruction replaces the replaced password in the piece of the password information with the stored current password.

### (8) Change to Initial Password

In the above-described first to third embodiments, if the user forgets the password, the management server 600 may replace the password with an initial password.

The initial password is a password initially assigned to the user by the system administrator of the password changing system, and it is notified to the user by e-mail, letter or the like. For instance, a simple character string, such as "0000", or a character string that is same as the user ID can be used as the initial password.

More specifically, the management server 600 may prestore initial passwords for the users.

The login screen 151 may further include a password loss button. If forgetting the password, the user presses the password loss button.

Upon detecting that the password loss button is pressed, the user terminal notifies the management server 600 of the password loss.

Receiving the notification of the password loss from the user terminal, the management server 600 starts the password change as described above. Here, the management server 600 transmits the initial password, instead of the new password input by the user, to each application server 200, and instructs the application server 200 to change the password.

I f the password change for all the application servers succeeds, the management server 600 notifies the user terminal that the password has been replaced by the initial password.

### Industrial Applicability

The devices and the system of the present invention described above are repeatedly and continuously usable in industries which provide several kinds of services to users via a network. The devices and the system, the computer program, and the recording medium of the present invention described above are repeatedly and continuously manufacturable and sellable in the electric device production industries.

## Claims

1. A management server device that instructs each of a plurality of application devices, which stores a same password therein, to update the password, each application device providing a service to a user who is authenticated using the password, the management server device comprising:
a first unit operable to have all the application devices attempt to update the password;
a second unit operable to judge whether each application device is capable of updating the password based on a result of the attempt by the application device; and
a third unit operable, if at least one of the application devices is not capable of updating the password, to have all the application devices keep the password non-updated.

2. The management server device of Claim 1, further comprising:
a fourth unit operable to receive a password update request from a user device, wherein
the first unit has all the application devices attempt to update the password based on the password update request.

3. The management server device of Claim 2, wherein
the first unit instructs all the application devices to update the password,
the second unit judges whether the password has been successfully updated by each application device, and
the third unit instructs, if any of the application devices has failed to update the password, the other application devices, which have successfully updated the password, to restore the password.

4. The management server device of Claim 3, wherein
the fourth unit receives the password update request that includes the password and a new password, and
the first unit generates a password update instruction that includes the password and the new password, and transmits the password update instruction to each application device.

5. The management server device of Claim 3, wherein
the second unit includes:
a response receiving subunit operable to receive a response that indicates an update success or an update failure from each application device; and
a determining subunit operable to determine, if the response indicates the update success, that the application device, from which the judging subunit receives the response, has successfully updated the password, and to determine, if the response indicates the update failure, that the application device has failed to update the password.

6. The management server device of Claim 3, wherein
the second unit includes:
a timer subunit operable to count elapsed time;
an initializing subunit operable to reset the counted elapsed time to an initial value when the first unit transmits the password update instruction;
a waiting subunit operable to wait for the response to be transmitted from each application device, and receive the response if the response is transmitted;
a judging subunit operable to judge whether the counted elapsed time is more than a predetermined threshold value; and
a determining subunit operable, in the case where the counted elapsed time is equal to or smaller than the threshold value and the waiting subunit has received the response that indicates the update success, to determine that the application device, from which the waiting subunit has received the response, has successfully updated the password, and operable, in the other cases, to determine that the application device has failed to update the password.

7. The management server device of Claim 2, wherein
the first unit instructs all the application devices to prepare to update the password,
the second unit judges whether each application device has already prepared to update the password, and
the third unit cancels, if at least one of the application devices has not prepared to update the password yet, the instruction to prepare to update the password for the other application devices which have already prepared to update the password.

8. The management server device of Claim 7, wherein
the fourth unit receives the password update request that includes the password and a new password, and
the first unit generates a password update preparing instruction that includes the password and the new password, and transmits the password update preparing instruction to each application device.

9. The management server device of Claim 7, wherein
the second unit includes:
a response receiving subunit operable to receive a response that indicates an update preparation completion or an update preparation incompletion from each application device; and
a determining subunit operable to determine, if the response indicates the update preparation completion, that the application device, from which the judging subunit receives the response, has already prepared to update the password, and to determine, if the response indicates the update preparation incompletion, that the application device has not prepared yet to update the password.

10. The management server device of Claim 7, wherein
the second unit includes:
a timer subunit operable to count elapsed time;
an initializing subunit operable to reset the counted elapsed time to an initial value when the first unit transmits the password update preparing instruction;
a waiting subunit operable to wait for the response to be transmitted from each application device, and receive the response if the response is transmitted;
a judging subunit operable to judge whether the counted elapsed time is more than a predetermined threshold value; and
a determining subunit operable, in the case where the counted elapsed time is equal to or smaller than the threshold value and the waiting subunit has received the response that indicates the update preparation completion, to determine that the application device, from which the waiting subunit has received the response, has already prepared to updated the password, and operable, in the other cases, to determine that the application device has not prepared yet to update the password.

11. The management server device of Claim 2, further comprising
a message transmitting unit operable to transmit a message, indicating that the password should be restored, to the user device, if the second unit judges in the negative concerning any of the application devices.

12. The management server device of Claim 2, further comprising
a management storing unit operable to store information as to whether each application device is currently being maintained, wherein
the first unit has all the application devices update the password if no application device is currently being maintained.

13. The management server device of Claim 12, wherein
the first unit stops updating the password if any of the application devices is currently being maintained, and
the management server device further comprises
a message transmitting unit operable to transmit a message, indicating that the update of the password should be stopped, to the user device.

14. The management server device of Claim 2, wherein
the application devices are connected to the management server device via a first network, and
the user device is connected to the management server device via a second network that is not connected to the first network.

15. The management server device of Claim 14, wherein
the first network and the second network constitute an intranet .

16. The management server device of Claim 14, wherein
the management server device is connected to the application devices via dedicated lines respectively,
the management server device transmits and receives information, which is used for updating the password, to and from the application devices via the dedicated lines, and
information used for providing the services is received and transmitted via the first network and the second network.

17. The management server device of Claim 2, wherein
the application devices and the user device are connected to the management server device via a network, and
the management server device further comprises:
a storing unit operable to store an association table in which types of the applications and positions of the application devices on the network are associated to each other on a one-to-one basis;
a receiving unit operable to receive type information indicating an application type and procedure information indicating details of a procedure;
an obtaining unit operable, using the association table, to obtain a position of an application device corresponding to the received type information; and
a transmitting unit operable to transmit the procedure information to the application device whose position is obtained by the obtaining unit.

18. The management server device of Claim 16, wherein
the network is the Internet.

19. The management server device of Claim 1, wherein
a new password updated from the password is an initial password assigned to the user,
the first unit has all the application devices attempt to update the password to the initial password;
the second unit judges whether each application device is capable of updating the password to the initial password; and
if at least one of the application devices is not capable of updating the password to the initial password, the third unit has all the application devices keep the password non-updated.

20. An application device that provides a service to a user who is authenticated using a password, and updates the password based on an instruction from a management server device, the application device comprising:
an old password storing unit operable to store the password that is not updated;
an authentication password storing unit operable to store an authentication password used for authenticating the user;
a receiving unit operable to receive a restoration instruction for restoring the password from the management server device; and
a writing unit operable to read out the password from the old password storing unit, and overwrite the authentication password with the read-out password.

21. The application device of Claim 20, wherein
the application device receives and transmits information relating to the service from and to a user device via the management server device.

22. The application device of Claim 21, wherein
if currently being maintained, the application device notifies the management server device that the application device is currently being maintained.

23. The application device of Claim 21, wherein
the application device is connected to the management server device via a first network, and
the user device is connected to the management server device via a second network that is not connected to the first network.

24. The application device of Claim 23, wherein
the application device is connected to the management server device via a dedicated line,
the application device transmits and receives information, which is used for updating the password, to and from the management server device via the dedicated line, and
the application device relays information used for providing the service between the user terminal and the management server device via the first network and the second network.

25. The application device of Claim 21, wherein
the application device and the user device are connected to the management server device via the Internet.

26. A password changing system that includes a user device, a plurality of application devices each storing a password and providing a service to a user who is authenticated using the password, and a management server device instructing each of the application devices to update the password, wherein
the management server device comprises:
a first unit operable to have all the application devices attempt to update the password;
a second unit operable to judge whether each application device is capable of updating the password based on a result of the attempt by the application device; and
a third unit operable, if at least one of the application devices is not capable of updating the password, to have all the application devices to keep the password non-updated, and
each application device comprises:
an old password storing unit operable to store the password that is not updated;
an authentication password storing unit operable to store an authentication password used for authenticating the user;
a receiving unit operable to receive a restoration instruction for restoring the password, which is not updated, from the management server device; and
a writing unit operable to read out the password, which is not updated, from the old password storing unit, and overwrite the authentication password with the read-out password.

27. The password changing system of Claim 26, wherein
each application device receives and transmits information relating to the service from and to the user device via the management server device.

28. The password changing system of Claim 27, wherein
the application device is connected to the management server device via a first network, and
the user device is connected to the management server device via a second network that is not connected to the first network.

29. The password changing system of Claim 28, wherein
the first network and the second network constitute an intranet.

30. The password changing system of Claim 28, wherein
the management server device is connected to the application devices via dedicated lines respectively,
the management server device transmits and receives information, which is used for updating the password, to and from the application devices via the dedicated lines, and
information used for providing the services is received and transmitted via the first network and the second network.

31. The password changing system of Claim 27, wherein
the application devices and the user device are connected to the management server device via a network, and
the management server device further comprises:
a storing unit operable to store an association table in which types of the applications and positions of the application devices on the network are associated to each other on a one-to-one basis;
a receiving unit operable to receive type information indicating an application type and procedure information indicating details of a procedure;
an obtaining unit operable, using the association table, to obtain a position of an application device corresponding to the received type information; and
a transmitting unit operable to transmit the procedure information to the application device whose position is obtained by the obtaining unit.

32. The password changing system of Claim 31, wherein the network is the Internet.

33. A management server control method for a management server device that instructs each of a plurality of application devices, which stores a same password therein, to update the password, each application device providing a service to a user who is authenticated using the password, the management server control method comprising:
a first step of having all the application devices attempt to update the password;
a second step of judging whether each application device is capable of updating the password based on a result of the attempt by the application device; and
a third step of having all the application devices keep the password non-updated if at least one of the application devices is not capable of updating the password.

34. A management server control program for a management server device that instructs each of a plurality of application devices, which stores a same password therein, to update the password, each application device providing a service to a user who is authenticated using the password, the management server control method comprising:
a first step of having all the application devices attempt to update the password;
a second step of judging whether each application device is capable of updating the password based on a result of the attempt by the application device; and
a third step of having all the application devices keep the password non-updated if at least one of the application devices is not capable of updating the password.

35. The management server control program of Claim 34, wherein
the management server control program is recorded on a computer-readable program recording medium.
